# EUROPÄISCHE PATENTSCHRIFT

(11) **EP 3 370 960 B1**
(45) Veröffentlichungstag und Bekanntmachung des Hinweises auf die Patenterteilung: **19.02.2020**
(21) Anmeldenummer: 16790999.3
(22) Anmeldetag: 03.11.2016
(51) Int. Cl.: B32B 37/22, B65H 19/00, B65H 19/18, B32B 37/00, B32B 41/00, B32B 33/00, B42D 25/29, B26F 3/02, B65H 23/00

(54) **LAMINIERUNGSMASCHINE UND EIN VERFAHREN ZUM LAMINIEREN ZUMINDEST EINES MATERIALS**
LAMINATION MACHINE AND A METHOD FOR LAMINATING AT LEAST ONE MATERIAL
MACHINE DE STRATIFICATION ET PROCÉDÉ POUR STRATIFIER AU MOINS UN MATÉRIAU

(30) Priorität: 04.11.2015 DE 102015221663
(43) Veröffentlichungstag der Anmeldung: 12.09.2018
(73) Patentinhaber: Koenig & Bauer AG, 97080 Würzburg (DE)
(72) Erfinder: GYGI, Matthias, 3185 Schmitten (CH); KRIEGE, Björn, 97209 Veitshöchheim (DE); LIEBLER, Manfred, 97837 Erlenbach (DE)
(74) Vertreter: Koenig & Bauer AG
(86) Internationale Anmeldenummer: PCT/EP2016/076512
(87) Internationale Veröffentlichungsnummer: WO 2017/076949

(56) Entgegenhaltungen:
- WO-A1-2004/096541
- WO-A1-2015/055848
- WO-A1-2015/147262
- JP-A- H09 109 359
- US-A- 3 610 547
- US-A- 3 794 228
- US-A- 5 470 429

## Beschreibung

Die Erfindung betrifft eine Laminierungsmaschine und ein Verfahren zum Laminieren zumindest eines Materials.

Durch die WO 2015/147262 A1 ist eine Vorrichtung bekannt, bei der einzelne Bogen geschuppt angeordnet und gemeinsam mit einer zusätzlichen Schicht versehen werden.

Durch die DE 697 33 501 T2 ist eine Vorrichtung bekannt, mittels der eine Materialbahn an perforierten Stellen in Abschnitte getrennt wird. Dabei werden Stangen linear oder durch Schwenkbewegungen in einer Ebene bewegt, deren Flächennormale der Transportrichtung der Materialbahn entspricht. Die Stangen bewegen sich also ausschließlich orthogonal zu der Materialbahn.

Die DE 692 03 913 T2 zeigt eine Trennvorrichtung zum Trennen von perforiertem Papier, wobei das Papier durch Reibung auf einer Mantelfläche einer Walze gehalten wird.

Die DE 20 2005 021 655 U1 und die DE 197 31 364 A1 zeigen jeweils eine Schneideinrichtung zum Schneiden von Papierbahnen.

Die DE 10 2009 058 334 A1 zeigt eine Laminierungsmaschine mit Trennvorrichtung.

Durch die WO 2008/061379 A1 ist eine Laminiermaschine offenbart, die modular aufgebaut ist und eine Laminierungsquelle für Laminierungsstoff aufweist.

Durch die US 6 536 497 B2 ist eine Laminierungsmaschine offenbart, mittels der Bogen zweiseitig laminiert werden können. Für jede Seite ist eine Rolle von Laminierungsstoff angeordnet.

Durch die EP 1 764 329 A2 ist eine Bearbeitungsmaschine offenbart, bei der Bedruckstoff von einer Rolle abgespult und in Bogen geschnitten und danach bearbeitet, beispielsweise laminiert wird. Zum Abspulen des Bedruckstoffs kann ein Rollenwechsler angeordnet werden.

Durch die DE 103 56 028 A1 ist ein Rollenwechsler einer Druckmaschine offenbart.

Durch die EP 0 235 790 B1 ist eine Vorrichtung zum Laminieren von Papierbahnen bekannt. Diese weist einen einfachen Rollenabspuler mit Bahnspannungsregelung für den Laminierungsstoff auf.

Durch die DE 10 2012 112 000 A1 ist eine Laminiervorrichtung zum laminieren von Hohlkörpern mittels Laminierungsstoff bekannt. Dabei wird mittels einer Vielzahl von Sensoren unter anderem eine Bahnspannung geregelt. Für die Kante ist eine Steuerung vorgesehen, wobei die Kante überwacht wird.

Durch die EP 0 165 824 B1 ist eine Laminierungsvorrichtung zum Laminieren einer Bahn bekannt, bei der eine mittels einer Tänzerwalze eine Bahnspannung des Laminierungsstoffs eingestellt wird.

Durch die DE 10 2010 037 592 A1 ist eine Laminierungsmaschine mit Bogenanleger bekannt. Es ist offenbart, die Bogen entweder zu vereinzeln oder geschuppt anzuordnen. Abhängig davon wird dann eine entsprechende Materialbahn erzeugt.

Durch die EP 2 383 117 A1 ist eine Laminierungsmaschine mit Bogenanleger bekannt. Es ist offenbart, die Bogen entweder Stoß an Stoß oder geschuppt anzuordnen. Abhängig davon wird dann eine entsprechende Materialbahn erzeugt.

Durch die EP 0 586 642 B1 ist eine Laminierungsmaschine mit Bogenanleger bekannt. Es ist offenbart, die Bogen entweder zu vereinzeln oder Stoß an Stoß oder geschuppt anzuordnen. Abhängig davon wird dann eine entsprechende Materialbahn erzeugt.

Durch die WO 01/87599 A1 ist jeweils eine Laminierungsmaschine zum Laminieren von bogenförmigem Material bekannt. Es ist offenbart, aus einzelnen Bogen mittels eines bahnförmigen Laminierungsstoffs eine laminierte Materialbahn zu erstellen, die dann durch über ihre gesamte Breite erstreckte Abtrennung einzelne Bogen erzeugt.

Durch die DE 199 83 168 T1 ist eine Vorrichtung bekannt, mittels der ein bahnförmiges Material mit geformten Stücken eines Laminierungsstoffs versehen wird. Dabei werden kontinuierlich Formen aus einem bahnförmigen Laminierungsstoff ausgestanzt und der entstehende Abfall abgeführt. Die ausgestanzten Formen werden dann auf das bahnförmige Material aufgebracht.

Durch die WO 2004/096541 A1 ist eine Vorrichtung bekannt, mittels der Abschnitte einer Folie abgeschnitten und auf Bogen laminiert werden. Es ist weder ein Rollenwechsler bekannt, noch eine zweite Laminierungsquelle für Laminierungsstoff.

Durch die WO 2015/055848 A1 ist ein Verfahren bekannt, bei dem Papier von einer Rolle abgeschnitten und danach beidseitig laminiert und danach in einzelne Signaturen geschnitten wird.

Durch die US 3 610 547 A ist ein Rollenwechsler mit schwenkbaren Rollenhalteplätzen bekannt, der dafür vorgesehen ist, Laminierungsfolie auf geschäumtes Material aufzutragen.

Durch die US 3 794 228 A ist eine Trennvorrichtung zum Abtrennen von Abschnitten von einer Materialbahn bekannt.

Durch die JP H09 109359 A ist eine Bearbeitungsvorrichtung mit Bahnkantenausrichter und Tänzerwalze bekannt.

Durch die US 5 470 429 A sind eine Vorrichtung und ein Verfahren bekannt, wobei beide Seiten von Metallbogen vollflächig mit einem Polyestermaterial laminiert werden. Die Vorrichtung weist Mittel zum Schneiden von Ausgangsbogen und Stapeln sowie nachfolgendem Vereinzeln der Metallbogen auf. Die Metallbogen werden beabstandet hintereinander angeordnet und von beiden Seiten laminiert. Dabei kommen Rollenabspulvorrichtungen, Bahnkantenausrichter und Tänzerwalzen zum Einsatz. Die entstehende Materialbahn wird an Stellen zwischen den Metallbogen in Abschnitte geschnitten.

Der Erfindung liegt die Aufgabe zugrunde, eine Laminierungsmaschine und ein Verfahren zum Laminieren zumindest eines Materials zu schaffen.

Die Aufgabe wird erfindungsgemäß durch die Merkmale des Anspruches 1 und die Merkmale des Anspruches 2 und die Merkmale des Anspruches 13 gelöst.

Ein Vorteil besteht insbesondere darin, dass in besonders einfacher, präziser und schneller Weise Abschnitte von einer Materialbahn abgetrennt werden können, ohne dass in einem laufenden Betrieb Abfall anfallen würde, der die Gefahr einer Störung der Bearbeitungsmaschine vergrößern würde. Die Präzision wird bevorzugt von zwei Klemmeinrichtungen und gegebenenfalls einer einzelnen Ausrichtung von Bogen unterstützt.

Ein Vorteil besteht beispielsweise darin, dass ein besonders schneller und störungsarmer Laminierungsbetrieb ermöglicht wird. Dies wird beispielsweise durch bahnförmigen Laminierungsstoff erreicht und weiter bevorzugt durch Rollenwechsler zum Abspulen des Laminierungsstoffs. Insbesondere wird ein Beginn eines Laminierungsbetriebs vereinfacht, wenn eine Entsorgungseinrichtung für Laminierungsstoff angeordnet ist, beispielsweise weil auf diese Weise einfach und schnell mit der Produktion begonnen werden kann, ohne Laminierungsstoff von Hand aus schwierig zugänglichen Bereich zu entfernen.

Ein Vorteil besteht beispielsweise darin, dass eine besonders hohe Präzision beim Aufbringen des Laminierungsstoffs erreicht werden kann. Dies wird beispielsweise durch Bahnkantenausrichter und/oder eine Bahnspannungsregelung bei der Zuführung des Laminierungsstoffs erreicht. Alternativ oder zusätzlich erfolgt eine besonders präzise Ausrichtung von zu laminierenden Bogen, beispielsweise durch Vereinzelung und/oder Ausrichtung der Bogen und/oder geschuppte Anordnung der Bogen zueinander.

Ein Vorteil besteht beispielsweise darin, dass eine Laminierung von Bogen besonders präzise erfolgen kann und dass die Bogen bzw. die Abschnitte bei dem Prozess nicht beschädigt werden, beispielsweise durch angreifende Messer oder unvollständige Laminierung.

Ein Vorteil besteht beispielsweise, wenn zumindest eine Laminierungskontrolleinrichtung angeordnet ist, weil dann eine ordnungsgemäße Laminierung von Bogen und Erzeugung einer Materialbahn überwacht werden kann. Bei Erkennung eines Fehlers kann schnell reagiert werden, beispielsweise mit einem Anhalten der Trennvorrichtung und/oder der Laminierungsmaschine. Auf diese Weise kann Makulatur vermieden werden und eine Gefahr einer Beschädigung der Trennvorrichtung und/oder der Laminierungsmaschine verringert werden.

Ein Vorteil besteht beispielsweise, wenn zumindest eine Trennsensoreinrichtung angeordnet ist, weil dann bei einer fehlerhaften Abtrennung eines Abschnitts von einer Materialbahn reagiert werden kann, beispielsweise mit einem Anhalten der Trennvorrichtung und/oder der Laminierungsmaschine. Auf diese Weise kann Makulatur vermieden werden und eine Gefahr einer Beschädigung der Trennvorrichtung und/oder der Laminierungsmaschine verringert werden.

Ein Vorteil besteht beispielsweise, wenn zumindest ein Einziehmittel für Laminierungsstoff angeordnet ist. Dann kann besonders schnell und präzise eine Einsatzbereitschaft der Laminierungsmaschine hergestellt werden, beispielsweise nach einem Neustart oder nach einer kurzzeitigen Unterbrechung einer Produktion. Die erleichtert die Handhabung insbesondere auch bei beidseitigem Laminieren des Materials.

Ein Vorteil besteht beispielsweise, wenn zumindest eine Dickenkontrolleinrichtung angeordnet ist, um den Transportweg der Materialbahn zu überwachen. Dann kann eine Schuppung geregelt stattfinden und/oder eine Trennung besonders präzise vorgenommen werden und/oder können Fehler, die durch Verbindungsstellen von Bahnen von Laminierungsstoff ausgelöst werden könnten, vermieden werden. Insgesamt ergibt sich dadurch eine erhöhte Produktionsqualität und eine geringere Fehleranfälligkeit.

Ausführungsbeispiele der Erfindung sind in den Zeichnungen dargestellt und werden im Folgenden näher beschrieben.

Es zeigen:

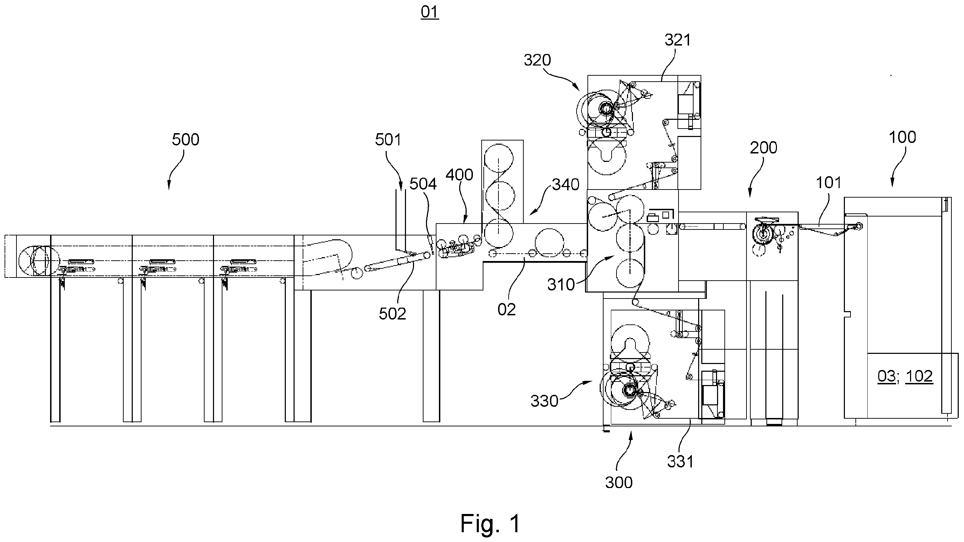

- Fig. 1: eine schematische Darstellung einer Bearbeitungsmaschine mit einem Laminierungswerk und einer Trennvorrichtung;

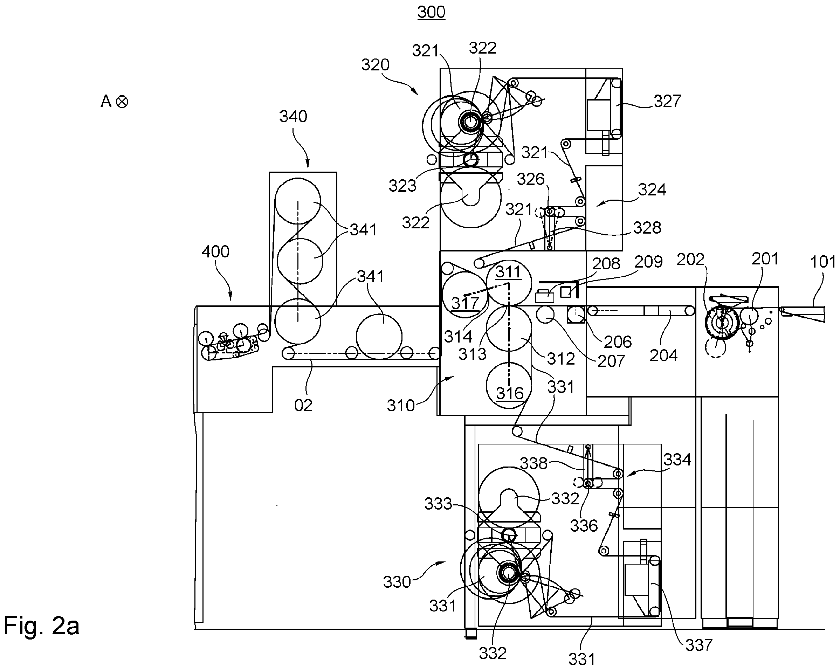

- Fig. 2a: eine schematische Darstellung eines Ausschnitts aus Fig. 1;

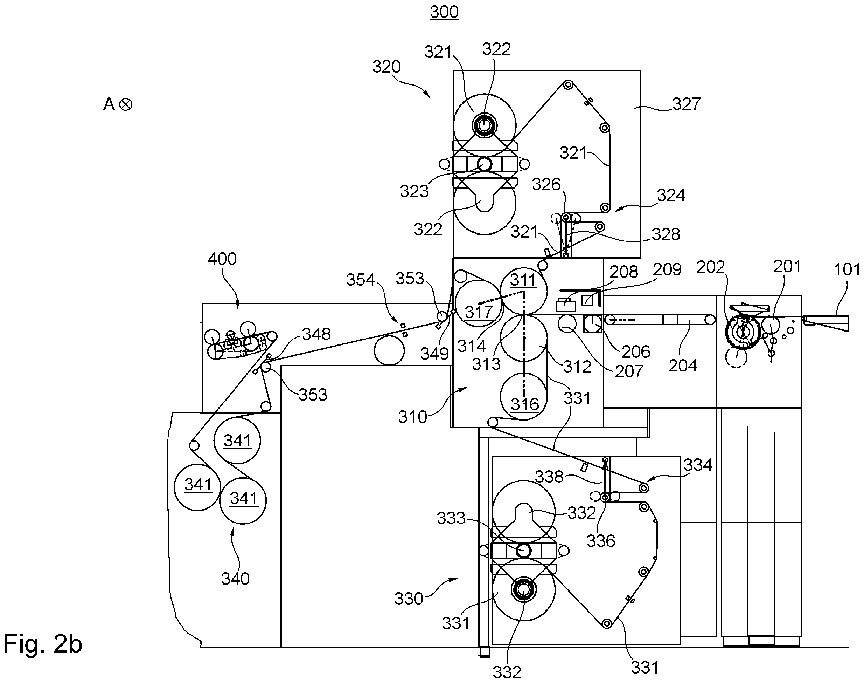

- Fig. 2b: eine schematische Darstellung gemäß Fig. 2a mit alternativer Bahnführung;

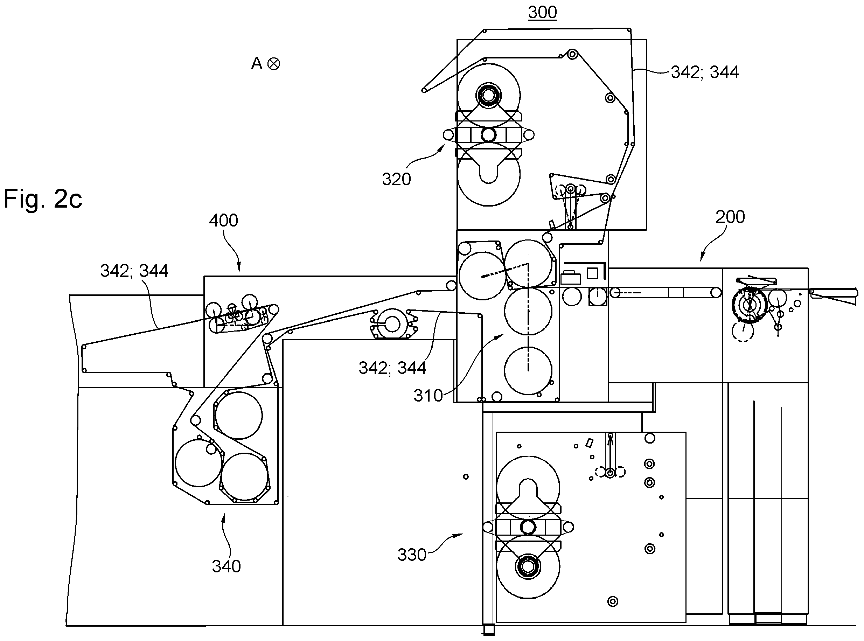

- Fig. 2c: eine schematische Darstellung des Ausschnitts gemäß Fig. 2b mit einem ersten, entlang eines ersten Einziehwegs angeordneten Einziehmittel;

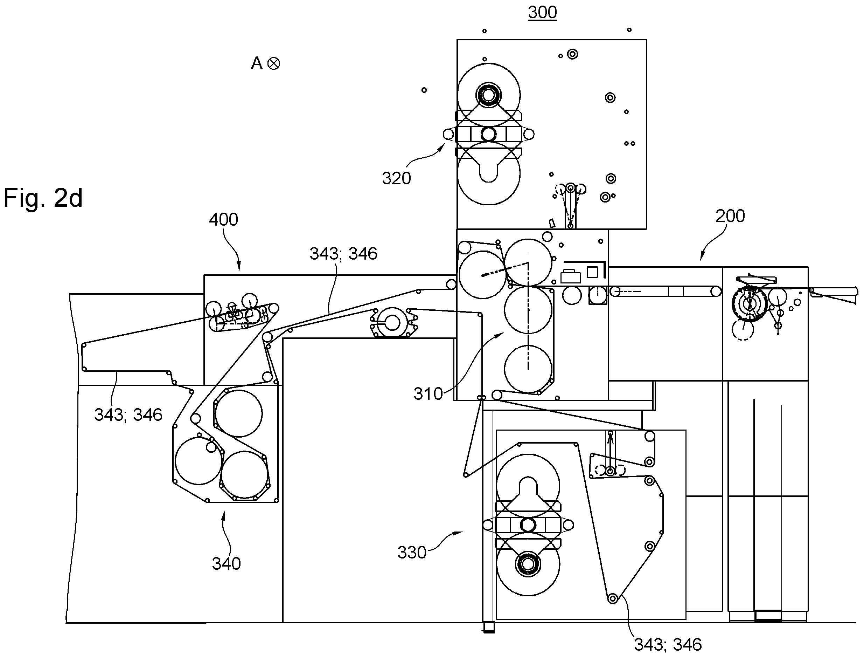

- Fig. 2d: eine schematische Darstellung des Ausschnitts gemäß Fig. 2b mit einem zweiten, entlang eines zweiten Einziehwegs angeordneten Einziehmittel;

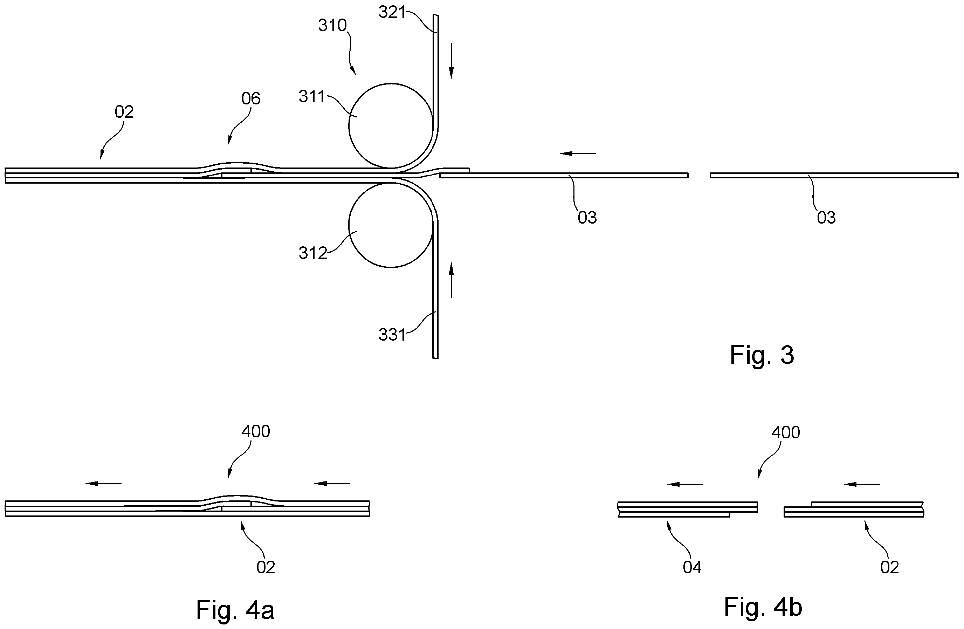

- Fig. 3.: eine schematische Darstellung einer Verbindung von Bogen und Laminierungsstoffen zu einer Materialbahn;
- Fig. 4a: eine schematische Darstellung einer Materialbahn nach deren Verbindung und vor deren Trennung;
- Fig. 4b: eine schematische Darstellung eines vorlaufenden Endes einer Materialbahn und eines nachlaufenden Endes eines abgetrennten Abschnitts;

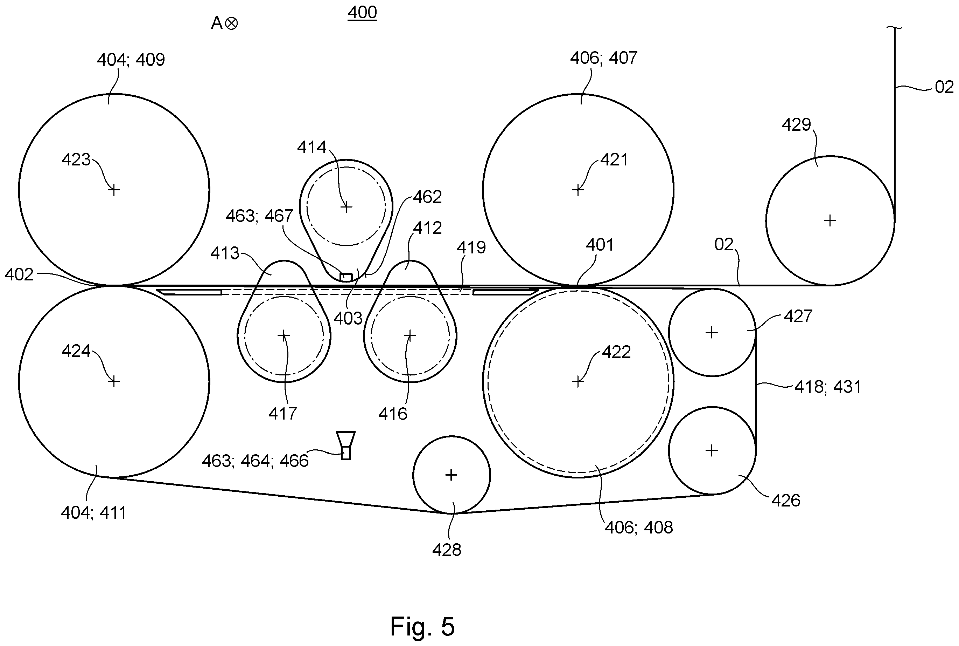

- Fig. 5: eine schematische Darstellung einer ersten Ausführungsform einer Trennvorrichtung;

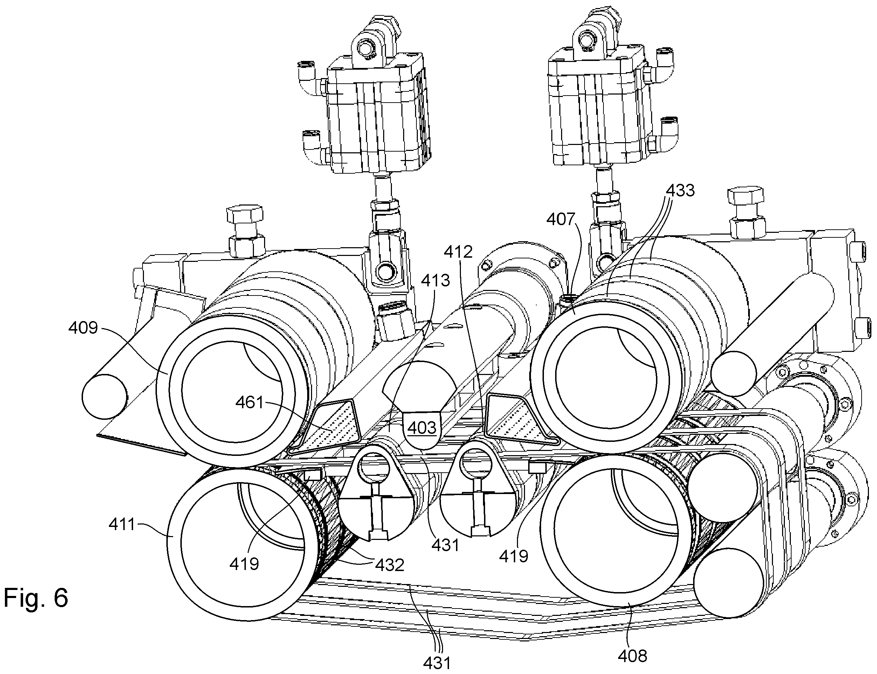

- Fig. 6: eine schematische Darstellung gemäß Fig. 5 in einer schrägen Perspektive;

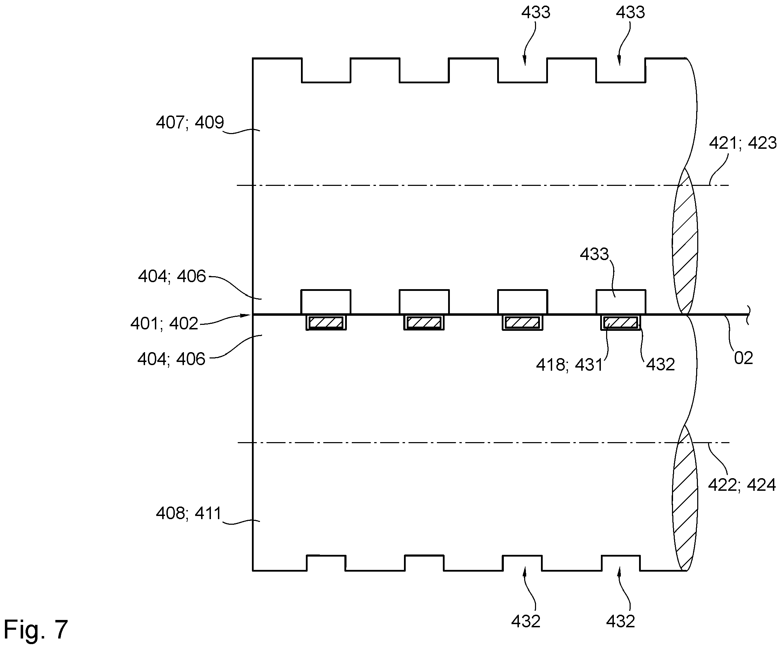

- Fig. 7: eine schematische Darstellung einer Zugwalze und einer Anpresswalze gemäß Fig. 5;

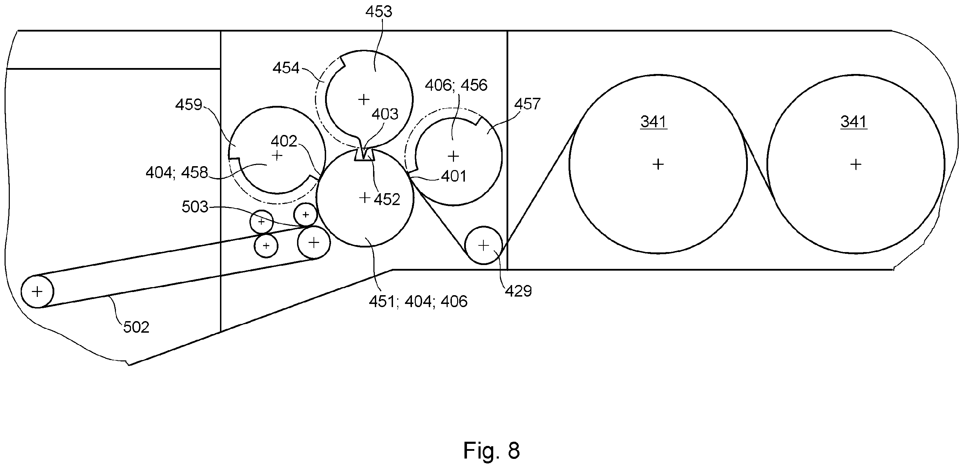

- Fig. 8: eine schematische Darstellung einer zweiten Ausführungsform einer T rennvorrichtu ng;

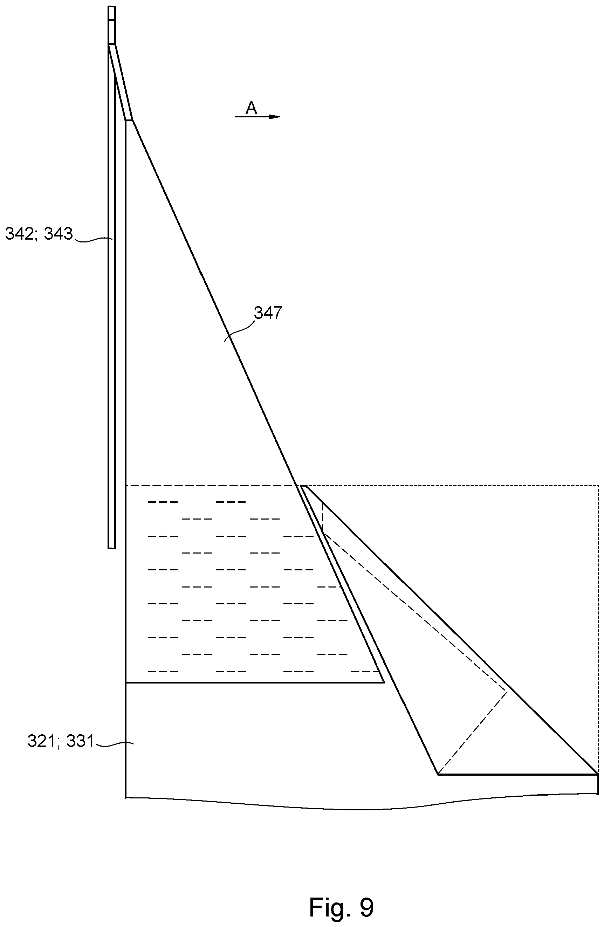

- Fig. 9: eine schematische Darstellung eines Einziehmittels, eines Verbindungselements und eines Laminierungsstoffs;

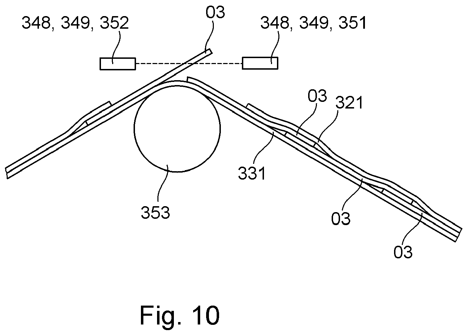

- Fig. 10: eine schematische Darstellung einer Laminierungskontrolleinrichtung.

Eine Bearbeitungsmaschine 01 weist bevorzugt zumindest eine Trennvorrichtung 400 auf. Die Bearbeitungsmaschine 01 ist bevorzugt als Laminierungsmaschine 01 ausgebildet. Die Bearbeitungsmaschine 01 ist insbesondere eine Bearbeitungsmaschine 01 für flaches Material 02; 03, beispielsweise bogenförmiges flaches Material 03 und/oder bahnförmiges flaches Material 02. Bevorzugt ist die Bearbeitungsmaschine 01 eine Laminierungsmaschine 01 für bogenförmiges Material 03. Das flache Material 02; 03 ist beispielsweise während einer Bearbeitung mittels der Bearbeitungsmaschine 01 nicht die gesamte Zeit über und/oder nicht an jedem Ort bahnförmig und nicht die gesamte Zeit über und/oder nicht an jedem Ort bogenförmig. Bevorzugt wird das flache Material 02; 03 in zumindest einem Trennvorgang aus einem bahnförmigen Zustand in einen bogenförmigen Zustand überführt. Dies geschieht beispielsweise in einer Trennvorrichtung 400. Die Bearbeitungsmaschine 01 weist bevorzugt zumindest eine solche Trennvorrichtung 400 auf. Weiter bevorzugt wird zuvor flaches Material 03 aus einem bogenförmigen Zustand in eine Materialbahn 02, also in flaches Material 02 im bahnförmigen Zustand überführt. Dies geschieht beispielsweise in einer Verbindungseinrichtung 310, die bevorzugt als Laminierungswerk 310 ausgebildet ist. Die Bearbeitungsmaschine 01 weist bevorzugt zumindest eine solche Verbindungseinrichtung 310 auf, die weiter bevorzugt als zumindest ein Laminierungswerk 310 ausgebildet ist. Das zumindest eine Laminierungswerk 310 ist bevorzugt ein Laminierungswerk 310 zum Erzeugen einer laminierten Materialbahn 02.

Das unlaminierte Material 02, insbesondere die unlaminierten Bogen 03 sind bevorzugt bedruckt und/oder geprägt und/oder lackiert. Das unlaminierte Material 02, insbesondere die unlaminierten Bogen 03 weisen als Bestendteile bevorzugt Papier und/oder Pappe und/oder Karton und/oder textile Gewebe und/oder Baumwolle und/oder kohlenstoffbasierten Kunststoff auf.

Unter einer Materialbahn 02 soll dabei bevorzugt eine bereits laminierte Materialbahn 02 zu verstehen sein. Bahnförmiges, aber dennoch nicht laminiertes Material wird als unlaminierte Materialbahn 02 bezeichnet. Sofern das Material bereits vor einer Laminierung bahnförmig ist, weist es bevorzugt Solltrennstellen auf. Diese können in der Bearbeitungsmaschine 01 oder in einer vorausgehenden Bearbeitung eingebracht werden. Von der Materialbahn 02 abgetrenntes Material wird als Abschnitt 04 bezeichnet. Bogenförmiges, aber noch nicht laminiertes Material wird als unlaminierte Bogen oder einfach Bogen bezeichnet. Werden zunächst Bogen 03 zu einer Materialbahn 02 verbunden, so ergeben sich Solltrennstellen in den dabei entstehenden Verbindungsbereichen. Die Bearbeitungsmaschine 01 dient bevorzugt dazu, Bogen 03 zu laminieren, also mit zumindest einer Schicht zumindest eines Laminierungsstoffs 321; 331 zu überziehen. Dies geschieht bevorzugt zumindest einseitig und weiter bevorzugt beidseitig. Der Laminierungsstoff 321; 331 und/oder die den Laminierungsstoff 321; 331 tragenden Rollen weisen in einer axialen Richtung A bevorzugt eine Ausdehnung oder Breite auf, die der Breite des Materials 02 und/oder der Bogen 03 und/oder der Materialbahn 02 entspricht und/oder die bevorzugt zumindest 500 mm, weiter bevorzugt zumindest 700 mm und noch weiter bevorzugt zumindest 800 mm beträgt. Eine in der axialen Richtung A gemessene Breite oder Ausdehnung der laminierten Materialbahn 02 ist bevorzugt entlang dieser gesamten laminierten Materialbahn 02 konstant und/oder bevorzugt so groß, wie die größere aus der Abmessung der Bogen 03 in der axialen Richtung A und die Abmessung des Laminierungsstoffs 321; 331 in der axialen Richtung A. Weiter bevorzugt sind die Abmessung der Bogen 03 in der axialen Richtung A und die Abmessung des Laminierungsstoffs 321; 331 in der axialen Richtung A gleich groß und ist die Abmessung der laminierten Materialbahn 02 in dieser axialen Richtung A ebenfalls genauso groß.

Die axiale Richtung A ist bevorzugt eine Richtung, die horizontal orientiert ist. Die axiale Richtung A ist bevorzugt orthogonal zu jeder Transportrichtung der Materialbahn 02 orientiert. Die axiale Richtung A ist bevorzugt parallel zu einer Rotationsachse eines Bauteils der Bearbeitungsmaschine 01 orientiert, beispielsweise einer Rotationsachse 421; 423 einer Anpresswalze 407; 409 und/oder einer Rotationsachse 422; 424 einer Zugwalze 406; 408 und/oder zumindest einer Dehnungsachse 414; 416; 417 zumindest eines Dehnungselements 403; 412; 413.

Die Bearbeitungsmaschine 01 weist bevorzugt zumindest eine Materialquelle 100 auf, die insbesondere als zumindest eine Materialquelle 100 für zu laminierendes Material 02 ausgebildet ist. Bevorzugt ist die zumindest eine Materialquelle 100 als zumindest ein Bogenanleger 100 ausgebildet und/oder dient die zumindest eine Materialquelle 100 einer Zuführung von bogenförmigem Material 02, insbesondere unlaminierten Bogen 03, in die Bearbeitungsmaschine 01. Alternativ kann bei entsprechender Bauweise der Bearbeitungsmaschine 01 unlaminertes oder bereist laminiertes bahnförmiges Material 02 zur Bearbeitung zugeführt werden. Dann ist die zumindest eine Materialquelle 100 beispielsweise als zumindest eine Rollenabspuleinrichtung 100 zum Abspulen zumindest einer Materialrolle ausgebildet.

Die Materialquelle 100 und insbesondere der Bogenanleger 100 ist beispielsweise wie für einen Bogenanleger 100 üblich ausgebildet. Der Bogenanleger 100 weist beispielsweise eine als Bändertisch 101 ausgebildeten Förderstrecke 101 und ein beispielsweise als Bogenstapel 102 ausgebildetes Bedruckstoffgebinde 102 auf, das insbesondere auf einer Aufnahmeeinrichtung angeordnet ist, beispielsweise einer Stapelplatte. Die Stapelplatte ist bevorzugt mit Transportmitteln verbunden, welche sichern, dass die Oberseite des Bogenstapels 102 in einer definierten Position gehalten wird. Der Bogenanleger 100 weist bevorzugt Bogenvereinzelungsorgane und Bogentransportorgane auf. Die Bogenvereinzelungsorgane sind beispielsweise als Trennsauger und die Bogentransportorgane beispielsweise als Transportsauger ausgebildet und sind vorzugsweise gemeinsam Teil eines Bogentrenners. Der Antrieb des Bogentrenners ist bevorzugt so gestaltet, dass die Trennsauger eine vorwiegend vertikale Bewegung und die Transportsauger eine in oder entgegen der Bogentransportrichtung vorwiegend horizontale Bewegung ausführen. Dabei sind für die Trennsauger und die Transportsauger bevorzugt jeweils Einzelantriebe vorgesehen. Unter Einzelantrieben werden hier ansteuerbare Antriebe verstanden, die einem oder einer Gruppe von Arbeitsorganen zu deren Antrieb zugeordnet sind, insbesondere zu deren Antrieb unabhängig vom Antrieb anderer Arbeitsorgane oder Gruppen von Arbeitsorganen, insbesondere ohne über eine mechanische und/oder formschlüssige Antriebsverbindung zu Antrieben anderer, einzeln oder ebenfalls in einer oder mehreren Gruppen angetriebener Arbeitsorgane gekoppelt zu sein.

Um bei einem Wechsel des Bogenstapels 102 das Anhalten der Bearbeitungsmaschine 01 zu vermeiden, ist der Bogenanleger 100 bevorzugt mit einer Nonstop-Einrichtung ausgerüstet. Diese Nonstop-Einrichtung verfügt insbesondere über einen in den Bereich des Bogenstapels 102 einfahrbaren, an einer Einschubeinheit angeordneten Hilfsstapelträger, der insbesondere als Rechen, Rollo oder Platte ausgebildet ist. Der Hilfsstapelträger übernimmt bevorzugt den auf einer Transportunterlage, insbesondere einer Palette ruhenden Reststapel und hebt diesen vorzugsweise kontinuierlich an, um ein störungsfreies Vereinzeln und Abtransportieren des jeweils obersten Bogens 03 des Reststapels zu sichern. In dieser Zeit wird bevorzugt der neue, beispielsweise auf einer weiteren Palette angeordnete Stapel eingefahren und nachfolgend der Reststapel mit dem neuen Stapel vereinigt.

Der dem Bogenstapel 102 nachgeordnete Bändertisch 101 ist beispielsweise als Saugbändertisch 101 ausgebildet. Er weist vorzugsweise zumindest zwei Walzen auf, beispielsweise eine Antriebswalze und zumindest eine Umlenkwalze, zwischen denen eine beispielsweise ein- oder mehrteilige Förderfläche vorgesehen sein kann, welche beispielsweise durch ein ein- oder mehrteiliges Tischblech oder durch einen das Tischblech ausbildenden Saugkasten gebildet ist. Die Antriebswalze und die Umlenkwalze sind bevorzugt von mindestens einem Transportband umschlungen, welches beim Saugbändertisch 101 als Saugband ausgebildet ist. Das Band wird bevorzugt mit Hilfe einer Spannwalze gespannt und bevorzugt durch einen beispielsweise an der Antriebswalze angreifenden Bandeinzelantrieb innerhalb eines Arbeitstaktes einem Geschwindigkeitsprofil folgend angetrieben. Mit der Antriebswalze korrespondieren bevorzugt Taktrollen, die innerhalb eines Arbeitstaktes gegen die Antriebswalze gesteuert werden.

Die Bearbeitungsmaschine 01 weist bevorzugt zumindest eine Vorbereitungseinrichtung 200 auf. Die Vorbereitungseinrichtung 200 ist beispielsweise als Vereinzelungseinrichtung 200; 202 und/oder als Ausrichtungseinrichtung 200 und/oder als Schuppungseinrichtung 200; 206; 207; 208, insbesondere Unterschuppungseinrichtung 200 ausgebildet oder weist zumindest eine Vereinzelungseinrichtung 200; 202 und/oder zumindest eine Ausrichtungseinrichtung 200 und/oder zumindest eine Schuppungseinrichtung 200; 206; 207; 208 auf. Die Vorbereitungseinrichtung 200 wird auch als Bogenanlage 200 bezeichnet. Eine Vereinzelungseinrichtung 200 dient insbesondere einer Vereinzelung von Bogen 03, insbesondere soweit, dass jeder Bogen 03 zu seinen direkt benachbarten Bogen 03 einen Abstand aufweist. Bevorzugt ist demnach zumindest eine Vereinzelungseinrichtung 200; 202 zum räumlichen Trennen unlaminierter Bogen 03 voneinander angeordnet. Unter einer räumlichen Trennung ist insbesondere ein Zustand zu verstehen, indem kein direkter körperlicher Kontakt besteht. Die Bearbeitungsmaschine 01 weist also bevorzugt zumindest eine Vereinzelungseinrichtung 200; 202 zum räumlichen Trennen unlaminierter Bogen 03 voneinander und zumindest eine insbesondere entlang eines vorgesehenen Transportwegs des Materials 02 nach der zumindest einen Vereinzelungseinrichtung 200; 202 angeordnete Schuppungseinrichtung 200; 206; 207; 208 zum geschuppten Anordnen unlaminierter Bogen 03 zueinander auf. Eine Schuppungseinrichtung 200 kann entfallen, wenn eine unlaminierte Materialbahn 02 laminiert und danach in Abschnitte 04 getrennt wird. Im Folgenden soll jedoch davon ausgegangen werden, dass unlaminierte Bogen 03 zu einer Materialbahn 02 vereint werden und diese Materialbahn 02 danach in einzelne Abschnitte 04 geteilt wird. Bevorzugt entsprechen dabei die einzelnen Abschnitte 04 den zuvor zugeführten Bogen 03 mit zusätzlicher Laminierung.

Die Vorbereitungseinrichtung 200 weist beispielsweise zumindest eine als Stopptrommel 201 ausgebildete erste Saugtrommel 201 auf. Die Vorbereitungseinrichtung 200 weist weiterhin bevorzugt Seitenmarken und/oder Deckmarken und/oder Vorderanschläge auf, insbesondere um die Bogen 03 kontrolliert und präzise in eine gewünschte Lage zu bringen. Die Vorbereitungseinrichtung 200 weist bevorzugt zumindest eine weitere, insbesondere zweite Saugtrommel 202 auf, die beispielsweise als Beschleunigungstrommel 202 ausgebildet ist und/oder einer Übergabe der Bogen 03 an zumindest ein Saugband 204 dient. Zumindest das zumindest eine Saugband 204 dient bevorzugt einem Transport von vereinzelten, insbesondere räumlich voneinander getrennten Bogen 03. Diese Bogen 03 sind bevorzugt vereinzelt, um jeden einzelnen Bogen 03 präzise und unabhängig von anderen Bogen 03 ausrichten zu können. Zusätzlich wird eine Identifikation etwaiger Doppelbogen erleichtert. Die Vereinzelung erfolgt bevorzugt durch positive Beschleunigung und nachfolgendes Abbremsen eines vorlaufenden Bogens 03 und/oder durch Abbremsen und nachfolgende positive Beschleunigung eines nachlaufenden Bogens 03. Deshalb weist die Vereinzelungseinrichtung 200 bevorzugt zumindest zwei unabhängig voneinander betreibbare Antriebe auf. Beispielsweise ist die als Stopptrommel 201 ausgebildete erste Saugtrommel 201 mittels eines anderen Antriebs angetrieben und/oder antreibbar als die zumindest eine beispielsweise als Beschleunigungstrommel 202 ausgebildete zweite Saugtrommel 202 und/oder als das zumindest eine Saugband 204.

Die Vorbereitungseinrichtung 200 weist bevorzugt zumindest eine Unterschubtrommel 206 auf. Die zumindest eine Unterschubtrommel 206 ist beispielsweise Bestandteil der Schuppungseinrichtung 200. Die zumindest eine Unterschubtrommel 206 dient bevorzugt dazu, Bogen 03 kurzzeitig auf eine erhöhte Geschwindigkeit zu beschleunigen und danach wieder abzubremsen, um eine Lücke zu vorauslaufenden Bogen 03 zu verringern und/oder zu verschließen und/oder um einen hinteren Bogen 03 so weit nach vorne zu bringen, dass er mit einem vorauslaufenden Bogen 03 überlappt. Um ein gezieltes Überlappen zu erreichen, ist bevorzugt zumindest eine Hubvorrichtung 207; 208 angeordnet, die beispielsweise als von unten anhebendes mechanisches Bauteil 207 und/oder als zumindest eine Blasdüse 207 und/oder als zumindest eine Saugdüse 208 ausgebildet ist. Ein solches von unten anhebendes mechanisches Bauteil 207 weist beispielsweise zumindest ein exzentrisch rotierbares Bauteil 207 und zumindest einen Antrieb, insbesondere Einzelantrieb auf und ist weiter bevorzugt als Klöppelwalze 207 ausgebildet. Je nach Format der zu bearbeitenden Bogen 03 wird das von unten anhebende mechanische Bauteil 207, insbesondere das exzentrisch rotierbare Bauteil 207 immer gerade so in nach oben befördert, dass es ein hinteres Ende eines Bogens 03 anhebt und bevorzugt an eine obere Saugvorrichtung 208 übergibt. Die zumindest eine Hubvorrichtung 207; 208 dient bevorzugt dazu, ein nachlaufendes Ende eines vorlaufenden Bogens 03 anzuheben, insbesondere so, dass ein vorlaufendes Ende eines nachfolgenden Bogens 03 unter dieses nachlaufende Ende des vorlaufenden Bogens 03 geschoben werden kann. Zur Unterstützung der Hubbewegung und/oder zur Verlängerung einer Zeit, in der das nachlaufende Ende des Bogens 03 angehoben ist, ist beispielsweise zumindest eine obere Saugvorrichtung 208 angeordnet. Die Hubvorrichtung 207; 208 also bevorzugt an unterschiedliche Bogenlängen anpassbar. Bevorzugt weist die zumindest eine Schuppungseinrichtung 200 die zumindest eine Hubvorrichtung 207; 208 auf. Die zumindest eine Hubvorrichtung 207; 208 weist bevorzugt zumindest eine Saugdüse 208 auf, deren zumindest eine Öffnung zumindest eine nach unten gerichtete Komponente aufweist. Die zumindest eine Saugdüse 208 ist bevorzugt von zumindest einer Leitfläche umgeben, die weiter bevorzugt noch weitere Saugöffnungen 208 aufweist, die noch weiter bevorzugt ebenfalls Öffnungen mit jeweils zumindest einer nach unten gerichteten Komponente aufweisen. Der zumindest einen Saugdüse 208 gegenüberliegend ist bevorzugt zumindest eine Transportfläche angeordnet, insbesondere um die Bogen 03 zu unterstützen, solange und dort wo die Saugdüse 208 die Bogen 03 nicht anhebt. Diese Transportfläche weist bevorzugt Öffnungen auf, um einen Druckausgleich zu ermöglichen und dadurch ein Anheben von zumindest Teilen der Bogen 03 zu erleichtern. Bevorzugt ist der zumindest einen Saugdüse 208 gegenüberliegend das zumindest eine unten anhebende mechanische Bauteil 207 angeordnet, insbesondere die zumindest eine Klöppelwalze 207. Dieses zumindest eine unten anhebende mechanische Bauteil 207 ist bevorzugt mit variabler Geschwindigkeit betreibbar angeordnet. Dadurch können vorlaufende Bogen 03 ihrer in einem an ihre Länge angepassten Bewegungsablauf angehoben werden. Das zumindest eine unten anhebende mechanische Bauteil 207 und insbesondere die zumindest eine Klöppelwalze 207 ist bevorzugt Bestandteil der Schuppungseinrichtung 200.

Insbesondere ermöglicht dies zumindest einen Verfahrensvorgang zum Laminieren von Bogen 03 eines Materials 02, wobei die Bogen 03 bevorzugt zunächst mittels einer Vereinzelungseinrichtung 200; 202 räumlich voneinander getrennt werden und wobei die Bogen 03 ausgerichtet werden und wobei die Bogen 03 insbesondere nach deren räumlichen Trennung mittels einer Schuppungseinrichtung 200; 206; 207; 208 insbesondere paarweise in eine nur teilweise miteinander überlappende Lage zueinander gebracht werden und wobei die Bogen 03 einem Laminierungswerk 310 einer Laminierungsmaschine 01 zugeführt und dort in der zueinander überlappenden Lage durch Verbindung mit zumindest einem Laminierungsstoff 321; 331 laminiert und zu einer Materialbahn 02 verbunden werden. Die Bogen 03 werden insbesondere paarweise bevorzugt in die nur teilweise miteinander überlappende Lage zueinander gebracht, indem hintere Enden von jeweiligen vorlaufenden Bogen 03 angehoben werden und im Anschluss durch eine im Vergleich zu einer Transportgeschwindigkeit des jeweiligen vorlaufenden Bogens 03 erhöhte Transportgeschwindigkeit eines jeweiligen nachlaufenden Bogens 03 das jeweilige vorlaufende Ende des jeweiligen nachlaufenden Bogens 03 unter das jeweilige nachlaufende Ende des jeweiligen vorlaufenden Bogens 03 befördert wird und dabei oder bevorzugt danach das jeweilige nachlaufende Ende des jeweiligen vorlaufenden Bogens 03 mit dem jeweiligen vorlaufenden Ende des jeweiligen nachlaufenden Bogens 03 in Kontakt gebracht wird. Bevorzugt ist spätestens dann die Transportgeschwindigkeit des jeweiligen vorlaufenden Bogens 03 wieder identisch mit der Transportgeschwindigkeit des jeweiligen nachlaufenden Bogens 03. Das Anheben des jeweiligen nachlaufenden Endes eines Bogens 03 erfolgt bevorzugt durch Kontakt mit einem entsprechend bewegten von unten anhebenden mechanischen Bauteil 207, insbesondere der Klöppelwalze 207. Alternativ oder zusätzlich erfolgt ein Anheben des jeweiligen nachlaufenden Endes eines Bogens 03 bevorzugt durch Ansaugen mittels zumindest einer Saugdüse 208.

Die Bearbeitungsmaschine 01 weist bevorzugt zumindest eine Laminierungsvorrichtung 300 auf. Die Laminierungsvorrichtung 300 stellt bevorzugt diejenige Vorrichtung 300 dar, die dazu dient, das flache Material 02 mit zumindest einer zusätzlichen Stoffschicht anzureichern und insbesondere eine laminierte Materialbahn 02 zu erzeugen, die weiter bevorzugt vorgesehene Solltrennstellen aufweist. Eine solche Solltrennstelle ergibt sich beispielsweise dort, wo zwei benachbarte Bogen 03 einander gegenüberliegen, sei es mit Abstand, sei es mit einer stirnseitigen Berührung oder sei es wie bevorzugt mit einer Überlappung. Die Vorbereitungseinrichtung 200 übergibt der Laminierungsvorrichtung 300 bevorzugt einen kontinuierlichen Strom von insbesondere leicht überlappt angeordneten unlaminierten Bogen 03. Dieser Strom wird in der Laminierungsvorrichtung 300 zumindest einseitig und bevorzugt beidseitig mit zumindest einer Schicht eines Laminierungsstoffs 321; 331 überzogen. Dadurch ergibt sich insbesondere ein Überlappungsbereich 06, in dem zwei Bogen 03 einander berühren. In diesem Bereich sind diese beiden Bogen 03 jeweils nur höchstens an einer Seite mit dem zumindest einem Laminierungsstoff 321; 331 in Kontakt. Der zumindest eine Laminierungsstoff 321; 331 bildet die Verbindung zwischen den Bogen 03. Eine Durchtrennung der zumindest einen Schicht des Laminierungsstoffs 321; 331 trennt die Abschnitte 04 voneinander. Da die Schicht des Laminierungsstoffs 321; 331 bevorzugt relativ dünn ausgebildet ist, stellt dieser Überlappungsbereich 06 bevorzugt eine Solltrennstelle dar. Eine Überdehnung der Materialbahn 02 bewirkt insbesondere eine Überdehnung der Schicht des Laminierungsstoffs 321; 331 im Überlappungsbereich. Eine relativ kleine absolute Überdehnung der der Materialbahn 02 bewirkt dabei eine große Überdehnung des Laminierungsstoffs 321; 331 im Überlappungsbereich, während im mit den Bogen 03 verbundenen Bereich praktisch keine Dehnung stattfindet.

Die Laminierungsvorrichtung 300 selbst weist bevorzugt zumindest ein Laminierungswerk 310 auf. Das zumindest eine Laminierungswerk 310 dient bevorzugt dem Aufbringen von Laminierungsstoff 321; 331 auf das flache Material 02. Wenn im Vorangegangenen und/oder im Folgenden von flachem Material 02 die Rede ist, so ist darunter insbesondere dasjenige Material 02 zu verstehen, das aus der Materialquelle 100 stammt und in dem zumindest einen Laminierungswerk 310 mit zumindest einer weiteren Schicht aus Laminierungsstoff 321; 331 versehen wird und danach bevorzugt in einzelne Abschnitte 04 getrennt wird. Das flache Material 02 ist insbesondere dasjenige Material 02, das durch die Bearbeitungsmaschine 01 veredelt wird, während der Laminierungsstoff 321; 331 derjenige Stoff ist, der die Veredelung des flachen Materials 02 bewirkt. Laminierungsstoff 321; 331 stammt insbesondere aus einer Laminierungsquelle 320; 330 und wird bevorzugt dem flachen Materials 02 zugeführt. Der Laminierungsstoff 321; 331 wird beispielsweise in Form zumindest einer Bahn, insbesondere zumindest einer Folie zugeführt und durch Pressung und/oder Erhitzung mit dem Material 02 verbunden.

Die Laminierungsvorrichtung 300 selbst weist bevorzugt zumindest eine erste Laminierungsquelle 320 für Laminierungsstoff 321 und/oder zumindest eine zweite Laminierungsquelle 330 für Laminierungsstoff 331 auf. Bevorzugt ist die zumindest eine erste Laminierungsquelle 320 als zumindest eine obere Laminierungsquelle 320 ausgebildet und/oder dient die zumindest eine erste Laminierungsquelle 320 einem Auftragen eines ersten Laminierungsstoffs 321 auf eine erste Seite der Materialbahn 02 und/oder der Bogen 03. Bevorzugt ist die zumindest eine zweite Laminierungsquelle 330 als zumindest eine untere Laminierungsquelle 330 ausgebildet und/oder dient die zumindest eine zweite Laminierungsquelle 330 einem Auftragen eines zweiten Laminierungsstoffs 331 auf eine insbesondere der ersten Seite der Materialbahn 02 und/oder der Bogen 03 gegenüberliegende zweite Seite der Materialbahn 02 und/oder der Bogen 03. Die Laminierungsvorrichtung 300 selbst weist bevorzugt zumindest eine Kühleinrichtung 340 auf.

Die zumindest eine erste Laminierungsquelle 320 ist bevorzugt als erste Rollenabspulvorrichtung 320 ausgebildet und/oder weist bevorzugt zumindest einen ersten Rollenhalteplatz 322 auf. Die erste Laminierungsquelle 320 ist weiter bevorzugt als zumindest ein erster Rollenwechsler 320 ausgebildet und/oder weist bevorzugt zumindest zwei erste Rollenhalteplätze 322 auf, insbesondere zum gleichzeitigen Tragen zumindest zweier Rollen von erstem Laminierungsstoff 321. Diese ersten Rollenhalteplätze 322 sind bevorzugt um eine gemeinsame erste Schwenkachse 323 schwenkbar angeordnet, insbesondere gemeinsam. Bevorzugt können die beiden ersten Rollenhalteplätze 322 durch eine gemeinsame Schwenkbewegung bezüglich ihrer Positionen getauscht werden. Die als erster Rollenwechsler 320 ausgebildete erste Rollenabspulvorrichtung 320 ermöglicht beispielsweise einen fliegenden Rollenwechsel, also ein Verbinden einer neuen Bahn von Laminierungsstoff 321 mit einer bereits weitgehend abgespulten Bahn von Laminierungsstoff 321, ohne diese anzuhalten. Bevorzugt wird jedoch die Bearbeitungsmaschine 01 angehalten, um die Zuführung des Laminierungsstoffs 321 auf eine neue Rolle umzustellen. Dies geschieht wegen der Ausbildung als erster Rollenwechsler 320 dennoch besonders schnell.

Die zumindest eine erste Laminierungsquelle 320 weist bevorzugt zumindest einen ersten Bahnkantenausrichter 327 auf, der insbesondere einer Ausrichtung des Laminierungsstoffs 321 in der axialen Richtung A dient. Der zumindest eine erste Bahnkantenausrichter 327 ist bevorzugt ein erster Bahnkantenausrichter 327 für eine Ausrichtung ausschließlich von Laminierungsstoff 321. Der zumindest eine erste Bahnkantenausrichter 327 weist beispielsweise zumindest zwei bevorzugt in einem bewegbaren Rahmen angeordnete Ausrichtewalzen auf, durch deren Lage im Raum die axiale Lage des insbesondere ersten Laminierungsstoffs 321 eingestellt werden kann. Bevorzugt lässt sich mittels des zumindest einen ersten Bahnkantenausrichters 327 eine auf die axiale Richtung A bezogene Ausrichtung des Laminierungsstoffs 321 in Transportrichtung gesehen nach dem zumindest einen ersten Bahnkantenausrichter 327 verändern, insbesondere ohne die Lage der zugehörigen Rolle des Laminierungsstoffs 321 bezüglich der axialen Richtung A zu verändern. Alternativ wird die auf die axiale Richtung A bezogene Lage des insbesondere ersten Laminierungsstoffs 321 durch Verschiebung der zugehörigen Rolle des Laminierungsstoffs 321 bezüglich der axialen Richtung A eingestellt, insbesondere gesteuert oder geregelt. Die zumindest eine erste Laminierungsquelle 320 weist bevorzugt zumindest eine erste Bahnspannungsregelung 324 auf, die beispielsweise zumindest eine erste Tänzerwalze 326 und/oder zumindest einen ersten Tänzerhebel 328 aufweist. Beispielsweise ist zumindest eine erste Rollenzufuhreinrichtung angeordnet, mittels der Rollen des Laminierungsstoffs 321 der ersten Rollenabspulvorrichtung 320 zuführbar sind. Die zumindest eine erste Rollenzufuhreinrichtung ist beispielsweise als zumindest ein Kran und/oder zumindest eine Hubeinrichtung und/oder als zumindest ein Transportwagen und/oder als zumindest ein Schienensystem ausgebildet.

Die zumindest eine erste Rollenabspulvorrichtung 320 weist beispielsweise je Rollenhalteplatz 322 zwei Tragarme auf, von denen weiter bevorzugt jeder jeweils ein bevorzugt als Klapplager ausgebildetes Spannwellenlager aufweist. Die zumindest eine erste Rollenabspulvorrichtung 320 weist beispielsweise zumindest eine Spannwelle auf, auf denen Rollen des Laminierungsstoffs 321 aufgenommen und mittels als Spannbacken ausgebildeten Mitnehmerelementen gehalten werden können. Zumindest ein Spannwellenlager weist bevorzugt ein Verschlusselement auf, das im Fall eines Klapplagers bevorzugt um eine Verschlussachse schwenkbar ist. Die Spannwelle wird zusammen mit der Rolle des Laminierungsstoffs 321 mit ihren beiden Enden in die beiden Spannwellenlager eingesetzt. Im Anschluss werden die beiden Spannwellenlager jeweils geschlossen, bevorzugt indem die Verschlusselemente in eine geschlossene Stellung geschwenkt werden. Nur, wenn sich das jeweilige Spannwellenlager in einer Drehwinkellage befindet, die innerhalb dieses zulässigen Winkellagebereichs liegt, kann das jeweilige Spannwellenlager geöffnet werden.

Die zumindest eine zweite Laminierungsquelle 330 ist bevorzugt als zweite Rollenabspulvorrichtung 330 ausgebildet und/oder weist bevorzugt zumindest einen zweiten Rollenhalteplatz 332 auf. Die zweite Laminierungsquelle 330 ist weiter bevorzugt als zumindest ein zweiter Rollenwechsler 330 ausgebildet und/oder weist bevorzugt zumindest zwei zweite Rollenhalteplätze 332 auf, insbesondere zum gleichzeitigen Tragen zumindest zweier Rollen von zweitem Laminierungsstoff 331. Diese zweiten Rollenhalteplätze 332 sind bevorzugt um eine gemeinsame zweite Schwenkachse 333 schwenkbar angeordnet, insbesondere gemeinsam. Bevorzugt können die beiden zweiten Rollenhalteplätze 332 durch eine gemeinsame Schwenkbewegung bezüglich ihrer Positionen getauscht werden. Die als zweiter Rollenwechsler 330 ausgebildete zweite Rollenabspulvorrichtung 330 ermöglicht bevorzugt einen fliegenden Rollenwechsel, also ein Verbinden einer neuen Bahn von Laminierungsstoff 331 mit einer bereits weitgehend abgespulten Bahn von Laminierungsstoff 331, ohne diese anzuhalten. Bevorzugt wird jedoch die Bearbeitungsmaschine 01 angehalten, um die Zuführung des Laminierungsstoffs 331 auf eine neue Rolle umzustellen. Dies geschieht wegen der Ausbildung als zweiter Rollenwechsler 330 dennoch besonders schnell.

Die zumindest eine zweite Laminierungsquelle 330 weist bevorzugt zumindest einen zweiten Bahnkantenausrichter 337 auf, der insbesondere einer Ausrichtung des Laminierungsstoffs 331 in der axialen Richtung A dient. Der zumindest eine zweite Bahnkantenausrichter 337 ist bevorzugt ein zweiter Bahnkantenausrichter 337 für eine Ausrichtung ausschließlich von Laminierungsstoff 331. Der zumindest eine zweite Bahnkantenausrichter 337 weist beispielsweise zumindest zwei bevorzugt in einem bewegbaren Rahmen angeordnete Ausrichtewalzen auf, durch deren Lage im Raum die axiale Lage des insbesondere zweiten Laminierungsstoffs 331 eingestellt werden kann. Bevorzugt lässt sich mittels des zumindest einen zweiten Bahnkantenausrichters 337 eine auf die axiale Richtung A bezogene Ausrichtung des Laminierungsstoffs 331 in Transportrichtung gesehen nach dem zumindest einen zweiten Bahnkantenausrichter 337 verändern, insbesondere ohne die Lage der zugehörigen Rolle des Laminierungsstoffs 331 bezüglich der axialen Richtung A zu verändern. Alternativ wird die auf die axiale Richtung A bezogene Lage des insbesondere zweiten Laminierungsstoffs 331 durch Verschiebung der zugehörigen Rolle des Laminierungsstoffs 331 bezüglich der axialen Richtung A eingestellt, insbesondere gesteuert oder geregelt. Die zumindest eine zweite Laminierungsquelle 330 weist bevorzugt zumindest eine zweite Bahnspannungsregelung 334 auf, die beispielsweise zumindest eine zweite Tänzerwalze 336 und/oder zumindest einen zweiten Tänzerhebel 338 aufweist. Beispielsweise ist zumindest eine zweite Rollenzufuhreinrichtung angeordnet, mittels der Rollen des Laminierungsstoffs 331 der zweiten Rollenabspulvorrichtung 330 zuführbar sind. Die zumindest eine zweite Rollenzufuhreinrichtung ist beispielsweise als zumindest ein Kran und/oder zumindest eine Hubeinrichtung und/oder als zumindest ein Transportwagen und/oder als zumindest ein Schienensystem ausgebildet.

Die zumindest eine zweite Rollenabspulvorrichtung 330 weist beispielsweise je Rollenhalteplatz 332 zwei Tragarme auf, von denen weiter bevorzugt jeder jeweils ein bevorzugt als Klapplager ausgebildetes Spannwellenlager aufweist. Bezüglich Spannwellen und/oder Spannwellenlagern ist die zumindest eine zweite Rollenabspulvorrichtung 330 bevorzugt analog zu der zumindest einen ersten Rollenabspulvorrichtung 320 ausgebildet.

Von der zumindest einen ersten Rollenabspulvorrichtung 320 wird der Laminierungsstoff 321 bevorzugt einer ersten Laminierungswalze 311 eines Laminierungswerks 310 zugeführt. Von der zumindest einen zweiten Rollenabspulvorrichtung 330 wird der Laminierungsstoff 331 bevorzugt einer zweiten Laminierungswalze 312 des Laminierungswerks 310 zugeführt. Die erste Laminierungswalze 311 bildet bevorzugt gemeinsam mit der zweiten Laminierungswalze 312 in ihrem gemeinsamen Anpressbereich einen ersten Laminierungsbereich 313. In dem ersten Laminierungsbereich 313 findet bevorzugt die Laminierung der insbesondere überlappend ankommenden Bogen 03 statt. Dabei entsteht bevorzugt die Materialbahn 02. Die zumindest eine erste Laminierungswalze 311 ist bevorzugt eine bevorzugt intern, beispielsweise durch Induktion, insbesondere auf zumindest 100°C beheizbare erste Laminierungswalze 311. Beispielsweise ist ein innerer Stator mit Induktionsspule und ein im Wesentlichen als Hohlzylinder ausgebildeter Rotor mit Induktionsspule angeordnet. Bevorzugt weist die zumindest eine erste Laminierungswalze 311 eine Mantelfläche aus einem verschleißfesten Material auf, beispielsweise Stahl und/oder Chrom und/oder Keramik und/oder einer verschließfesten Hartmetalllegierung wie beispielsweise WC/Co, Cr₃C₂/NiCr, NiCrBSi, WC/Ni, TiC/Ni, Molybdän oder ähnlichem, die weiter bevorzugt in einem thermischen Spritzverfahren aufgetragen wurde.

Die zumindest eine zweite Laminierungswalze 312 ist bevorzugt eine insbesondere intern, beispielsweise durch Induktion, bevorzugt auf zumindest 100°C beheizbare zweite Laminierungswalze 312. Beispielsweise ist ein innerer Stator mit Induktionsspule und ein im Wesentlichen als Hohlzylinder ausgebildeter Rotor mit Induktionsspule angeordnet. Bevorzugt weist die zumindest eine zweite Laminierungswalze 312 eine Mantelfläche aus einem relativ weichen Material auf, beispielsweise Gummi. Bevorzugt weist das Laminierungswerk entlang eines Transportwegs des Laminierungsstoffs 331 vor der zweiten Laminierungswalze 312 zumindest eine insbesondere intern, beispielsweise durch Induktion, bevorzugt auf zumindest 100°C beheizbare Heizwalze 316 auf. Beispielsweise ist ein innerer Stator mit Induktionsspule und ein im Wesentlichen als Hohlzylinder ausgebildeter Rotor mit Induktionsspule angeordnet. Die zumindest eine Heizwalze 316 dient bevorzugt dazu, den Laminierungsstoff 331 aufzuheizen. Die zumindest eine zweite Laminierungswalze 312 dient hingegen bevorzugt der Aufrechterhaltung dieser Temperatur des Laminierungsstoffs 331 und der Pressung des Laminierungsstoff 331 an die Bogen 03. Die zumindest eine erste Laminierungswalze 311 dient bevorzugt sowohl der Aufheizung des Laminierungsstoffs 321 als auch der Pressung des Laminierungsstoff 321 an die Bogen 03.

Durch die Aufheizung des Laminierungsstoff 321; 331 wird dieser bevorzugt in einen Zustand überführt, in dem eine besonders effektive Verbindung mit den Bogen 03 erreichbar ist. Beispielsweise wird dadurch ein Klebstoff aktiviert und/oder durch einen zumindest teilweisen Phasenübergang der Laminierungsstoff 321; 331 selbst haftend gemacht. Die Pressung im ersten Laminierungsbereich 313 führt zu einer besonders effektiven Verbindung zwischen Laminierungsstoff 321; 331 einerseits und Bogen 03 andererseits. Bevorzugt ist eine zusätzliche Presswalze 317 angeordnet, die insbesondere gemeinsam mit der ersten Laminierungswalze 311 in ihrem gemeinsamen Anpressbereich einen zweiten Laminierungsbereich 314 bildet. Dort wird die im ersten Laminierungsbereich 313 eingeleitete Verbindung zwischen Laminierungsstoff 321; 331 und Bogen 03 weiter intensiviert. Die Presswalze 317 ist insbesondere an die erste Laminierungswalze 311 angepresst angeordnet. Die Presswalze 317 ist bevorzugt intern insbesondere auf zumindest 100°C beheizbar ausgebildet. Bevorzugt weist die zumindest eine Presswalze 317 eine Mantelfläche aus einem relativ weichen Material auf, beispielsweise Gummi.

Bevorzugt ist die zweite Laminierungswalze 312 orthogonal zu der axialen Richtung A verlagerbar, insbesondere um ihren Kontakt mit der ersten Laminierungswalze 311 und/oder der Heizwalze 316 zu unterbrechen oder in seiner Anpresskraft zu verändern. Bevorzugt ist die Presswalze 317 orthogonal zu der axialen Richtung A verlagerbar, insbesondere um ihren Kontakt mit der ersten Laminierungswalze 311 zu unterbrechen oder in seiner Anpresskraft zu verändern. Bevorzugt weist die Laminierungsvorrichtung 300 zumindest zwei unabhängig voneinander betreibbare Antriebe auf, von denen einer zumindest der ersten Laminierungswalze 311 zugeordnet ist und von denen ein anderer zumindest der Heizwalze 316 zugeordnet ist. Beispielsweise sind die zweite Laminierungswalze 312 und/oder die Presswalze 317 über ein Getriebe mittels des selben Antriebs antreibbar, wie die erste Laminierungswalze 311.

Beispielsweise weist die Bearbeitungsmaschine 01 zumindest eine Vorheizeinrichtung 209 auf, die entlang des Transportwegs des Materials 02 vor dem ersten Laminierungsbereich 313 auf das Material 02, insbesondere die Bogen 03 einwirkt oder einzuwirken fähig ist. Dadurch kann der Prozess der Verbindung zwischen Material 02 und Laminierungsstoff 321; 331 bevorzugt verbessert werden. Entlang des Transportwegs der Materialbahn 02 nach dem Laminierungswerk 310 ist bevorzugt zumindest eine Kühleinrichtung 340 angeordnet. Die zumindest eine Kühleinrichtung 340 weist bevorzugt zumindest eine Kühlwalze 341, weiter bevorzugt zumindest eine Kühlwalze 341 je Seite der Materialbahn 02 und noch weiter bevorzugt zumindest drei Kühlwalzen 341 auf. Die Kühleinrichtung 340 dient bevorzugt einer Abkühlung der in dem Laminierungswerk 310 erzeugten und/oder laminierten Materialbahn 02.

Die Laminierungsmaschine 01 erlaubt bevorzugt einen Verfahrensvorgang zum Laminieren eines Materials 02 und insbesondere zum Wechseln zumindest einer Rolle von Laminierungsstoff 321; 331, wobei das Material 02 bevorzugt einem Laminierungswerk 310 der Laminierungsmaschine 01 zugeführt und dort bevorzugt durch Verbindung mit zumindest einem Laminierungsstoff 321; 331 laminiert wird und wobei der zumindest eine Laminierungsstoff 321; 331 dazu bevorzugt in einer als Rollenwechsler 320; 330 ausgebildeten Laminierungsquelle 320; 330 von zumindest einer Rolle abgespult wird und wobei bevorzugt zwei Rollen des zumindest einen Laminierungsstoffs 321; 331 gemeinsam um eine gemeinsame Schwenkachse 323; 333 des zumindest einen Rollenwechslers 320; 330 geschwenkt werden und zumindest eine von einer bis dahin abgespulten der zumindest zwei Rollen stammende Bahn des zumindest einen Laminierungsstoffs 321; 331 mit einer von einer ab dann abzuspulenden anderen der zumindest zwei Rollen stammenden Bahn des zumindest einen Laminierungsstoffs 321; 331 verbunden wird.

Alternativ oder zusätzlich kommt zumindest ein Verfahrensvorgang zum Laminieren eines Materials 02 zum Einsatz, wobei der zumindest eine Laminierungsstoff 321; 331 dazu bevorzugt in einer zumindest als Rollenabspulvorrichtung 320; 330 ausgebildeten Laminierungsquelle 320; 330 von zumindest einer Rolle abgespult wird und wobei der von der zumindest einen Rolle abgespulte Laminierungsstoff 321; 331 bevorzugt durch zumindest einen Bahnkantenausrichter 327 der zumindest einen Rollenabspulvorrichtung 320; 330 zumindest bezüglich der axialen Richtung A ausgerichtet wird und wobei bevorzugt eine Bahnspannung des von der zumindest einen Rolle abgespulten und um zumindest eine Tänzerwalze 326; 336 einer Bahnspannungsregelung 324; 334 der zumindest einen Rollenabspulvorrichtung 320; 330 geleiteten Laminierungsstoffs 321; 331 mittels dieser zumindest einen Tänzerwalze 326; 336 gesteuert und/oder geregelt wird. Alternativ oder zusätzlich zu der Ausrichtung des von der zumindest einen Rolle abgespulte Laminierungsstoff 321; 331 bezüglich der axialen Richtung A wird bevorzugt diese den Laminierungsstoff 321; 331 abspulende Rolle bezüglich der axialen Richtung A bewegt.

Bevorzugt werden die Bogen 03 beidseitig laminiert. Sollte keine Laminierung stattfinden. So würde sich dies darin zeigen, dass die Bogen 03 nach dem Laminierungswerk 310 nicht oder nur fehlerhaft weiter transportiert würden. Sollte jedoch ungewollt nur eine einseitige Laminierung der Bogen 03 erfolgen, so würde dennoch eine Materialbahn 02 gebildet, die aus einem bahnförmigen Laminierungsstoff 321; 331 und damit verbundenen Bogen 03 bestehen würde. Ein solcher Fehler sollte erkannt werden. Bevorzugt weist die Laminierungsmaschine 01 deshalb zumindest eine Laminierungskontrolleinrichtung 348; 349 auf. Mittels der zumindest einen Laminierungskontrolleinrichtung 348; 349 ist eine ausschließlich einseitig Laminierung einer Materialbahn 02 erkennbar.

Bevorzugt macht sich die zumindest eine Laminierungskontrolleinrichtung 348; 349 zunutze, dass die Bogen 03 geschuppt zu einer Materialbahn 02 verbunden werden. Dadurch gibt es bei jeweils zwei Bogen 03 einen Überlappungsbereich. In diesem Überlappungsbereich ist jeder Bogen 03 nur mit maximal einem Laminierungsstoff 321; 331 verbunden. Fehlt nun eine der beiden Schichten von Laminierungsstoff 321; 331, so ist ein Bogen 03 im Überlappungsbereich mit keinem Laminierungsstoff 321; 331 verbunden und lässt sich in diesem Überlappungsbereich von dem benachbarten Bogen 03 abheben. Wird nun die nur einseitig laminierte Materialbahn 02 mit ihrer laminierten Seite um eine Bahnumlenkwalze 353 umgelenkt, so steht dieser nicht mit Laminierungsstoff 321; 331 verbundene Bereich des Bogens 03 von dem benachbarten Bogen 03 ab, wenn der Überlappungsbereich um die Krümmung der Bahnumlenkwalze 353 geführt wird. Dieses Abstehen findet nur statt, weil der Bogen 03 nicht durch Laminierungsstoff 321; 331 gegen den mit ihm Überlappenden Bogen 03 gezogen wird. Das Abstehen ist also ein eindeutiger Hinweis auf ein Fehlen des Laminierungsstoffs 321; 331. Der abstehende Bereich passiert dann einen Raumbereich, den ohne Fehler kein Teil der Materialbahn 02 passieren würde. Wird nun dieser Raumbereich überwacht, so kann durch Anwesenheit eine Teils eines Bogens 03 auf fehlenden Laminierungsstoff 321; 331 geschlossen werden.

Bevorzugt weist die Laminierungsmaschine 01 zumindest eine als Bogenanleger 100 ausgebildete Materialquelle 100 für Bogen 03 eines zu laminierenden Materials 02 und zumindest ein Laminierungswerk 310 und zumindest zwei Laminierungsquellen 320; 330 für jeweils zumindest einen bahnförmigen Laminierungsstoff 321; 331 und zumindest ein Laminierungswerk 310 zum Erzeugen einer beidseitig laminierten Materialbahn 02 aus den Bogen 03 und dem jeweiligen zumindest einen Laminierungsstoff 321; 331 auf. Bevorzugt zeichnet sich die Laminierungsmaschine 01, dadurch aus, dass entlang eines für einen Transport der laminierten Materialbahn 02 vorgesehenen Transportwegs nach einem Laminierungsbereich 313; 314 des Laminierungswerks 310 zumindest eine Laminierungskontrolleinrichtung 348; 349 angeordnet ist, die einen Kontrollraumbereich überwacht, der außerhalb eines Transportraumbereichs liegt, der von dem für die laminierte Materialbahn 02 vorgesehenen Transportweg eingenommen wird.

Bevorzugt zeichnet sich die Laminierungsmaschine 01 alternativ oder zusätzlich dadurch aus, dass die zumindest eine Laminierungskontrolleinrichtung 348; 349 einen Kontrollraumbereich überwachend angeordnet ist, der zumindest teilweise einen minimalen Kontrollabstand von einer Bahnumlenkwalze 353 aufweist. Der minimale Kontrollabstand ist bevorzugt kleiner als 20 mm, weiter bevorzugt kleiner als 10 mm, noch weiter bevorzugt kleiner als 5 mm und noch weiter bevorzugt kleiner als 2 mm. Der minimale Kontrollabstand ist bevorzugt kleiner als eine Überlappungslänge benachbarter Bogen 03 innerhalb der laminierten Materialbahn 02. Dadurch ist sichergestellt, dass der abstehende Bereich erfassbar ist. Je nach Dicke der Bogen 03 und/oder des Laminierungsstoffs 321; 331 kann der minimale Kontrollabstand angepasst werden. Die Überlappungslänge benachbarter Bogen 03 ist dabei insbesondere diejenige entlang des vorgesehenen Transportwegs der Materialbahn 02 gemessene Länge, auf der sich benachbarte Bogen 03 innerhalb der laminierten Materialbahn 02 berühren, jedenfalls solange kein Bereich absteht. Die Überlappungslänge beträgt bevorzugt zumindest 2 mm, weiter bevorzugt zumindest 3 mm und noch weiter bevorzugt zumindest 4 mm und unabhängig davon bevorzugt höchstens 20 mm, weiter bevorzugt höchstens 10 mm und noch weiter bevorzugt höchstens 6 mm.

Bevorzugt zeichnet sich die Laminierungsmaschine 01 alternativ oder zusätzlich dadurch aus, dass die zumindest eine Laminierungskontrolleinrichtung 348; 349 zumindest ein Kontrollelement 351 aufweist, das als Detektor 351 ausgebildet ist. Weiter bevorzugt zeichnet sich die Laminierungsmaschine 01 alternativ oder zusätzlich dadurch aus, dass die zumindest eine Laminierungskontrolleinrichtung 348; 349 zumindest ein Kontrollelement 352 aufweist, das als Sendeeinrichtung 352 ausgebildet ist. Dann kann gezielt ein Signal ausgesendet und empfangen werden. Das Signal muss dafür bevorzugt den Kontrollraumbereich passieren. Ist in dem Kontrollraumbereich ein Hindernis, so wird das Signal nicht empfangen. Als Hindernis kommt im Wesentlichen nur der abstehende Teil eines Bogens 03 in Frage. Aus dem Ausbleiben des Signals kann dann auf ein Fehlen des Laminierungsstoffs 321; 331 geschlossen werden. Das Signal ist bevorzugt ein elektromagnetisches Signal, insbesondere ein optisches Signal, beispielsweise ein Laserstrahl. Bevorzugt zeichnet sich die Laminierungsmaschine 01 alternativ oder zusätzlich dadurch aus, dass die zumindest eine Laminierungskontrolleinrichtung 348; 349 zumindest ein Kontrollelement 351 aufweist, das als Detektor 351 für elektromagnetische Strahlung ausgebildet ist und dass die zumindest eine Laminierungskontrolleinrichtung 348; 349 zumindest ein Kontrollelement 352 aufweist, das als Sendeeinrichtung 352 für elektromagnetische Strahlung ausgebildet ist.

Bevorzugt zeichnet sich die Laminierungsmaschine 01 alternativ oder zusätzlich dadurch aus, dass ein geradliniger Teilabschnitt eines Strahlengangs zwischen dem als Sendeeinrichtung 352 ausgebildetem Kontrollelement 352 einerseits und dem als Detektor 351 ausgebildetem Kontrollelement 351 andererseits eine Mantelfläche der Bahnumlenkwalze 353 mit dem minimalen Kontrollabstand passiert. Der Strahlengang kann dabei direkt von dem als Sendeeinrichtung 352 ausgebildeten Kontrollelement 352 zu dem als Detektor 351 ausgebildeten Kontrollelement 351 verlaufen oder über zumindest einen Reflektor umgelenkt werden.

Insbesondere um sowohl ein Fehlen des ersten Laminierungsstoffs 321 als auch alternativ ein Fehlen des zweiten Laminierungsstoffs 331 feststellen zu können, zeichnet sich die Laminierungsmaschine 01 bevorzugt alternativ oder zusätzlich dadurch aus, dass die Laminierungsmaschine 01 zumindest zwei Laminierungskontrolleinrichtungen 348; 349 aufweist, von denen eine erste Laminierungskontrolleinrichtung 348 auf einer ersten Seite des für die laminierte Materialbahn 02 vorgesehenen Transportwegs angeordnet ist und von denen eine zweite Laminierungskontrolleinrichtung 349 auf einer zweiten, der ersten Seite gegenüberliegenden Seite des für die laminierte Materialbahn 02 vorgesehenen Transportwegs angeordnet ist. Weiter bevorzugt zeichnet sich die Laminierungsmaschine 01 alternativ oder zusätzlich dadurch aus, dass die erste Laminierungskontrolleinrichtung 348 einen ersten Kontrollraumbereich überwachend angeordnet ist, der zumindest teilweise einen minimalen Kontrollabstand von einer ersten Bahnumlenkwalze 353 aufweist und dass die zweite Laminierungskontrolleinrichtung 349 einen zweiten Kontrollraumbereich überwachend angeordnet ist, der zumindest teilweise einen minimalen Kontrollabstand von einer zweiten Bahnumlenkwalze 353 aufweist und dass der minimale kontrollabstand wie beschrieben kleiner ist als 20 mm, weiter bevorzugt kleiner als 10 mm, noch weiter bevorzugt kleiner als 5 mm und noch weiter bevorzugt kleiner als 2 mm und/oder kleiner ist als eine Überlappungslänge benachbarter Bogen 03 innerhalb der laminierten Materialbahn 02. Die Materialbahn 02 berührt die beiden Bahnumlenkwalzen 353 dabei bevorzugt mit unterschiedlichen Seiten, so dass jede der beiden Laminierungskontrolleinrichtungen 348; 349 ein Fehlen einer anderen Schicht von Laminierungsstoff 321; 331 erfassen kann.

Wie beschrieben weist die Laminierungsmaschine 01 bevorzugt die zumindest eine Trennvorrichtung 400 zum Abtrennen von Abschnitten 04 von der laminierten Materialbahn 02 auf. Die zumindest eine Laminierungskontrolleinrichtung 348; 349 ist bevorzugt entlang des für den Transport der laminierten Materialbahn 02 vorgesehenen Transportwegs nach einem Laminierungsbereich 313; 314 des Laminierungswerks 310 und vor der Trennvorrichtung 400 angeordnet. Dies ist der Bereich, in dem die laminierte Materialbahn 02 vorliegt. Das Vorhandensein der Laminierungsstoffe 321; 331 wird demnach bevorzugt in dem Bereich durchgeführt, in dem die Materialbahn 02 vorliegt und nicht in dem Bereich, in dem bereits wieder einzelne Abschnitte 04 vorliegen. Diese Trennvorrichtung 400 weist bevorzugt zumindest ein erstes Dehnungselement 403 auf, wobei durch Bewegung zumindest des zumindest einen ersten Dehnungselements 403 zwischen zumindest einer ersten Passierlage und zumindest einer ersten Trennlage die Trennvorrichtung 400 zwischen zumindest einem Passierzustand und zumindest einem Trennzustand umschaltbar ist und wobei zumindest eine Trennsensoreinrichtung 463 zum Erfassen einer Lücke zwischen der Materialbahn 02 und einem jeweils zuletzt abgetrennten Abschnitt 04 angeordnet ist. Somit kann sowohl die Laminierung der Bogen 03 als auch die Trennung der Abschnitte 04 von der Materialbahn 02 überwacht werden.

Das zumindest eine als Detektor 351 ausgebildete Kontrollelement 351 ist alternativ oder zusätzlich beispielsweise als Lichtreflextaster 351 ausgebildet. Damit kann ebenfalls der Kontrollraumbereich überwacht werden. In diesen Lichtreflextaster 351 eindringende Bestandteile eines Bogens 03 reflektieren direkt oder diffus Teile von elektromagnetischer Strahlung, insbesondere Licht. Diese reflektierten Teile können von dem Detektor 351 erfasst werden. Als Quelle der elektromagnetischen Strahlung ist beispielsweise wieder ein Kontrollelement 352 angeordnet, das als Sendeeinrichtung 352 ausgebildet ist. Diese Sendeeinrichtung 352 bildet beispielsweise mit dem Detektor 351 eine bauliche Einheit und kann dann besonders platzsparend angeordnet werden.

Alternativ zu optischen Sensoren ist zumindest ein Ultraschallsensor und/oder zumindest ein kapazitiver Sensor angeordnet, um den jeweiligen Kontrollraumbereich zu überwachen.

Die Bearbeitungsmaschine weist bevorzugt die zumindest eine Trennvorrichtung 400 auf. Die zumindest eine Trennvorrichtung 400 ist wie beschrieben bevorzugt zur Trennung der insbesondere laminierten Materialbahn 02 in einzelne Abschnitte 04 und/oder zum Abtrennen von Abschnitten 04 von der insbesondere laminierten Materialbahn 02 ausgebildet. Die zumindest eine Trennvorrichtung 400 weist bevorzugt zumindest eine vordere Klemmeinrichtung 406 mit zumindest einer vorderen Klemmstelle 401 und zumindest eine hintere Klemmeinrichtung 404 mit zumindest einer hinteren Klemmstelle 402 und zumindest ein erstes Dehnungselement 403 auf. Insbesondere ist die zumindest eine vordere Klemmstelle 401 entlang des vorgesehenen Transportwegs vor der zumindest einen hinteren Klemmstelle 402 angeordnet. Durch Einklemmen der Materialbahn 02 in der vorderen Klemmeinrichtung 406 und in der hinteren Klemmeinrichtung 404 und anschließende Dehnung, insbesondere Überdehnung kann ein gezieltes Reißen der Materialbahn 02 und damit ein Abtrennen einzelner Abschnitte 04 erfolgen. Bevorzugt ist durch Bewegung zumindest des zumindest einen ersten Dehnungselements 403 zwischen zumindest einer ersten Passierlage und zumindest einer ersten Trennlage die Trennvorrichtung 400 zwischen zumindest einem Passierzustand und zumindest einem Trennzustand umschaltbar. Der Passierzustand ist dabei bevorzugt ein Zustand, in dem die Dehnungselemente 403; 412; 413 es gestatten, dass die Materialbahn 02 ungehindert durch die Trennvorrichtung 400 geleitet wird, beispielsweise je nach Ausführungsform geradlinig zwischen der vorderen Klemmstelle 401 und der hinteren Klemmstelle 402 oder entlang eines Kreisbogens zwischen der vorderen Klemmstelle 401 und der hinteren Klemmstelle 402. Bevorzugt geschieht dies nur zeitweise, insbesondere um einen Vorschub zu erreichen, so dass eine nächste vorgesehene Solltrennstelle eine entsprechende Position erreicht.

Eine vertikale Referenzebene weist bevorzugt einen horizontalen Normalvektor auf. Ein Normalvektor ist insbesondere in Vektor, der orthogonal zu jeder vollständig in der entsprechenden Ebene enthaltenen Geraden orientiert ist. Weiter bevorzugt weist der Normalvektor in eine Richtung, die in oder entgegen der axialen Richtung A verläuft. Eine insbesondere jeweilige Transportlinie ist bevorzugt eine vollständig in einer insbesondere jeweiligen vertikalen Referenzebene liegende, kürzeste und jegliches Bauteil der Trennvorrichtung 400 auf einer jeweils gleichen Seite wie ein für die Materialbahn 02 und/oder die Abschnitte 04 vorgesehener Transportweg passierende oder tangierende Verbindung zwischen der zumindest einen vorderen Klemmstelle 401 einerseits und der zumindest einen hinteren Klemmstelle 402 andererseits. Unter einer gleichen Seite ist dabei insbesondere zu verstehen, dass von dem entsprechenden Bauteil aus betrachtet der Transportweg im Wesentlichen in der gleichen Richtung diesem Bauteil am nächsten ist, in der auch die Transportlinie diesem Bauteil am nächsten ist. Bevorzugt ist die Transportlinie in dem zumindest einen Trennzustand länger ist als in dem zumindest einen Passierzustand, insbesondere um zumindest 2 mm, weiter bevorzugt zumindest 4 mm und noch weiter bevorzugt zumindest 6 mm. Durch diese Verlängerung der Transportlinie insbesondere in Verbindung mit einer Klemmung der Materialbahn in der vorderen Klemmeinrichtung 406 und der hinteren Klemmeinrichtung 404 wird ein entsprechender Bereich der Materialbahn 02 gedehnt und dadurch erfolgt bevorzugt an einer vorgesehenen Solltrennstelle der Materialbahn 02 ein Abtrennen eines entsprechenden Abschnitts 04 von der Materialbahn 02. Bevorzugt ist ein Einwirkbereich des zumindest einen ersten Dehnungselements 403 entlang der Transportlinie zwischen der zumindest einen vorderen Klemmeinrichtung 406 und der zumindest einen hinteren Klemmeinrichtung 404 angeordnet.

Die Abtrennung erfolgt bevorzugt durch eine Dehnung und insbesondere Überdehnung der Materialbahn 02 und weiter bevorzugt nicht durch ein Schneiden der Materialbahn 02. Bevorzugt weist jede in der Referenzebene liegende und für einen Kontakt mit der Materialbahn 02 vorgesehene Kontaktlinie des zumindest einen ersten Dehnungselements 403 im Bereich gegebenenfalls vorhandener konvexer Krümmungen einen insbesondere in der Referenzebene liegenden kleinsten Radius auf, der zumindest 0,05 mm, bevorzugt zumindest 0,1 mm, weiter bevorzugt zumindest 0,5 mm und noch weiter bevorzugt zumindest 2 mm und noch weiter bevorzugt zumindest 10 mm beträgt. Das zumindest eine erste Dehnungselement 403 weist bevorzugt eine Kontaktfläche 462 auf, die für einen Kontakt mit der Materialbahn 02 und/oder den Abschnitten 04 vorgesehen ist. Dabei variiert der Kontaktbereich, in dem tatsächlich ein solcher Kontakt zwischen der Materialbahn 02 und dem ersten Dehnungselement 403 besteht, zyklisch. Die Kontaktlinie ist die Schnittmenge zwischen diesem Kontaktbereich einerseits der Referenzebene andererseits. In einer bevorzugten Ausführungsform weist das zumindest eine erste Dehnungselement 403 und insbesondere dessen Kontaktlinie zumindest im Kontaktbereich ausschließlich eine konvexe Krümmung auf, wobei der Krümmungsradius nicht zwangsweise überall gleich ist, sondern bevorzugt in Umfangsrichtung variiert. Dieser Krümmungsradius beträgt beispielsweise immer zumindest 0,05 mm, bevorzugt zumindest 0,1 mm, weiter bevorzugt zumindest 0,5 mm und noch weiter bevorzugt zumindest 2 mm und noch weiter bevorzugt zumindest 10 mm. Dadurch ist bevorzugt sichergestellt, dass die Materialbahn 02 durch das zumindest eine erste Dehnungselement 403 gedehnt, insbesondere überdehnt und weiter bevorzugt nicht geschnitten wird. Insbesondere ist bevorzugt das zumindest eine erste Dehnungselement 403 und weiter bevorzugt jedes Dehnungselement 403; 412; 413 nicht als Messer ausgebildet. Möglicherweise vorhandene konkave Krümmungen tragen üblicherweise nicht zur Kontaktfläche und/oder zur Kontaktlinie bei.

Beispielsweise weist die Transportlinie in dem zumindest einen Trennzustand einen kleinsten Krümmungsradius auf, der zumindest 0,05 mm, bevorzugt zumindest 0,1 mm, weiter bevorzugt zumindest 0,5 mm und noch weiter bevorzugt zumindest 2 mm und noch weiter bevorzugt zumindest 10 mm beträgt. Dann ist sichergestellt, dass auch an keiner anderen Stelle entlang der Transportlinie ein Abschneiden der Materialbahn 02 stattfindet. Insbesondere um ein kontrolliertes Reißen der Materialbahn 02 an einer gewünschten Stelle sicherzustellen, beispielsweise an der vorgesehenen Solltrennstelle, ist das zumindest eine erste Dehnungselement 403 bevorzugt so ausgebildet, dass entlang der axialen Richtung A betrachtet ein maximaler Radius des zumindest einen ersten Dehnungselements 403 zunimmt und/oder variiert. Dadurch entsteht zumindest eine Stelle, an der die Materialbahn als erstes besonders stark gedehnt wird und als erstes reißt. Der entstehende Riss breitet sich dann bevorzugt entlang des zumindest einen ersten Dehnungselements 403 und/oder entlang einer vorgesehenen Trennlinie und/oder in der axialen Richtung A aus. Bevorzugt zeichnet sich die Trennvorrichtung 400 demnach dadurch aus, dass eine erste Referenzebene und eine zweite Referenzebene in der axialen Richtung A voneinander beabstandet angeordnet sind und dass bei in der zumindest einen ersten Trennlage angeordnetem ersten Dehnungselement 403 eine insbesondere vollständig in der ersten Referenzebene liegende erste Transportlinie und eine insbesondere vollständig in der zweiten Referenzebene liegende zweite Transportlinie unterschiedlich lang sind und/oder dass ein maximaler Bewegungsradius des zumindest einen ersten Dehnungselements 403 in der ersten Referenzebene größer ist als in der zweiten Referenzebene.

Bevorzugt ist das zumindest eine erste Dehnungselement 403 exzentrisch um eine erste Dehnungsachse 414 schwenkbar und/oder rotierbar angeordnet. Auf diese Weise kann eine periodisch wiederkehrende Vergrößerung und Verkleinerung der Transportlinie auf einfache Weise mittels einer Rotationsbewegung erreicht werden. Bevorzugt weist weder die erste Klemmeinrichtung 406 noch die zweite Klemmeinrichtung 404 einen oder mehrere Greifer auf. Beispielsweise ist in Transportrichtung der Materialbahn 02 nach der zumindest einen zweiten Dehnungseinrichtung 412 und/oder nach der zumindest einen ersten Dehnungseinrichtung 403 und/oder nach der zumindest einen dritten Dehnungseinrichtung 413 zumindest eine Anlegeeinrichtung 461 angeordnet, insbesondere um das sich durch die Abtrennung ergebende vorlaufende Ende der Materialbahn 02 in die hintere Klemmstelle 402 zu leiten. Die zumindest eine Anlegeeinrichtung 461 weist beispielsweise zumindest eine insbesondere auch nach unten ausgerichtete Blasluftdüse auf. Beispielsweise ist die zumindest eine Anlegeeinrichtung 461 als zumindest ein von einer Vielzahl von Gasdüsen durchsetztes Leitblech ausgebildet, wobei diese Gasdüsen bevorzugt über eine gemeinsame Kammer verbunden und/oder weiter an einer Druckluftquelle angeschlossen sind.

In einer ersten Ausführungsform der zumindest einen Trennvorrichtung 400 weist die zumindest eine Trennvorrichtung 400 bevorzugt neben zumindest einem ersten beweglichen Dehnungselement 403 zumindest ein zweites Dehnungselement 412 und weiter bevorzugt zumindest ein drittes Dehnungselement 413 auf. Dadurch kann auch bei kleiner Bewegung der einzelnen Dehnungselemente 403; 412; 413 insgesamt eine große Dehnung der Materialbahn 02 erreicht werden. Bevorzugt zeichnet sich die zumindest eine Trennvorrichtung 400 dadurch aus, dass die zumindest eine Trennvorrichtung 400 zumindest ein zweites Dehnungselement 412 aufweist, das zwischen einer zweiten Passierlage und einer zweiten Trennlage bewegbar ist und dass die zumindest eine Trennvorrichtung 400 zumindest ein drittes Dehnungselement 413 aufweist, das zwischen einer dritten Passierlage und einer dritten Trennlage bewegbar ist. Das zumindest eine zweite Dehnungselement 412 ist entlang des für die Materialbahn 02 vorgesehenen Transportwegs bevorzugt vor dem zumindest einen ersten Dehnungselement 403 und vor dem zumindest einen dritten Dehnungselement 413 angeordnet. Das zumindest eine erste Dehnungselement 403 ist entlang des für die Materialbahn 02 vorgesehenen Transportwegs bevorzugt nach dem zumindest einen zweiten Dehnungselement 412 und vor dem zumindest einen dritten Dehnungselement 413 angeordnet. Das zumindest dritte Dehnungselement 413 ist entlang des für die Materialbahn 02 vorgesehenen Transportwegs bevorzugt nach dem zumindest einen zweiten Dehnungselement 412 und nach dem zumindest einen ersten Dehnungselement 403 angeordnet.

Das zumindest eine erste Dehnungselement 403 weist bevorzugt jederzeit einen von Null verschiedenen Abstand von dem zumindest einen zweiten Dehnungselement 412 auf, insbesondere bezüglich einer zu der axialen Richtung A orthogonalen Richtung. Das zumindest eine erste Dehnungselement 403 weist bevorzugt jederzeit einen von Null verschiedenen Abstand von dem zumindest einen dritten Dehnungselement 413 auf, insbesondere bezüglich einer zu der axialen Richtung A orthogonalen Richtung. Das zumindest eine zweite Dehnungselement 412 weist bevorzugt jederzeit einen von Null verschiedenen Abstand von dem zumindest einen dritten Dehnungselement 413 auf, insbesondere bezüglich einer zu der axialen Richtung A orthogonalen Richtung.

Dadurch ergibt sich die Möglichkeit, die unterschiedlichen Dehnungselemente 403; 412; 413 abwechselnd auf einer ersten Seite oder einer zweiten Seite der Materialbahn 02 angreifen zu lassen. Dadurch wird ein wellenförmiger Verlauf der Transportlinie im Trennzustand der zumindest einen Trennvorrichtung 400 erzeugt, der auch bei kleinen individuellen Auslenkungen der einzelnen Dehnungselement 403; 412 413 insgesamt zu einer relativ großen Dehnung der Materialbahn 02 im Bereich der Transportlinie führt. Weiter bevorzugt zeichnet sich die zumindest eine Trennvorrichtung 400 dadurch aus, dass bei in der ersten Trennlage angeordnetem erstem Dehnungselement 403 und in der zweiten Trennlage angeordnetem zweitem Dehnungselement 412 und in der dritten Trennlage angeordnetem dritten Dehnungselement 413 zumindest eine geradlinige Verbindung zwischen dem zumindest einen zweiten Dehnungselement 412 und dem zumindest einen dritten Dehnungselement 413 das zumindest eine erste Dehnungselement 403 schneidet, insbesondere im geometrischen Sinn.

Bevorzugt zeichnet sich die zumindest eine Trennvorrichtung 400 dadurch aus, dass das zumindest eine erste Dehnungselement 403 exzentrisch um eine erste Dehnungsachse 414 schwenkbar und/oder rotierbar angeordnet ist und/oder dass das zumindest eine zweite Dehnungselement 412 exzentrisch um eine zweite Dehnungsachse 416 schwenkbar und/oder rotierbar angeordnet ist und/oder dass das zumindest eine dritte Dehnungselement 413 exzentrisch um eine dritte Dehnungsachse 417 schwenkbar und/oder rotierbar angeordnet ist. Auf diese Weise kann eine periodisch wiederkehrende Vergrößerung und Verkleinerung der Transportlinie auf einfache Weise mittels mehrerer Rotationsbewegungen erreicht werden. Bevorzugt sind das zumindest eine erste Dehnungselement 403 und das zumindest eine zweite Dehnungselement 412 und das zumindest eine dritte Dehnungselement 413 mittels zumindest eines gemeinsamen Antriebs antreibbar und/oder über zumindest ein Getriebe miteinander gekoppelt. Bevorzugt ist die erste Dehnungsachse 414 von der zweiten Dehnungsachse 416 und/oder von der dritten Dehnungsachse 417 beabstandet angeordnet. Bevorzugt ist die zweite Dehnungsachse 416 von der dritten Dehnungsachse 417 beabstandet angeordnet. Bevorzugt ist die erste Dehnungsachse 414 parallel zu der zweiten Dehnungsachse 416 und/oder parallel zu der dritten Dehnungsachse 417 angeordnet. Bevorzugt ist die zweite Dehnungsachse 416 parallel zu der dritten Dehnungsachse 417 angeordnet. Bevorzugt ist die erste Dehnungsachse 414 und/oder die zweite Dehnungsachse 416 und/oder die dritte Dehnungsachse 417 parallel zu der axialen Richtung A orientiert.

Bevorzugt weist das zumindest eine zweite Dehnungselement 412 zumindest in seinem Kontaktbereich und insbesondere dessen Kontaktlinie ausschließlich eine oder mehrere konvexe Krümmungen auf, wobei der Krümmungsradius nicht zwangsweise überall gleich ist, sondern bevorzugt in Umfangsrichtung variiert. Dieser Krümmungsradius beträgt beispielsweise immer zumindest 0,05 mm, bevorzugt zumindest 0,1 mm, weiter bevorzugt zumindest 0,5 mm und noch weiter bevorzugt zumindest 2 mm und noch weiter bevorzugt zumindest 10 mm. In einer bevorzugten Ausführungsform weist das zumindest eine dritte Dehnungselement 413 zumindest in seinem Kontaktbereich und insbesondere dessen Kontaktlinie ausschließlich eine oder mehrere konvexe Krümmungen auf, wobei der Krümmungsradius nicht zwangsweise überall gleich ist, sondern bevorzugt in Umfangsrichtung variiert. Dieser Krümmungsradius beträgt beispielsweise immer zumindest 0,05 mm, bevorzugt zumindest 0,1 mm, weiter bevorzugt zumindest 0,5 mm und noch weiter bevorzugt zumindest 2 mm und noch weiter bevorzugt zumindest 10 mm. Dadurch ist sichergestellt, dass die Materialbahn 02 durch das zumindest eine zweite Dehnungselement 412 und das zumindest eine dritte Dehnungselement 413 jeweils gedehnt und nicht geschnitten wird. Insbesondere ist bevorzugt das zumindest eine zweite Dehnungselement 412 und das zumindest eine dritte Dehnungselement 413 nicht als Messer ausgebildet. Gegebenenfalls vorhandene konkave Krümmungen tragen üblicherweise nicht zur Kontaktfläche bei.

Beispielsweise ist für einen sicheren Transport der Materialbahn 02 und/oder der abgetrennten Abschnitte 04 zumindest im Bereich der zumindest einen Trennvorrichtung 400 zumindest eine Leiteinrichtung 418; 419 angeordnet. Die zumindest eine Leiteinrichtung 418; 419 ist beispielsweise als zumindest eine flächige, insbesondere starr angeordnete Leiteinrichtung 419, insbesondere als zumindest ein Leitblech 419 ausgebildet und/oder ist beispielsweise als zumindest ein Bandleitsystem 418 ausgebildet. Bevorzugt ist sowohl zumindest ein Bandleitsystem 418 als auch zumindest eine flächige, insbesondere starr angeordnete Leiteinrichtung 419 angeordnet. Bevorzugt zeichnet sich die zumindest eine Trennvorrichtung 400 alternativ oder zusätzlich dadurch aus, dass die zumindest eine Trennvorrichtung 400 zumindest ein Bandleitsystem 418 aufweist, das mehrere Transportbänder 431 aufweist, die in einer axialen Richtung A hintereinander angeordnet sind und die mit in dieser axialen Richtung A dazwischen befindlichen Zwischenräumen angeordnet sind. Das zumindest eine zweite Dehnungselement 412 in seiner zweiten Trennlage und/oder das zumindest eine dritte Dehnungselement 413 in seiner dritten Trennlage ist jeweils bevorzugt zumindest teilweise durch die Zwischenräume hindurchragend angeordnet. Auf diese Weise wird die Transportlinie weiter über die Transportbänder 431 angehoben und dadurch verlängert. Wenn dann das zumindest eine erste Dehnungselement 403 noch zwischen das zumindest eine zweite Dehnungselement 412 und das zumindest eine dritte Dehnungselement 413 eintaucht, wird die Transportlinie zusätzlich verlängert, ohne dass das zumindest eine erste Dehnungselement 403 unter die Transportbänder 431 reichen müsste.

Bevorzugt zeichnet sich die zumindest eine Trennvorrichtung 400 alternativ oder zusätzlich dadurch aus, dass das zumindest eine zweite Dehnungselement 412 in seiner zweiten Passierlage und/oder das zumindest eine dritte Dehnungselement 413 in seiner dritten Passierlage vollständig außerhalb eines Halbraums angeordnet ist, der von einer durch die Transportbänder 431 festgelegten Transportebene begrenzt wird und in dem das zumindest eine erste Dehnungselement 403 in seiner ersten Trennlage und/oder in seiner ersten Passierlage angeordnet ist. Dieser Halbraum ist bevorzugt oberhalb der Transportbänder 431 angeordnet. Unter einem Halbraum ist insbesondere derjenige Raumbereich zu verstehen, der ausschließlich von einer von einer Ebene begrenzt wird. Jede Ebene teilt also den gesamten Raum in zwei Halbräume.

Beispielsweise ist zumindest ein Leitblech 419 angeordnet, das die Materialbahn 02 und/oder die Abschnitte 04 zumindest von unten zumindest dort abstützt, wo die Zwischenräume zwischen den Transportbändern 431 angeordnet sind und zugleich kein Raum für Bewegungen irgendeines Dehnungselements 403; 412; 413 notwendig ist.

Bevorzugt zeichnet sich die zumindest eine Trennvorrichtung 400 dadurch aus, dass die zumindest eine vordere Klemmeinrichtung 406 zumindest eine vordere Zugwalze 408 oder Einlaufzugwalze 408 und zumindest eine daran angestellt und/oder anstellbare vordere Anpresswalze 407 oder Einlaufanpresswalze 407 aufweist und/oder dass die zumindest eine hintere Klemmeinrichtung 404 zumindest eine hintere Zugwalze 411 oder Auslaufzugwalze 411 und zumindest eine daran angestellte und/oder anstellbare hintere Anpresswalze 409 oder Auslaufanpresswalze 409 aufweist.

Insbesondere im Zusammenhang mit den Transportbändern 431 wird eine spezielle Ausführung der vorderen Klemmeinrichtung 406 und/oder der hinteren Klemmeinrichtung 404 bevorzugt. Diese Ausführung dient insbesondere dazu, sicherzustellen, dass auch nach einem Trennen eines Abschnitts 04 von der Materialbahn 02 ein dabei entstehendes vorlaufendes Ende der Materialbahn 02 sicher in die hintere Klemmstelle 402 und/oder entlang ihres Transportwegs geleitet wird. Bevorzugt zeichnet sich die zumindest eine Trennvorrichtung 400 dadurch aus, dass die vordere Zugwalze 408 eine erste Mehrzahl von in Umfangsrichtung umlaufenden Ausnehmungen 432 aufweist und/oder dass die vordere Anpresswalze 407 eine insbesondere mit der ersten Mehrzahl identische Mehrzahl von in Umfangsrichtung umlaufenden Ausnehmungen 433 aufweist. Durch die Ausnehmungen 432 insbesondere der vorderen Zugwalze 408 verlaufen dann bevorzugt die Transportbänder 431. Beispielsweise ist eine Tiefe der Ausnehmungen 432 der vorderen Zugwalze 408 größer als eine Dicke oder kleinste Abmessung der Transportbänder 431. Dadurch können die Transportbänder 431 in den Ausnehmungen 432 angeordnet sein, ohne mit der Materialbahn 02 oder den Abschnitte 04 in Kontakt zu gelangen oder zumindest mit nur schwacher Krafteinwirkung. Dies erlaubt eine minimale oder auch größere Differenz zwischen einer Geschwindigkeit mit der die Transportbänder 431 bewegt werden und einer Geschwindigkeit mit der die Materialbahn 02 oder die Abschnitte 04 bewegt werden und die einer Umfangsgeschwindigkeit der vorderen Zugwalze 408 und/oder der vorderen Anpresswalze 407 und/oder der hinteren Zugwalze 411 und/oder der hinteren Anpresswalze 409 entspricht. Bevorzugt sind die in Umfangsrichtungen umlaufenden Ausnehmungen 432 der vorderen Zugwalze 408 auf die axiale Richtung A bezogen schmaler ausgebildet als die in Umfangsrichtung umlaufenden Ausnehmungen 433 der vorderen Anpresswalze 407 und/oder sind die in Umfangsrichtungen umlaufenden Ausnehmungen 432 der vorderen Zugwalze 408 jeweils paarweise den in Umfangsrichtung umlaufenden Ausnehmungen 433 der vorderen Anpresswalze 407 gegenüberliegend angeordnet.

Die zumindest eine vordere Zugwalze 408 weist bevorzugt eine Mantelfläche aus einem verschleißfesten Material auf, beispielsweise Stahl und/oder Chrom und/oder Keramik und/oder einer verschließfesten Hartmetalllegierung wie beispielsweise WC/Co, Cr₃C₂/NiCr, NiCrBSi, WC/Ni, TiC/Ni, Molybdän oder ähnlichem, die weiter bevorzugt in einem thermischen Spritzverfahren aufgetragen wurde. Die zumindest eine vordere Anpresswalze 407 weist bevorzugt eine Mantelfläche aus einem relativ weichen Material auf, beispielsweise Gummi. Dadurch ist sichergestellt, dass die Materialbahn 02 und/oder die Abschnitte 04 zuverlässig vorwärts transportiert und/oder geklemmt werden und dass dennoch keine Prägung durch Kanten der Ausnehmungen 432; 433 erzeugt werden.

Bevorzugt zeichnet sich die zumindest eine Trennvorrichtung 400 dadurch aus, dass die hintere Zugwalze 411 eine insbesondere mit der ersten Mehrzahl identische Mehrzahl von in Umfangsrichtung umlaufenden Ausnehmungen 432 aufweist, die bevorzugt im Wesentlichen den Ausnehmungen 432 der vorderen Zugwalze 408 entsprechen und/oder dass die hintere Anpresswalze 409 eine insbesondere mit der ersten Mehrzahl identische Mehrzahl von in Umfangsrichtung umlaufenden Ausnehmungen 433 aufweist, die bevorzugt im Wesentlichen den Ausnehmungen 433 der vorderen Anpresswalze 408 entsprechen. Bevorzugt sind die in Umfangsrichtung umlaufenden Ausnehmungen 432 der hinteren Zugwalze 411 auf die axiale Richtung A bezogen schmaler ausgebildet als die in Umfangsrichtung umlaufenden Ausnehmungen 433 der hinteren Anpresswalze 409 und/oder sind die in Umfangsrichtungen umlaufenden Ausnehmungen 432 der hinteren Zugwalze 411 jeweils paarweise den in Umfangsrichtung umlaufenden Ausnehmungen 433 der hinteren Anpresswalze 409 gegenüberliegend angeordnet. Die zumindest eine hintere Zugwalze 411 weist bevorzugt eine Mantelfläche aus einem verschleißfesten Material auf, beispielsweise Stahl und/oder Chrom und/oder Keramik und/oder einer verschließfesten Hartmetalllegierung wie beispielsweise WC/Co, Cr₃C₂/NiCr, NiCrBSi, WC/Ni, TiC/Ni, Molybdän oder ähnlichem, die weiter bevorzugt in einem thermischen Spritzverfahren aufgetragen wurde. Die zumindest eine hintere Anpresswalze 409 weist bevorzugt eine Mantelfläche aus einem relativ weichen Material auf, beispielsweise Gummi. Beispielsweise ist eine Tiefe der Ausnehmungen 432 der hinteren Zugwalze 408 größer als die Dicke oder kleinste Abmessung der Transportbänder 431. Alternativ ist die der Ausnehmungen 432 der hinteren Zugwalze 408 genauso groß wie die Dicke oder kleinste Abmessung der Transportbänder 431.

Bevorzugt weist die vordere Zugwalze 408 einen eigenen Antriebsmotor auf, der insbesondere einer Regelung der Geschwindigkeit dient, mit der die Materialbahn 02 durch die vordere Klemmstelle 401 transportiert wird. Die vordere Anpresswalze 407 ist bevorzugt über den Kontakt mit der vorderen Zugwalze 408 passiv angetrieben. Bevorzugt weist die hintere Zugwalze 411 einen eigenen Antriebsmotor auf, der insbesondere einer Regelung der Geschwindigkeit dient, mit der die Materialbahn 02 und/oder der jeweilige Abschnitt 04 durch die hintere Klemmstelle 402 transportiert wird. Die hintere Anpresswalze 409 ist bevorzugt über den Kontakt mit der hinteren Zugwalze 411 passiv angetrieben. Bevorzugt zeichnet sich die zumindest eine Trennvorrichtung 400 alternativ oder zusätzlich dadurch aus, dass das zumindest eine erste Dehnungselement 403 und/oder das zumindest eine zweite Dehnungselement 412 und/oder das zumindest eine dritte Dehnungselement 413 über einen gemeinsamen Antrieb und/oder unabhängig von der vorderen Klemmeinrichtung 406 und/oder der hinteren Klemmeinrichtung 404 antreibbar sind.

Beispielsweise ist zumindest eine Trenneinlaufwalze 429 angeordnet, die eine korrekte Zufuhr der Materialbahn 02 zu der Trennvorrichtung 400 gewährleistet. Bevorzugt sind die Transportbänder 431 auf einem Winkel von zumindest 90° mit der hinteren Zugwalze 411 in Kontakt und werden von dieser angetrieben. Alternativ ist eine andere Walze für einen Antrieb der Transportbänder 431 zuständig, beispielsweise eine entlang des Transportwegs der Abschnitte 04 nach der hinteren Zugwalze 411 angeordnete Walze. Bevorzugt sind eine oder mehrere Umlenkwalzen 426; 427 angeordnet, die die Transportbänder 431 um die vordere Zugwalze 408 herumleiten. Dann haben die Transportbänder 431 nur wenig Kontakt mit der vorderen Zugwalze 408 und können unabhängig von dieser angetrieben werden. Bevorzugt ist zumindest eine Spannwalze 428 angeordnet, die einer Einstellbarkeit einer Spannung der Transportbänder 431 dient.

In einer alternativen zweiten Ausführungsform der Trennvorrichtung 400 weist die Trennvorrichtung 400 insbesondere an Stelle der zweiten und dritten Dehnungselemente 412; 413 zumindest einen Stützzylinder 451 auf, der zumindest einen ersten Zylinderkanal 452 aufweist. Diese Trennvorrichtung 400 weist dann bevorzugt zumindest einen mit dem Stützzylinder 451 zusammenwirkenden Dehnungszylinder 453 auf, der das zumindest eine erste Dehnungselement 403 trägt und zumindest einen zweiten Zylinderkanal 454 aufweist. Der zweite Zylinderkanal 454 erstreckt sich bevorzugt in Umfangsrichtung um zumindest 30° und weiter bevorzugt zumindest 90° und höchstens 270° und weiter bevorzugt höchstens 180° um den zumindest einen Dehnungszylinder 453. Bevorzugt weist dann die Trennvorrichtung 400 zumindest einen ersten Klemmzylinder 456 auf, der zumindest eine erste Klemmerhebung 457 aufweist, die bevorzugt in zumindest einer Klemmstellung mit dem Stützzylinder 451 die vordere Klemmeinrichtung 406 bildet. Die zumindest eine erste Klemmerhebung 457 erstreckt sich bevorzugt in Umfangsrichtung um zumindest 90° und weiter bevorzugt zumindest 180° und bevorzugt höchstens 30° und weiter bevorzugt höchstens 90° um den zumindest einen ersten Klemmzylinder 456. Bevorzugt weist dann die Trennvorrichtung 400 zumindest einen zweiten Klemmzylinder 458 auf, der zumindest eine zweite Klemmerhebung 459 aufweist, die bevorzugt in zumindest einer Klemmstellung mit dem Stützzylinder 451 die hintere Klemmeinrichtung 404 bildet. Die zumindest eine zweite Klemmerhebung 459 erstreckt sich bevorzugt in Umfangsrichtung um zumindest 90° und weiter bevorzugt zumindest 180° und bevorzugt höchstens 30° und weiter bevorzugt höchstens 90° um den zumindest einen zweiten Klemmzylinder 458. Bevorzugt sind zumindest der zumindest eine Stützzylinder 451 und der zumindest eine Dehnungszylinder 453 gemeinsam und/oder mittels eines gemeinsamen Antriebs antreibbar und/oder unabhängig von dem zumindest einen ersten Klemmzylinder 456 und/oder unabhängig von dem zumindest einen zweiten Klemmzylinder 458 antreibbar.

Der zumindest eine Stützzylinder 451 weist bevorzugt eine Mantelfläche aus einem verschleißfesten Material auf, beispielsweise Stahl und/oder Chrom und/oder Keramik und/oder einer verschließfesten Hartmetalllegierung wie beispielsweise WC/Co, Cr₃C₂/NiCr, NiCrBSi, WC/Ni, TiC/Ni, Molybdän oder ähnlichem, die weiter bevorzugt in einem thermischen Spritzverfahren aufgetragen wurde. Bevorzugt weist der Dehungszylinder 453 und/oder der erste Klemmzylinder 456 und/oder der zweite Klemmzylinder 458 jeweils eine Mantelfläche aus einem relativ weichen Material auf, beispielsweise Gummi.

Unabhängig davon, ob die zumindest eine Trennvorrichtung 400 in der ersten oder der zweiten Ausführungsform ausgebildet ist, erlaubt sie bevorzugt ein Verfahren zum Abtrennen zumindest eines Abschnitts 04 von einer Materialbahn 02. Beispielsweise werden zunächst Bogen 03 von einem Bogenstapel 102 abgenommen und vereinzelt, insbesondere soweit, dass jeder Bogen 03 zu seinen direkt benachbarten Bogen 03 einen Abstand aufweist. Danach werden die vereinzelten Bogen 03 bevorzugt einzeln ausgerichtet. Danach werden die ausgerichteten Bogen 03 bevorzugt in eine geschuppte Lage relativ zueinander gebracht. Insbesondere wird jeweils ein nachfolgender Bogen 03 teilweise unter einen vorlaufenden Bogen 03 platziert. Diese Anordnung wird Unterschuppung genannt. Danach werden die geschuppt angeordneten, aber insbesondere dennoch relativ zueinander unabhängigen Bogen 03 mittels zumindest eines Laminierungsstoffs 321; 331 zu einer Materialbahn 02 verbunden. Die Materialbahn 02 wird, insbesondere unabhängig von ihrer Entstehung, bevorzugt in zumindest einer vorderen Klemmstelle 401 zumindest einer vorderen Klemmeinrichtung 406 festgeklemmt und in zumindest einer hinteren Klemmstelle 402 zumindest einer hinteren Klemmvorrichtung 404 festgeklemmt. Eine Transportlinie ist bevorzugt eine vollständig in einer vertikalen Referenzebene liegende kürzeste jegliches Bauteil der Trennvorrichtung 400 auf einer jeweils gleichen Seite wie die Materialbahn 02 und/oder der zumindest eine Abschnitt 04 passierende oder tangierende Verbindung zwischen der zumindest einen vorderen Klemmstelle 401 einerseits und der zumindest einen hinteren Klemmstelle 402 andererseits. Zumindest ein erstes Dehnungselement 403 wird aus einer ersten Passierlage in eine erste Trennlage bewegt und dadurch wird die Transportlinie so weit gedehnt, dass der zumindest eine Abschnitt 04 von der Materialbahn 02 abreißt. Insbesondere reißt die der zumindest eine Abschnitt 04 von der Materialbahn 02 ab, indem der zumindest eine Laminierungsstoff 321; 331 reißt.

Bevorzugt reißt die Materialbahn 02 an einer jeweiligen vorgesehenen Solltrennstelle. Bevorzugt ist nach dem Reißen der abgetrennte Abschnitt 04 zunächst noch an der hinteren Klemmstelle 402 geklemmt und kann daher von der hinteren Klemmeinrichtung 402 weiter geführt und transportiert werden. Bevorzugt ist nach dem Reißen die Materialbahn 02 zumindest zunächst noch an der vorderen Klemmstelle 401 geklemmt und kann daher von der vorderen Klemmeinrichtung 401 weiter geführt und transportiert werden.

Insbesondere erfolgt die Bewegung des zumindest einen ersten Dehnungselements 403 aus der ersten Passierlage in die erste Trennlage während die Materialbahn 02 und gegebenenfalls bereits abgetrennte Abschnitte 04 entlang des Transportwegs vorwärts transportiert werden. Ein Transport der Materialbahn 02 und der abgetrennten Abschnitte 04 braucht also nicht unterbrochen zu werden. Dies wird bevorzugt dadurch ermöglicht, dass die Klemmstellen 401; 402 durch rotierende Bauteile gebildet werden.

Im Folgenden wird zunächst ein Teil eines Verfahrens beschrieben, bei dem die erste Ausführungsform der Trennvorrichtung 400 zum Einsatz kommt. Zunächst ist die Materialbahn 02 sowohl an der vorderen Klemmstelle 401 als auch an der hinteren Klemmstelle 402 geklemmt und wird wegen der Rotation der vorderen Zugwalze 408 um deren Rotationsachse 422 und der vorderen Anpresswalze 407 um deren Rotationsachse 421 und der hinteren Zugwalze 411 um deren Rotationsachse 424 und der hinteren Anpresswalze 409 um deren Rotationsachse 423 dennoch durch beide Klemmstellen 401; 402 transportiert. Während des Transports der Materialbahn 02 wird das zumindest eine zweite Dehnungselement 412 um seine zweite Dehnungsachse 416 geschwenkt und dadurch in einen Raumbereich gebracht, den zuvor die Materialbahn 02 einnimmt. Das zumindest eine zweite Dehnungselement 412 erhebt sich dadurch beispielsweise über eine von den Transportbändern 431 gebildete Ebene. Dadurch wird die Transportlinie ausgelenkt, insbesondere angehoben, und dadurch gedehnt bzw. verlängert. Bevorzugt ist eine Rotationsrichtung des zumindest einen zweiten Dehnungselements 412 so gewählt, dass das zumindest eine zweite Dehnungselement 412 in den Lagen, insbesondere Trennlagen, in denen es die Transportlinie verlängert, eine Bewegungskomponente aufweist, die parallel zu einer Transportrichtung der Materialbahn 02 verläuft. Dadurch ergibt sich bevorzugt möglichst wenig relative Bewegung zwischen der Materialbahn 02 und dem zumindest einen zweiten Dehnungselement 412. Ungewollte Beschädigungen der Materialbahn 02 werden dadurch verringert oder vermieden. Ein Winkelbereich der Bewegung des zumindest einen zweiten Dehnungselements 412, in dem das zumindest eine zweite Dehnungselement 412 zumindest teilweise über die von den Transportbändern 431 gebildete Ebene herausragt, beträgt bevorzugt zumindest 100° und weiter bevorzugt zumindest 120° und bevorzugt höchstens 150° und weiter bevorzugt höchstens 130°.

Ebenfalls während des Transports der Materialbahn 02 wird das zumindest eine dritte Dehnungselement 413 um seine dritte Dehnungsachse 417 geschwenkt und dadurch in einen Raumbereich gebracht, den zuvor die Materialbahn 02 einnimmt. Das zumindest eine dritte Dehnungselement 413 erhebt sich dadurch beispielsweise über die von den Transportbändern 431 gebildete Ebene. Dadurch wird die Transportlinie ausgelenkt, insbesondere angehoben, und dadurch gedehnt bzw. verlängert. Bevorzugt ist eine Rotationsrichtung des zumindest einen dritten Dehnungselements 413 so gewählt, dass das zumindest eine dritte Dehnungselement 413 in den Lagen, insbesondere Trennlagen, in denen es die Transportlinie verlängert, eine Bewegungskomponente aufweist, die parallel zu einer Transportrichtung der Materialbahn 02 verläuft. Dadurch ergibt sich bevorzugt möglichst wenig relative Bewegung zwischen der Materialbahn 02 und dem zumindest einen dritten Dehnungselement 413. Ungewollte Beschädigungen der Materialbahn 02 werden dadurch verringert oder vermieden. Ein Winkelbereich der Bewegung des zumindest einen dritten Dehnungselements 413, in dem das zumindest eine dritte Dehnungselement 413 zumindest teilweise über die von den Transportbändern 431 gebildete Ebene herausragt, beträgt bevorzugt zumindest 100° und weiter bevorzugt zumindest 120° und bevorzugt höchstens 150° und weiter bevorzugt höchstens 130°.

Ebenfalls während des Transports der Materialbahn 02 wird das zumindest eine erste Dehnungselement 403 um seine erste Dehnungsachse 414 geschwenkt und dadurch zumindest teilweise in einen Raumbereich gebracht, der zu dieser Zeit zwischen Teilen des zumindest einen zweiten Dehnungselements 412 und Teilen des zumindest einen dritten Dehnungselements 413 angeordnet ist. Das zumindest eine erste Dehnungselement 403 senkt sich dadurch beispielsweise zwischen das zumindest eine zweite Dehnungselement 412 und das zumindest eine dritte Dehnungselement 413. Dadurch wird die Transportlinie weiter verlängert, insbesondere indem sie in diesem Bereich an einem Anheben gehindert und/oder abgesenkt wird, und dadurch gedehnt bzw. verlängert. Bevorzugt ist eine Rotationsrichtung des zumindest einen ersten Dehnungselements 403 so gewählt, dass das zumindest eine erste Dehnungselement 403 in den Lagen, insbesondere Trennlagen, in denen es die Transportlinie verlängert, eine Bewegungskomponente aufweist, die parallel zu einer Transportrichtung der Materialbahn 02 verläuft. Dadurch ergibt sich bevorzugt möglichst wenig relative Bewegung zwischen der Materialbahn 02 und dem zumindest einen ersten Dehnungselement 403. Ungewollte Beschädigungen der Materialbahn 02 werden dadurch verringert oder vermieden. Dann zeichnet sich das Verfahren bevorzugt dadurch aus, dass zum Dehnen der Transportlinie zumindest ein zweites Dehnungselement 412 aus einer zweiten Passierlage in eine zweite Trennlage bewegt wird und/oder zumindest ein drittes Dehnungselement 413 aus einer dritten Passierlage in eine dritte Trennlage bewegt wird und die Transportlinie bezüglich ihrer Krümmung zumindest einen zusätzlichen Wendepunkt bekommt, insbesondere dadurch. Ein Wendepunkt ist dabei insbesondere ein Punkt, an dem eine Krümmung ihre Richtung und/oder ihr Vorzeihen ändert.

Durch die Verlängerung der Transportlinie wird der Abschnitt 04 von der Materialbahn 02 getrennt. Bevorzugt befindet sich die Solltrennstelle dabei bezüglich des Transportwegs der Materialbahn 02 im Bereich des zumindest einen ersten Dehnungselements 403. Der abgetrennte Abschnitt 04 wird durch die hintere Klemmeinrichtung 404 weiter transportiert. Das vorlaufende Ende der Materialbahn 02 liegt bevorzugt spätestens nach einer weiteren Bewegung der Dehnungselemente 403; 412; 413 auf den Transportbändern 431 auf und wird von diesen in die hintere Klemmeinrichtung 404 geleitet. Danach beginnt der Zyklus erneut. Während die Dehnungselemente 403; 412; 413 in ihren jeweiligen Passierlagen angeordnet sind, stehen sie bevorzugt außer Kontakt mit der Materialbahn 02. Insbesondere auf Grund des bevorzugt von den Antrieben der Klemmeinrichtungen 404; 406 unabhängigen Antriebs der Dehnungselemente 403; 412; 413 können diese nun mit erhöhter oder verringerter Geschwindigkeit betrieben werden und danach wieder entgegengesetzt beschleunigt werden. Dadurch kann die Trennvorrichtung 400 an unterschiedliche Längen zwischen Solltrennstellen und damit an unterschiedliche Längen der Bogen 03 und/oder Abschnitte 04 angepasst werden.

Bevorzugt zeichnet sich das Verfahren alternativ oder zusätzlich dadurch aus, dass das zumindest eine erste Dehnungselement 403 und/oder das zumindest eine zweite Dehnungselement 412 und/oder das zumindest eine dritte Dehnungselement 413 unabhängig von der vorderen Klemmeinrichtung 406 und/oder unabhängig von der hinteren Klemmeinrichtung 404 und/oder mit einer insbesondere jeweiligen periodisch schwankenden Winkelgeschwindigkeit angetrieben wird. Dadurch kann einerseits eine Anpassung an unterschiedliche Abschnittslängen, also unterschiedliche Solllängen der Abschnitte 03, erfolgen. Andererseits kann dadurch eine Relativgeschwindigkeit zwischen Materialbahn 02 einerseits und erstem Dehnungselement 403 und/oder zweitem Dehnungselement 412 und/oder drittem Dehnungselement 413 andererseits möglichst gering gehalten werden, insbesondere obwohl sich die Geschwindigkeit des jeweiligen Dehnungselements 403; 412; 413 wegen dessen Rotation die meiste Zeit über in eine Komponente parallel zu der Transportrichtung der Materialbahn 02 und eine dazu orthogonale Komponente aufteilt.

Bevorzugt zeichnet sich das Verfahren alternativ oder zusätzlich dadurch aus, dass eine Winkelgeschwindigkeit des zumindest einen zweiten Dehnungselements 412 während dessen Kontakt mit der Materialbahn 02 zunächst verringert und im Anschluss wieder erhöht wird und/oder bei Abstand zu der Materialbahn 02 mit in Abhängigkeit von einer vorgesehenen Abschnittslänge variierender Winkelgeschwindigkeit angetrieben wird und/oder dass eine Winkelgeschwindigkeit des zumindest einen dritten Dehnungselements 413 während dessen Kontakt mit der Materialbahn 02 zunächst verringert und im Anschluss wieder erhöht wird und/oder bei Abstand zu der Materialbahn 02 mit in Abhängigkeit von einer vorgesehenen Abschnittslänge variierender Winkelgeschwindigkeit angetrieben wird. Bevorzugt zeichnet sich das Verfahren alternativ oder zusätzlich dadurch aus, dass eine Winkelgeschwindigkeit des zumindest einen zweiten Dehnungselements 412 immer mit einer Winkelgeschwindigkeit des zumindest einen dritten Dehnungselements 413 übereinstimmt.

Die Trennvorrichtung 400 zum Abtrennen von Abschnitten 04 von einer Materialbahn 02, die wie beschrieben bevorzugt zumindest eine vordere Klemmeinrichtung 406 mit zumindest einer vorderen Klemmstelle 401 und zumindest eine hintere Klemmeinrichtung 404 mit zumindest einer hinteren Klemmstelle 402 und zumindest ein erstes Dehnungselement 403 aufweist, wobei bevorzugt durch Bewegung zumindest des zumindest einen ersten Dehnungselements 403 zwischen zumindest einer ersten Passierlage und zumindest einer ersten Trennlage die Trennvorrichtung 400 zwischen zumindest einem Passierzustand und zumindest einem Trennzustand umschaltbar ist, oder die diese Trennvorrichtung 400 aufweisende Laminierungsmaschine 01 weist bevorzugt zumindest eine Trennsensoreinrichtung 463 auf. Dies zumindest eine Trennsensoreinrichtung .463 ist bevorzugt schaltungstechnisch mit einer Maschinensteuerung der Laminierungsmaschine 01 verbunden.

Bevorzugt ist zumindest eine Trennsensoreinrichtung 463 zum Erfassen einer jeweiligen Lücke zwischen der Materialbahn 02 und dem jeweils zuletzt abgetrennten Abschnitt 04 angeordnet. Mittels dieser Trennsensoreinrichtung 463 kann somit überwacht werden, ob eine Abtrennung eines Abschnitts 04 von der Materialbahn 02 erfolgreich verlaufen ist. Bevorzugt misst die Trennsensoreinrichtung 463 dafür direkt in dem Bereich, in dem die Trennung stattfindet, also im Bereich der Trennvorrichtung 400. Bevorzugt zeichnet sich die Trennvorrichtung 400 dadurch aus, dass die zumindest eine Trennsensoreinrichtung 463 zumindest zwei Sensorelemente 464; 466; 467 aufweist und dass zumindest eine geradlinige Verbindung dieser zumindest zwei Sensorelemente 464; 466; 467 einen vorgesehenen Transportweg der Materialbahn 02 durch die Trennvorrichtung 400 schneidet. Dann kann auf eine Messung eines Signals abgezielt werden, das im Moment der Trennung ermittelt werden kann. Beispielsweise wird durch die Überdehnung und das Abreißen des Abschnitts 04 von der Materialbahn 02 zumindest für eine kurze Zeit eine schmale Lücke zwischen der Materialbahn 02 einerseits und dem gerade erst abgetrennten Abschnitt 04 andererseits erzeugt. Durch diesen Lücke kann ein Signal übermittelt werden, beispielsweise ein elektromagnetisches Signal, insbesondere ein Lichtsignal. Wenn das Signal übermittelt wird, ist dadurch bestätigt, dass die Lücke zumindest kurzzeitig bestanden hat, selbst wenn durch eine anschließende Verringerung der Transportlinie durch Bewegung der Dehnungselemente 403; 412; 413 das gerade erzeugte nachlaufende Ende des gerade abgetrennten Abschnitts 04 erneut mit einem gerade erzeugten vorlaufenden Ende der Materialbahn 02 überlappt und das Signal wieder unterbricht. Die nachfolgende Überlappung stellt die erfolgreiche Abtrennung des Abschnitts 04 nicht in Frage.

Bevorzugt zeichnet sich die Trennvorrichtung 400 dadurch aus, dass die zumindest eine Trennsensoreinrichtung 463 zumindest ein erstes Sensorelement 467 aufweist, das oberhalb eines vorgesehenen Transportwegs der Materialbahn 02 durch die Trennvorrichtung 400 angeordnet ist und dass die zumindest eine Trennsensoreinrichtung 463 zumindest ein zweites Sensorelement 464; 466 aufweist, das unterhalb des Transportwegs der Materialbahn 02 durch die Trennvorrichtung 400 angeordnet ist.

Die zumindest eine Trennsensoreinrichtung 463 weist bevorzugt zumindest ein als Detektor 464 ausgebildetes Sensorelement 464 auf, das weiter bevorzugt als zumindest ein als Detektor 464 für elektromagnetische Strahlung ausgebildet ist. Bevorzugt weist die zumindest eine Trennsensoreinrichtung 463 zumindest ein als Sendeeinrichtung 466 für elektromagnetische Strahlung ausgebildetes Sensorelement 466 auf. Beispielsweise ist die Sendeeinrichtung 466 eine Lichtquelle, insbesondere eine Leuchtdiode. Beispielsweise ist der zumindest eine Detektor 466 als Lichtsensor 466 oder Photozelle 466 ausgebildet.

Bevorzugt zeichnet sich die Trennvorrichtung 400 dadurch aus, dass die zumindest eine Trennsensoreinrichtung 463 zumindest ein als Reflektor 467 ausgebildetes Sensorelement 467 aufweist, das insbesondere als Reflektor 467 für elektromagnetische Strahlung ausgebildet ist.

Alternativ oder zusätzlich zeichnet sich die Trennvorrichtung 400 bevorzugt dadurch aus, dass zumindest ein Sensorelement 464; 466; 467 gemeinsam mit dem zumindest einen ersten Dehnungselement 403 bewegbar angeordnet ist und/oder dass zumindest ein Sensorelement 464; 466; 467 ortsfest relativ zu dem zumindest einen ersten Dehnungselement 403 angeordnet ist. Insbesondere ist bevorzugt das zumindest eine als Reflektor 467 ausgebildete Sensorelement 467 gemeinsam mit dem zumindest einen ersten Dehnungselement 403 bewegbar angeordnet und/oder ortsfest relativ zu dem zumindest einen ersten Dehnungselement 403 angeordnet. Bevorzugt ist alternativ oder zusätzlich zumindest ein Sensorelement 464; 466; 467 ortsfest relativ zu einem Gestell der Trennvorrichtung 400 angeordnet, wobei weiter bevorzugt das zumindest eine als Detektor 464 ausgebildete Sensorelement 464 ortsfest relativ zu dem Gestell der Trennvorrichtung 400 angeordnet ist und/oder das zumindest eine als Sendeeinrichtung 466 ausgebildete Sensorelement 466 ortsfest relativ zu dem Gestell der Trennvorrichtung 400 angeordnet ist.

In einer bevorzugten Ausführungsform ist der zumindest eine Detektor 464 als Sensorelement 464 ausgebildet, das unterhalb des Transportwegs der Materialbahn 02 durch die Trennvorrichtung 400 angeordnet ist und ist die zumindest eine Sendeeinrichtung 466 für elektromagnetische Strahlung als Sensorelement 466 ausgebildet, das unterhalb des Transportwegs der Materialbahn 02 durch die Trennvorrichtung 400 angeordnet und ist der zumindest eine Reflektor 467 als Sensorelement 467 ausgebildet, das oberhalb des vorgesehenen Transportwegs der Materialbahn 02 durch die Trennvorrichtung 400 angeordnet ist. Von der Sendeeinrichtung 466 ausgesendete elektromagnetische Strahlung kann dann bei entsprechender relativer Ausrichtung von dem Reflektor 467 reflektiert und auf den Detektor 464 gelenkt werden. Dies ist jedoch nur möglich, solange weder die Materialbahn 02 noch davon getrennte Abschnitte 04 den Strahlengang unterbrechen. Bevorzugt zeichnet sich die Trennvorrichtung 400 dadurch aus, dass zumindest und weiter bevorzugt ausschließlich bei in seiner Trennlage angeordnetem erstem Dehnungselement 403 ein von der Sendeeinrichtung 466 ausgehender Strahlengang von elektromagnetischer Strahlung durch einen Reflektor 467 der Trennsensoreinrichtung 463 reflektiert und auf den Detektor 464 der Trennsensoreinrichtung 463 gerichtet ist. Zum einen wird der Strahlengang durch die Materialbahn 02 unterbrochen, solange nicht eine Trennung gerade stattgefunden hat und/oder stattfindet. Zum anderen ist zumindest bei entsprechender Anordnung des Reflektors 467 an dem ersten Dehnungselement 403 auch eine Lage dieses ersten Dehnungselements 403 relevant, weil eine Reflexion nur möglich ist, wenn der Reflektor 467 gerade entsprechend ausgerichtet angeordnet ist. Eine Situation, in der eine Reflexion und damit ein Registrieren eines entsprechenden Signals möglich ist, ist bevorzugt nur gegeben, wenn das erste Dehnungselement 403 gerade in seiner Trennlage angeordnet ist und die Transportlinie gerade so weit vergrößert ist, dass ein Abschnitt 04 von der Materialbahn 02 abgerissen ist und der Überlapp an dieser Stelle aufgehoben ist und eine Lücke zwischen Materialbahn 02 und Abschnitt 04 entstanden ist. Auch für diese Überdehnung muss das erste Dehnungselement 403 bevorzugt in seiner Trennlage angeordnet sein.

Alternativ zeichnet sich die Trennvorrichtung 400 dadurch aus, dass zumindest und weiter bevorzugt ausschließlich bei in seiner Trennlage angeordnetem erstem Dehnungselement 403 eine Senderichtung von der zumindest einen Sendeeinrichtung 466 direkt auf einen Detektor 464 der Trennsensoreinrichtung 463 weist.

Im regulären Betrieb sollte dann je Bewegungszyklus zumindest des ersten Dehnungselements 403 einmal eine Bestätigung einer erfolgreichen Abtrennung eines Abschnitts 04 von der Materialbahn 02 erfolgen. Dies wird bevorzugt mittels einer Maschinensteuerung überwacht. Bei einem Ausbleiben des erwarteten Signals liegt ein Fehler vor, beispielsweise eine unvollständige oder fehlende Abtrennung. Als Reaktion wird beispielsweise der Betrieb der Trennvorrichtung 400 und/oder der Laminierungsmaschine 01 unterbrochen.

Im Folgenden wird ein Teil eines Verfahrens beschrieben, bei dem die zweite Ausführungsform der Trennvorrichtung 400 zum Einsatz kommt. Dabei zeichnet sich das Verfahren bevorzugt dadurch aus, dass das zumindest eine erste Dehnungselement 403 in seiner Trennlage eine Position einnimmt, in der es von einer geradlinigen Verbindung zwischen zwei den ersten Zylinderkanal 452 begrenzenden Kanalkanten geschnitten wird und dadurch die Transportlinie bezüglich ihrer Krümmung zumindest einen zusätzlichen Wendepunkt bekommt.

Zunächst verläuft die Materialbahn 02 zwischen der vorderen Klemmstelle 401 und der hinteren Klemmstelle 402. Die vordere Klemmstelle 401 wird durch eine vordere Klemmvorrichtung 406 festgelegt, die in diesem Fall von dem Stützzylinder 451 einerseits und dem zumindest einen ersten Klemmzylinder 456 und insbesondere dessen erster Klemmerhebung 457 andererseits gebildet wird. Die hintere Klemmstelle 402 wird durch eine hintere Klemmvorrichtung 404 festgelegt, die in diesem Fall von dem Stützzylinder 451 einerseits und dem zumindest einen zweiten Klemmzylinder 458 und insbesondere dessen zweiter Klemmerhebung 458 andererseits gebildet wird. Durch Rotation des Stützzylinders 451 und des ersten Klemmzylinders 456 und des zweiten Klemmzylinders 458 wird die Materialbahn 02 vorwärts transportiert. Bei einer entsprechenden Drehlage des zumindest einen Dehnungszylinders 453 taucht das daran befestigte erste Dehnungselement 403 in den ersten Zylinderkanal 452 des dann dem zumindest einen Dehnungszylinder 453 gegenüberliegenden Stützzylinders 451 ein. Dadurch erfolgt die Verlängerung oder Dehnung der Transportlinie und damit das Reißen der Materialbahn 02 analog zu dem Verfahren mittels der ersten Ausführungsform der zumindest einen Trennvorrichtung 400.

Der abgetrennte Abschnitt 04 wird von der hinteren Klemmstelle 402 aus weiter geleitet und an eine Einrichtung 502; 503 übergeben, die dessen sicheren Weitertransport gewährleistet, beispielsweise eine weitere Klemmstelle 503 oder ein Transportband 502 oder ein Saugband 502. Nachdem dies geschehen ist, wird beispielsweise eine Anpassung an Abschnittslängen vorgenommen, indem der zumindest eine Stützzylinder 451 und der zumindest eine Dehnungszylinder 453 kurzzeitig mit einer anderen Umfangsgeschwindigkeit rotiert werden als der erste Klemmzylinder 456 und der zweite Klemmzylinder 458. Um dies zu ermöglichen, ist bevorzugt der Umfang des ersten Klemmzylinders 456 so in die erste Klemmerhebung 457 einerseits und einen dazu abgesenkten Abschnitt 04 andererseits aufgeteilt, dass der erste Klemmzylinder 456 zeitweise außer Kontakt mit dem Stützzylinder 451 gerät. Weiterhin ist bevorzugt der Umfang des zweiten Klemmzylinders 458 so in die zweite Klemmerhebung 459 einerseits und einen dazu abgesenkten Abschnitt 04 andererseits aufgeteilt, dass der zweite Klemmzylinder 458 zeitweise, insbesondere gleichzeitig mit dem ersten Klemmzylinder 456, außer Kontakt mit dem Stützzylinder 451 gerät. Der zweite Zylinderkanal 454 des zumindest einen Dehnungszylinders 453 ist bevorzugt ebenfalls in seiner Lage und Ausdehnung in Umfangsrichtung so gewählt, dass zeitgleich auch der zumindest eine Stützzylinder 451 mit dem zumindest einen Dehnungszylinder 453 außer Kontakt gerät. Dadurch kann der Stützzylinder 451 gedreht werden ohne die Materialbahn 02 zu beeinflussen. Stattdessen findet in dieser Zeit ein Gleiten der Materialbahn auf dem Stützzylinder 451 statt. Der Stützzylinder 451 weist bevorzugt eine Öffnung oder mehrere Öffnungen zum Ansaugen und/oder Ausstoßen von Gas, insbesondere Luft auf, beispielsweise um die darauf angeordnete Materialbahn 02 und/oder den darauf angeordneten Teil des entsprechenden Abschnitts 04 gezielt festhalten und/oder lösen zu können.

Der zweite Zylinderkanal 454 des zumindest einen Dehnungszylinders 453 sowie die zweite Klemmerhebung 459 des zweiten Klemmzylinders 458 sind bevorzugt in ihrer jeweiligen Lage und Ausdehnung in Umfangsrichtung so gewählt, dass nach einem Trennen des Abschnitts 04 von der Materialbahn 02 ein vorlaufendes Ende der Materialbahn 02 sicher in die hintere Klemmstelle 402 und noch weiter bevorzugt in die nachfolgende Einrichtung 502; 503 geleitet wird, bevor der Dehnungszylinder 453 und der zweite Klemmzylinder 458 erneut mit dem Stützzylinder 451 außer Kontakt geraten.

Unabhängig von der Ausführungsform der zumindest einen Trennvorrichtung 400 erfolgt danach ein weiterer Transport der abgetrennten Abschnitte 04, insbesondere mittels einer entsprechenden Einrichtung 502, beispielsweise einem Transportband 502 und/oder einem Saugband 502. Bevorzugt werden die Abschnitte 04 nach der Trennvorrichtung 400 zumindest kurzzeitig auf eine erhöhte Geschwindigkeit gebracht, um eine Vereinzelung der Abschnitte zu erzielen. Dadurch wird ein Ablegen auf zumindest einem Auslagestapel erleichtert. Die Bearbeitungsmaschine 01 weist bevorzugt zumindest eine Bogenauslage 500 auf. Die Bogenauslage 500 ist beispielsweise als Mehrfachbogenauslage 500 ausgebildet. Die Abschnitte 04 werden bevorzugt in der Bogenauslage 500 auf einen oder mehrere Stapel abgelegt. Beispielsweise weist die Bogenauslage 500 drei Auslagestapel auf, von denen bevorzugt zwei für eine ununterbrochene Verarbeitung von Bogen 03 und/oder Abschnitten 04 vorgesehen sind und einer als Abfallstapel ausgebildet ist. Vor einem Ablegen auf einem der Stapel werden die Abschnitte 04 bevorzugt erneut abgebremst.

Die Bearbeitungsmaschine 01 weist beispielsweise zumindest eine Entsorgungseinrichtung 501; 504 auf, insbesondere für Laminierungsstoff 321; 331 und weiter bevorzugt ausschließlich für Laminierungsstoff 321; 331. Die zumindest eine Entsorgungseinrichtung 501; 504 weist beispielsweise zumindest eine Absaugeinrichtung 501 und/oder zumindest eine Zerkleinerungseinrichtung 501 und/oder zumindest eine Schneideinrichtung 504 zum Querschneiden von Laminierungsstoff 321; 331 auf. Die zumindest eine Schneideinrichtung 504 ist bevorzugt als Laserschneideinrichtung 504 ausgebildet und/oder als Heißschneideeinrichtung 504 und/oder als Schneideinrichtung 504 ausschließlich für Laminierungsstoff 321; 331 ausgebildet. Eine Heißschneideeinrichtung 504 ist insbesondere eine Einrichtung, die ein beheiztes und/oder beheizbares Element aufweist, das durch thermische Energie bei Kontakt mit dem Laminierungsstoff 321; 331 diesen durchtrennt. Die zumindest eine Schneideinrichtung 504 ist insbesondere zu unterscheiden von der Trennvorrichtung 400.

Beispielsweise weist die Schneideinrichtung 504 zumindest einen Antrieb auf, insbesondere zumindest einen elektrischen und/oder pneumatischen und/oder hydraulischen und/oder magnetischen Antrieb. Beispielsweise werden bei Betriebsbeginn der Bearbeitungsmaschine 01 zunächst zwei Bahnen von Laminierungsstoff 321; 331 in das Laminierungswerk 310 geleitet und dort zusammengefügt und durch die Trennvorrichtung 400 bis zu der Entsorgungseinrichtung 501; 504 geführt. Erst später wird damit begonnen, das zu laminierende Material 02, insbesondere die Bogen 03 zuzuführen und die eigentliche Materialbahn 02 zu erzeugen. Derjenige Teil der Bahnen des Laminierungsstoffs 321; 331, in den noch keine Bogen 03 eingearbeitet sind, wird bevorzugt mittels der Entsorgungseinrichtung 501; 504 entsorgt, beispielsweise mittels der Schneideinrichtung 504 von der restlichen Materialbahn 02 abgetrennt und/oder mittels der Absaugeinrichtung 501 abgesaugt und/oder mittels der Zerkleinerungseinrichtung 501 zerkleinert. Sobald derjenige Bereich der Materialbahn 02, der den ersten Bogen 03 enthält, im Bereich der Entsorgungseinrichtung 501; 504 ankommt, wird eine Durchtrennung zwischen dem nur aus Laminierungsstoff 321; 331 bestehenden Bereich und dem ersten auch aus Bogen 03 bestehenden Bereich vorgenommen. Bevorzugt wird dazu mittels der Schneideinrichtung 504, insbesondere Laserschneideinrichtung 504, ein Schnitt in der axialen Richtung A vorgenommen. Die Schneideinrichtung 504 durchtrennt den Laminierungsstoff 321; 331 dazu bevorzugt über seine gesamte Ausdehnung in der axialen Richtung A. Die Entsorgungseinrichtung 501; 504 entsorgt den Laminierungsstoff 321; 331 bevorzugt über seine gesamte Ausdehnung in der axialen Richtung A. Danach arbeitet die Bearbeitungsmaschine 01 im Dauerbetrieb wie bereits beschrieben.

Die Laminierungsmaschine 01, die bevorzugt zumindest eine Materialquelle 100 für zu laminierendes Material 02 aufweist und die bevorzugt zumindest ein Laminierungswerk 310 aufweist und die bevorzugt zumindest eine Laminierungsquelle 320; 330 für zumindest einen bahnförmigen Laminierungsstoff 321; 331 aufweist, zeichnet sich bevorzugt durch zumindest ein Einziehmittel 342; 343 aus. Insbesondere ist bevorzugt zumindest innerhalb des Laminierungswerks 310 zumindest zeitweise und weiter bevorzugt dauerhaft zumindest ein entlang zumindest eines Einziehwegs 344; 346 bewegbares Einziehmittel 342; 343 zum Einziehen des Laminierungsstoffs 321; 331 angeordnet und/oder anordenbar. Das jeweilige Einziehmittel 342; 343 ist insbesondere von jedem Laminierungsstoff 321; 331 unterschiedlich. Insbesondere zeichnet sich die Laminierungsmaschine 01 bevorzugt dadurch aus, dass zumindest Teile des zumindest einen Einziehwegs 344; 346 und weiter bevorzugt sämtliche Teile des zumindest einen Einziehwegs 344; 346 und/oder der gesamte Einziehweg 344; 346 auf die axiale Richtung A bezogen zu jedem Bestandteil eines für den zumindest einen Laminierungsstoff 321; 331 innerhalb des Laminierungswerks 310 vorgesehenen Transportwegs einen Abstand von zumindest 1 cm aufweisen, weiter bevorzugt zumindest 2 cm, noch weiter bevorzugt zumindest 4 cm und noch weiter bevorzugt zumindest 8 cm.

Bevorzugt zeichnet sich die Laminierungsmaschine 01 alternativ oder zusätzlich dadurch aus, dass das zumindest eine Laminierungswerk 310 zumindest eine Laminierungswalze 311; 312 und/oder zumindest eine Presswalze 317 aufweist, die jeweils paarweise in ihrem jeweiligen gemeinsamen Anpressbereich zumindest einen Laminierungsbereich 313; 314 bilden und dass zumindest eine solche Laminierungswalze 311; 312 und/oder zumindest eine solche Presswalze 317 orthogonal zu der axialen Richtung A zwischen zumindest einer Laminierungsposition und zumindest einer Einzugsposition bewegbar angeordnet ist. Durch diese Bewegbarkeit kann nicht nur eine Anpresskraft im Laminierungsbereich 313; 314 eingestellt werden, sondern auch ein Einziehen des Laminierungsstoffs 321; 331 erleichtert werden. Insbesondere kann dadurch nämlich der notwendige Platz geschaffen werden, um eine oder mehrere Bahnen von Laminierungsstoff 321; 331 hindurchzuführen, gegebenenfalls zusammen mit entsprechenden Verbindungselementen 347. Bei in der jeweiligen Einzugsposition angeordneter Laminierungswalze 311; 312 und/oder Presswalze 317 ist demnach bevorzugt in zumindest einem Laminierungsbereich 313; 314 ein Abstand zwischen den diesen Laminierungsbereich 313; 314 bildend angeordneten Laminierungswalzen 311; 312 und/oder Presswalzen 317 vorhanden, der ein Einziehen zumindest eines bahnförmigen Laminierungsmaterials 321; 331 erlaubt. Dieser Abstand beträgt bevorzugt zumindest 0,5 mm, weiter bevorzugt zumindest 1 mm, noch weiter bevorzugt zumindest 2 mm und noch weiter bevorzugt zumindest 5 mm und unabhängig davon bevorzugt höchstens 100 mm, weiter bevorzugt höchstens 50 mm, noch weiter bevorzugt höchstens 20 mm und noch weiter bevorzugt höchstens 10 mm. Die axiale Richtung A ist bevorzugt parallel zu einer Rotationsachse einer Laminierungswalze 311; 312 und/oder zu einer Rotationsachse einer Presswalze 317 orientiert.

Die Laminierungsmaschine 01 zeichnet sich bevorzugt dadurch aus, dass zumindest ein bahnförmiger Laminierungsstoff 321; 331 über zumindest ein Verbindungselement 347 mit dem zumindest einen Einziehmittel 342; 343 verbunden und/oder verbindbar ist. Dieses Verbindungselement 347 ist bevorzugt als zumindest eine Einziehspitze 347 ausgebildet.

Das zumindest eine Einziehmittel 342; 343 ist beispielsweise als endliches Einziehmittel 342; 343 ausgebildet, insbesondere als Einziehkette 342; 343 oder endliches Einziehband 342; 343. Bevorzugt ist das zumindest eine Einziehmittel 342; 343 jedoch als zumindest ein endloses Einziehmittel 342; 343 ausgebildet, insbesondere als zumindest ein Einziehband 342; 343, das weiter bevorzugt endlos ist. Bevorzugt ist das zumindest eine Einziehmittel 342; 343 dauerhaft entlang seines zumindest einen Einziehwegs 344; 346 innerhalb der Laminierungsmaschine 300 angeordnet.

Beispielsweise weist das zumindest eine Einziehmittel 342; 343 jeweils zumindest zwei vorgesehene Verbindungspunkte auf, an denen zumindest ein bahnförmiger Laminierungsstoff 321; 331 direkt und/oder über zumindest ein Verbindungselement 347 mit dem zumindest einen Einziehmittel 342; 343 verbindbar ist.

Bevorzugt zeichnet sich die Laminierungsmaschine 01 alternativ oder zusätzlich dadurch aus, dass zumindest innerhalb des Laminierungswerks 310 zumindest zeitweise und weiter bevorzugt dauerhaft zumindest zwei verschiedene entlang zumindest eines jeweiligen Einziehwegs 344; 346 bewegbare Einziehmittel 342; 343 zum insbesondere getrennten und/oder gleichzeitigen Einziehen verschiedener Laminierungsstoffe 321; 331 angeordnet und/oder anordenbar sind. Somit kann ein erstes Einziehmittel 342 den ersten Laminierungsstoff 321 einziehen, mittels dem die Bogen 03 auf einer ersten Seite laminiert werden, beispielsweise oben. Unabhängig davon kann gleichzeitig oder zeitlich versetzt ein zweites Einziehmittel 343 den zweiten Laminierungsstoff 331 einziehen, mittels dem die Bogen 03 auf einer gegenüberliegenden zweiten Seite laminiert werden, beispielsweise unten. Insbesondere um diese Unabhängigkeit zu gewährleisten zeichnet sich die Laminierungsmaschine 01 alternativ oder zusätzlich bevorzugt dadurch aus, dass die jeweiligen Einziehwege 344; 346 der zumindest zwei verschiedenen Einziehmittel 342; 343 in der axialen Richtung A voneinander beabstandet angeordnet sind und/oder dass der für den zumindest einen Laminierungsstoff 321; 331 innerhalb des Laminierungswerks 310 vorgesehene Transportweg bezüglich der axialen Richtung A zumindest abschnittsweise zwischen zumindest zwei Einziehwegen 344; 346 angeordnet ist, die jeweils einem anderen der zumindest zwei Einziehmittel 342; 343 zugeordnet sind.

Der erste Laminierungsstoff 321 stammt bevorzugt aus der ersten Laminierungsquelle 320. Der zweite Laminierungsstoff 331 stammt bevorzugt aus der zweiten Laminierungsquelle 330. Bevorzugt zeichnet sich die Laminierungsmaschine 01 alternativ oder zusätzlich dadurch aus, dass ein einem ersten Einziehmittel 342 zugeordneter erster Einziehweg 344 einer ersten Laminierungsquelle 320 zugeordnet ist und ein einem zweiten Einziehmittel 343 zugeordneter zweiter Einziehweg 346 einer zweiten Laminierungsquelle 330 zugeordnet ist. Diese Zuordnung zeigt sich beispielsweise darin, dass der erste Einziehweg 344 bis relativ nahe an die erste Laminierungsquelle 320 heranreicht. Dann kann der daraus stammende erste Laminierungsstoff 321 besonders einfach direkt oder über ein Verbindungselement 347 mit dem ersten Einziehmittel 342 verbunden werden, beispielsweise manuell oder automatisiert. Diese Zuordnung zeigt sich beispielsweise weiterhin darin, dass der zweite Einziehweg 346 bis relativ nahe an die zweite Laminierungsquelle 330 heranreicht. Dann kann der daraus stammende zweite Laminierungsstoff 331 besonders einfach direkt oder über ein Verbindungselement 347 mit dem zweiten Einziehmittel 343 verbunden werden, beispielsweise manuell oder automatisiert.

Dennoch ist bevorzugt sichergestellt, dass der erste Einziehweg 344 und der zweite Einziehweg 344 einem gleichen Laminierungswerk 310 zugeordnet sind. Somit können aus beiden Laminierungsquellen 320; 330 stammende Laminierungsstoffe 321; 331 dem gleichen Laminierungswerk 310 zugeführt werden, um dort das Material 02 beidseitig zu laminieren. Weiter bevorzugt zeichnet sich die Laminierungsmaschine 01 alternativ oder zusätzlich dadurch aus, dass der erste Einziehweg 344 und der zweite Einziehweg 346 einer gleichen Trennvorrichtung 400 der Laminierungsmaschine 01 zugeordnet sind. Dann können die beiden Laminierungsstoffe 321; 331 einzeln oder gemeinsam bis durch die Trennvorrichtung 400 geleitet werden. Noch weiter bevorzugt zeichnet sich die Laminierungsmaschine 01 alternativ oder zusätzlich dadurch aus, dass der erste Einziehweg 344 und der zweite Einziehweg 346 einer gleichen Entsorgungseinrichtung 501; 504 und/oder Schneideinrichtung 504 der Laminierungsmaschine 01 zugeordnet sind. Dann können die beiden Laminierungsstoffe 321; 331 einzeln oder gemeinsam bis zu dieser Entsorgungseinrichtung 501; 504 und/oder Schneideinrichtung 504 geleitet werden.

Bevorzugt ist zumindest ein Einziehleitelement angeordnet, mittels dem der zumindest eine Einziehweg 344; 346 des zumindest einen Einziehmittels 342; 343 festlegbar und/oder festgelegt ist. Das zumindest eine Einziehleitelement ist bevorzugt als Kettenschiene oder Umlenkrolle ausgebildet.

Bevorzugt wird ein Verfahrensvorgang zum Laminieren eines Materials 02, insbesondere von Bogen 03. Dabei wird bevorzugt zunächst zumindest ein Laminierungsstoff 321; 331 aus einer Laminierungsquelle 320; 330 durch das zumindest eine Laminierungswerk 310 und weiter bevorzugt durch die zumindest eine Kühleinrichtung 340 und/oder die zumindest eine Trenneinrichtung 400 geleitet, wobei der zumindest eine Laminierungsstoff 321; 331 zumindest teilweise entlang eines zumindest für das laminierte Material 02 vorgesehenen Transportwegs geleitet wird.

Während eines Verfahrens zum Laminieren eines bevorzugt bogenförmigen Materials 02 oder von Bogen 03 eines Materials 02 wird bevorzugt zumindest einen Einziehvorgang zum Einziehen zumindest eines bahnförmigen Laminierungsstoffs 321; 331 in zumindest ein Laminierungswerk 400 einer Laminierungsmaschine 01 vorgenommen. Der Einziehvorgang zeichnet sich bevorzugt dadurch aus, dass in dem Einziehvorgang zumindest ein Einziehmittel 342; 343 entlang eines Einziehwegs 344; 346 durch das zumindest eine Laminierungswerk 310 bewegt wird und dabei den zumindest einen bahnförmigen Laminierungsstoff 321; 331 entlang eines für diesen zumindest einen Laminierungsstoff 321; 331 vorgesehenen Transportwegs zieht und dass der Einziehweg und der vorgesehene Transportweg in der axialen Richtung A gesehen voneinander beabstandet sind.

Wie beschrieben weist das zumindest eine Laminierungswerk 310 bevorzugt zumindest eine Laminierungswalze 311; 312 und/oder zumindest eine Presswalze 317 auf, die jeweils paarweise in ihrem jeweiligen gemeinsamen Anpressbereich zumindest einen Laminierungsbereich 313; 314 bilden. Das Verfahren zeichnet sich alternativ oder zusätzlich bevorzugt dadurch aus, dass zunächst in einem Öffnungsvorgang zumindest eine solche Laminierungswalze 311; 312 und/oder zumindest eine solche Presswalze 317 orthogonal zu der axialen Richtung A aus einer Laminierungsposition in eine Einzugsposition bewegt wird. Insbesondere danach passiert in einem Passiervorgang bevorzugt ein vorlaufendes Ende des bahnförmigen Laminierungsstoffs 321; 331 den zumindest einen Laminierungsbereich 313; 314 und weiter bevorzugt beide Laminierungsbereiche 313; 314, insbesondere von dem jeweiligen Einziehmittel 342; 343 gezogen. Das Verfahren zeichnet sich alternativ oder zusätzlich bevorzugt dadurch aus, dass danach in einem Anstellvorgang die zumindest eine solche Laminierungswalze 311; 312 und/oder die zumindest eine solche Presswalze 317 orthogonal zu der axialen Richtung A aus der Einzugsposition in die Laminierungsposition bewegt wird. Weiter bevorzugt wird danach der Laminierungsvorgang begonnen.

Das Verfahren zeichnet sich alternativ oder zusätzlich bevorzugt dadurch aus, dass das zumindest eine Verbindungselement 347 zumindest einen Laminierungsbereich 313; 314 des zumindest einen Laminierungswerks 310 passiert, während zumindest eine diesen zumindest einen Laminierungsbereich 313; 314 mit festlegende Laminierungswalze 311; 312 und/oder Presswalze 317 in ihrer Einzugsposition angeordnet ist, die von einer dieser Laminierungswalze 311; 312 und/oder Presswalze 317 zugeordneten Laminierungsposition verschieden ist.

Das Verfahren zeichnet sich alternativ oder zusätzlich bevorzugt dadurch aus, dass das zumindest eine Einziehmittel in einem Verbindungsvorgang direkt oder weiter bevorzugt mittels zumindest eines Verbindungselements 347 mit dem zumindest einen bahnförmigen Laminierungsmaterial 321; 331 verbunden wird. Dies geschieht bevorzugt vor dem Passiervorgang. Die Verbindung erfolgt beispielsweise durch einhaken und/oder magnetisch und/oder durch schrauben und/oder durch schließen eines Klettverschlusses.

Das Verfahren zeichnet sich alternativ oder zusätzlich bevorzugt dadurch aus, dass nach dem Einziehvorgang das zu laminierende Material 02 dem zumindest einen Laminierungswerk 310 zugeführt und dort durch Verbindung mit dem zumindest einen bahnförmigen Laminierungsstoff 321; 331 laminiert wird. Weiter bevorzugt erfolgt dann das Abspulen und gemeinsame Schwenken und Verbinden der Bahnen der Laminierungsstoffe 321; 331 wie bereits beschrieben.

Bevorzugt beginnt nach dem Einziehen des Laminierungsstoffs 321; 331 ein Transport des zu laminierenden Materials 02 in das Laminierungswerk 310, wo eine laminierte Materialbahn 02 erzeugt wird. Das schließt nicht aus, dass das Material 02 zuvor schon in anderen Bereich der Bearbeitungsmaschine 01 bewegt wird, eine Laminierung beginnt aber bevorzugt erst dann. Bevorzugt wird ein vorlaufender Bereich des zumindest einen Laminierungsstoffs 321; 331 der Entsorgungseinrichtung 501; 504 zugeführt, beispielsweise manuell und/oder durch Ansaugen des vorlaufenden Endes des Laminierungsstoffs 321; 331. Bevorzugt handelt es sich dabei um zwei Lagen von Laminierungsstoff 321; 331, insbesondere eine aus der oberen Laminierungsquelle 320 und eine aus der unteren Laminierungsquelle 330. Der vorlaufende Bereich des zumindest einen Laminierungsstoffs 321; 331 wird bevorzugt von dem restlichen Laminierungsstoff 321; 331 und/oder von der laminierten Materialbahn 02 abgetrennt, insbesondere abgeschnitten, beispielsweise mittels der bevorzugt als Laserschneideinrichtung 504 ausgebildeten Schneideinrichtung 504. Die laminierte Materialbahn 02 wird bevorzugt entlang eines anderen Transportpfads transportiert als der vorlaufende Bereich des zumindest einen Laminierungsstoffs 321; 331. Beispielsweise wird der vorlaufende Bereich des zumindest einen Laminierungsstoffs 321; 331 nach oben abgesaugt, während die laminierte Materialbahn 02 im Wesentlichen horizontal weiter transportiert wird. Auf diese Weise kann ein Betriebsbeginn der Laminierungsmaschine 01 besonders einfach gestaltet werden, weil in nachfolgenden Bereichen, beispielsweise in der Bogenauslage 500 oder Mehrfachbogenauslage 500 keine Handhabung von blankem Laminierungsstoff 321; 331 notwendig ist, sondern nur gut oder schlecht laminierte Abschnitte 04 behandelt werden müssen, die insbesondere andere Materialeigenschaften aufweisen als blanker Laminierungsstoff 321; 331, beispielsweise eine größere Stabilität.

Bevorzugt weist die Bearbeitungsmaschine 01 zumindest eine insbesondere übergeordnete Maschinensteuerung auf. Insbesondere mittels dieser Maschinensteuerung wird bevorzugt überwacht, ob eine Überlappung der Bogen 03 korrekt ist und/oder ob eine Laminierung wie beabsichtigt verläuft und/oder ob eine Abtrennung der Abschnitte 04 von der Materialbahn 02 erfolgreich verläuft.

Die Laminierungsmaschine 01, die wie beschrieben bevorzugt zumindest eine als Bogenanleger 100 ausgebildete Materialquelle 100 für Bogen 03 eines zu laminierenden Materials 02 aufweist und bevorzugt zumindest eine Schuppungseinrichtung 200; 206; 207; 208 zum geschuppten Anordnen unlaminierter Bogen 03 zueinander aufweist und bevorzugt zumindest ein Laminierungswerk 310 zum Erzeugen einer laminierten Materialbahn 02 aus den Bogen 03 aufweist, zeichnet sich bevorzugt alternativ oder zusätzlich dadurch aus, dass entlang eines für die laminierte Materialbahn 02 vorgesehenen Transportwegs nach dem zumindest einen Laminierungswerk 310 zumindest eine Dickenkontrolleinrichtung 354 angeordnet ist, deren Kontrollbereich sich zumindest teilweise mit dem für die laminierte Materialbahn 02 vorgesehenen Transportweg überschneidet. Die zumindest eine Dickenkontrolleinrichtung 354 weist bevorzugt zumindest einen Überlappungssensor 354 auf. Bevorzugt zeichnet sich die Laminierungsmaschine 01 alternativ oder zusätzlich dadurch aus, dass die zumindest eine Dickenkontrolleinrichtung 354 zumindest einen Ultraschallsensor und/oder zumindest einen optischen Sensor aufweist.

Mittels der Dickenkontrolleinrichtung 354 lässt sich bevorzugt überprüfen, wie dick ein Material ist, das gerade in ihrem Kontrollbereich angeordnet ist. Bevorzugt verläuft der Transportweg der Materialbahn 02 und damit auch die Materialbahn 02 selbst durch diesen Kontrollbereich. Unterschiedliche Schichtungen von Materialien passieren dabei den Kontrollbereich. Als mögliche Schichtungen sind jedenfalls zu nennen: eine Schicht Bogen 03, die auf beiden Seiten laminiert ist oder eine Schicht Bogen 03, die auf nur einer von beiden Seiten laminiert ist oder ein Überlappungsbereich zweier Bogen 03, der auf nur einer Seite laminiert ist oder ein Überlappungsbereich zweier Bogen 03, der auf beiden Seiten laminiert ist. Aus der Verbindung einer ablaufenden Bahn von Laminierungsstoff 321; 331 und einer neuen abzuspulenden Bahn von Laminierungsstoff 321; 331 ergibt sich eine Verbindungsstelle, insbesondere Klebestelle. Diese Verbindungsstelle ist in der Regel dicker, als eine blanke Bahn des Laminierungsstoffs 321; 331. Die Verbindungsstelle erstreckt sich entlang des vorgesehenen Transportwegs beispielsweise über zumindest 6 mm, bevorzugt über zumindest 10 mm, weiter bevorzugt über zumindest 20 mm und noch weiter bevorzugt über zumindest 30 mm. Die Verbindungsstelle erstreckt sich unabhängig davon entlang des vorgesehenen Transportwegs beispielsweise über höchstens 300 mm, bevorzugt über höchstens 200 mm, weiter bevorzugt über höchstens 100 mm und noch weiter bevorzugt über höchstens 50 mm. Insbesondere bei beidseitiger Laminierung kann eine Verbindungsstelle an einer oberen Bahn von Laminierungsstoff 321 und/oder an einer unteren Bahn von Laminierungsstoff 331 auftreten. Die zuvor genannten möglichen Schichtungen können also noch jeweils durch eine oder zwei Verbindungsstellen anstelle einfacher Schichten von Laminierungsstoff 321; 331 modifiziert sein.

Bevorzugt zeichnet sich die Laminierungsmaschine 01 alternativ oder zusätzlich dadurch aus, dass die Dickenkontrolleinrichtung 354 zumindest dazu ausgebildet ist, zwischen einer erwarteten Dicke der laminierten Materialbahn 02 einerseits und einer dagegen erhöhten Dicke andererseits zu unterscheiden. Die erwartete Dicke ist dann beispielsweise eine Summe aus der Dicke eines Bogens und der kombinierten Dicke zweier Bahnen von Laminierungsstoff 321; 331. Diese Dicke stellt die angestrebte Dicke der Abschnitte 04 dar und entspricht im normalen Betrieb über einen großen Teil der Länge der Materialbahn 02 auch der Dicke dieser Materialbahn 02, beispielsweise über zumindest 75 % oder bevorzugt zumindest 90 % der Länge. Insbesondere wenn wie beschrieben zumindest eine Laminierungskontrolleinrichtung 348; 349 angeordnet ist, sind vor allem diejenigen Fälle von Interesse, bei denen eine größere als die erwartete Dicke auftritt. Dies sind im Wesentlichen ein erster Fall, in dem ein Überlappungsbereich den Kontrollbereich der Dickenkontrolleinrichtung 354 passiert oder ein zweiter Fall, in dem zumindest eine Verbindungsstelle den Kontrollbereich der Dickenkontrolleinrichtung 354 passiert oder ein dritter Fall, in dem sowohl ein Überlappungsbereich als auch gleichzeitig zumindest eine Verbindungsstelle den Kontrollbereich der Dickenkontrolleinrichtung 354 passiert.

Die Überlappungslänge, also insbesondere die Überlappungslänge benachbarter Bogen 03, ist diejenige entlang des vorgesehenen Transportwegs der Materialbahn 02 gemessene Länge, auf der sich benachbarte Bogen 03 innerhalb der laminierten Materialbahn 02 berühren.

Ein Dickensignale ist bevorzugt ein Signal, das eine gegenüber der erwarteten Dicke der laminierten Materialbahn 02 erhöhte Dicke charakterisiert. In dem ersten Fall erstreckt sich derjenige längs des vorgesehenen Transportwegs gemessene Bereich, über den zumindest ein Dickensignal erzeugt wird, im Wesentlichen über den Überlappungsbereich, also die Überlappungslänge. In dem zweiten Fall erstreckt sich derjenige längs des vorgesehenen Transportwegs gemessene Bereich, über den zumindest ein Dickensignal erzeugt wird, im Wesentlichen über die Verbindungsstelle. In dem dritten Fall erstreckt sich derjenige längs des vorgesehenen Transportwegs gemessene Bereich, über den zumindest ein Dickensignal erzeugt wird, ebenfalls im Wesentlichen über die Verbindungsstelle oder ist noch länger, je nach relativer Lage von Überlappungsbereich und Verbindungsstelle. Die Länge des längs des vorgesehenen Transportwegs gemessenen Bereichs, über den zumindest ein Dickensignal erzeugt wird, wird beispielsweise anhand der zeitlichen Länge des Dickensignals und der Transportgeschwindigkeit der Materialbahn 02 ermittelt. Bevorzugt wird die Länge des längs des vorgesehenen Transportwegs gemessenen Bereichs, über den zumindest ein Dickensignal erzeugt wird, jedoch aus einem zurückgelegten Winkel einer für einen Transport der laminierten Materialbahn 02 vorgesehenen Transportwalze 311; 312; 341; 353; 407; 408; 429 und deren Radius ermittelt. Also solche Transportwalze 311; 312; 341; 353; 407; 408; 429 dient beispielsweise die erste Laminierungswalze 311 und/oder die zweite Laminierungswalze 312 und/oder die zumindest eine Kühlwalze 341 und/oder die zumindest eine Bahnumlenkwalze 353 und/oder die zumindest eine vordere Anpresswalze 407 oder Einlaufanpresswalze 407 und/oder die zumindest eine vordere Zugwalze 408 oder Einlaufzugwalze 408 und/oder die zumindest eine Trenneinlaufwalze 429.

Bevorzugt zeichnet sich die Laminierungsmaschine 01 alternativ oder zusätzlich dadurch aus, dass die Laminierungsmaschine 01 die Maschinensteuerung aufweist und dass die zumindest eine Dickenkontrolleinrichtung 354 mit der Maschinensteuerung der Laminierungsmaschine 01 schaltungstechnisch verbunden ist. Weiter bevorzugt zeichnet sich die Laminierungsmaschine 01 alternativ oder zusätzlich dadurch aus, dass die Laminierungsmaschine 01 zumindest eine für einen Transport der laminierten Materialbahn 02 vorgesehene Transportwalze 311; 312; 341; 353; 407; 408; 429 aufweist und dass zumindest eine Winkellagekontrolleinrichtung angeordnet ist, mittels der eine auf eine Rotationsachse der Transportwalze 311; 312; 341; 353; 407; 408; 429 bezogene Winkellage der Transportwalze 311; 312; 341; 353; 407; 408; 429 erfassbar ist, insbesondere direkt oder indirekt erfassbar. Bevorzugt ist die zumindest eine Winkellagekontrolleinrichtung mit der Maschinensteuerung der Laminierungsmaschine 01 schaltungstechnisch verbunden. Die zumindest eine Winkellagekontrolleinrichtung ist beispielsweise als Teil des Antriebs der Transportwalze 311; 312; 341; 353; 407; 408; 429 und/oder als zusätzlicher Sensor, insbesondere Drehgeber, ausgebildet.

Bevorzugt zeichnet sich die Laminierungsmaschine 01 alternativ oder zusätzlich dadurch aus, dass zumindest ein Antrieb der zumindest einen Schuppungseinrichtung 200; 206; 207; 208 mit der Maschinensteuerung der Laminierungsmaschine 01 schaltungstechnisch verbunden ist. Beispielsweise kann dadurch ein Zeitfenster und/oder ein Ortsfenster ermittelt werden in dem ein Überlappungsbereich am Ort der Dickenkontrolleinrichtung 354 erwartet wird, insbesondere wenn berücksichtigt, wann und wo eine Schuppung stattfindet oder stattgefunden hat. Somit lässt sich bei Auftreten eines Dickensignals feststellen, ob an dieser Fundstelle ein Überlappungsbereich liegen sollte.

Wenn an dieser Fundstelle kein Überlappungsbereich liegen sollte, stammt das Dickensignal von einer Verbindungsstelle. Dies lässt sich anhand der Länge des dem Dickensignal zugeordneten Bereichs überprüfen. Liegt nur eine Verbindungsstelle und damit der zweite Fall vor, wird der dieser Verbindungsstelle zugeordnete Bogen bevorzugt aussortiert, beispielsweise mittels der Mehrfachbogenauslage.

Wenn an dieser Fundstelle ein Überlappungsbereich liegen sollte, stammt das Dickensignal von dem bloßen Überlappungsbereich oder von einer Kombination aus Überlappungsbereich und Verbindungsstelle. Dies lässt sich anhand der Länge des dem Dickensignal zugeordneten Bereichs überprüfen. Liegt eine Verbindungsstelle vor, so liegt diese ebenfalls auf dem Überlappungsbereich. Der dritte Fall liegt vor. An einer solchen Fundstelle bzw. Verbindungsstelle ist eine Abtrennung eines Abschnitts 04 von der Materialbahn 02 riskant oder nicht möglich. In der Konsequenz wird bevorzugt ein Transport der laminierten Materialbahn 02 so angehalten, dass diese Verbindungsstelle an einer für Bedienpersonen zugänglichen Ort liegt und manuell entfernt werden kann. Liegt hingegen keine Verbindungsstelle vor, so kann aus der Länge des dem Dickensignal zugeordneten Bereichs auf die Überlappungslänge geschlossen werden. Wenn diese von einem Sollwert zu stark abweicht, wird bevorzugt Einfluss auf die Schuppungseinrichtung 200; 206; 207; 208 genommen, um nachfolgende Überlappungen besser durchzuführen.

Bevorzugt zeichnet sich die Laminierungsmaschine 01 alternativ oder zusätzlich dadurch aus, dass die zumindest eine Dickenkontrolleinrichtung 354 mit der Maschinensteuerung der Laminierungsmaschine 01 derart schaltungstechnisch verbunden ist, dass eine Steuerung und/oder Regelung des zumindest einen Antriebs der Schuppungseinrichtung 200; 206; 207; 208 mittels von der Dickenkontrolleinrichtung 354 stammender Signale beeinflussbar ist. Auf diese Weise kann die Schuppungseinrichtung 200; 206; 207; 208 bezüglich der Überlappungslänge geregelt werden.

Bevorzugt zeichnet sich die Laminierungsmaschine 01 alternativ oder zusätzlich dadurch aus, dass die Laminierungsmaschine 01 entlang des für die laminierte Materialbahn 02 vorgesehenen Transportwegs nach dem zumindest einen Laminierungswerk 310 und weiter bevorzugt auch nach dem zumindest einen Überlappungssensor 354 die zumindest eine Trennvorrichtung 400 zum Abtrennen von Abschnitten 04 von der laminierten Materialbahn 02 aufweist. Weiter bevorzugt zeichnet sich die Laminierungsmaschine 01 alternativ oder zusätzlich dadurch aus, dass zumindest ein Antrieb der zumindest einen Trennvorrichtung 400 mit der Maschinensteuerung der Laminierungsmaschine 01 schaltungstechnisch verbunden ist und dass die zumindest eine Dickenkontrolleinrichtung 354 mit der Maschinensteuerung der Laminierungsmaschine 01 derart schaltungstechnisch verbunden ist, dass eine Steuerung und/oder Regelung des zumindest einen Antriebs der zumindest einen Trennvorrichtung 400 mittels von der Dickenkontrolleinrichtung 354 stammender Signale beeinflussbar ist.

Weiter bevorzugt zeichnet sich die Laminierungsmaschine 01 alternativ oder zusätzlich dadurch aus, dass zumindest ein zum Transport der laminierten Materialbahn 02 vorgesehener Antrieb mit der Maschinensteuerung der Laminierungsmaschine 01 schaltungstechnisch verbunden ist und dass die zumindest eine Dickenkontrolleinrichtung 354 mit der Maschinensteuerung der Laminierungsmaschine 01 derart schaltungstechnisch verbunden ist, dass eine Steuerung und/oder Regelung des zumindest einen zum Transport der laminierten Materialbahn 02 vorgesehenen Antriebs mittels von der Dickenkontrolleinrichtung 354 stammender Signale beeinflussbar ist.

Dann kann bei Auftreten eines bloßen Überlappungsbereichs, also in dem ersten Fall, überprüft werden, ob die Lage des Überlappungsbereichs und die Taktung der Trennvorrichtung 400 derart aufeinander abgestimmt sind, dass eine Trennung erfolgreich durchführbar ist. Andernfalls kann durch Beschleunigung und/oder Abbremsen der Materialbahn 02 und/oder durch veränderte Ansteuerung der Dehnungselemente 403; 412; 413 korrigierend eingegriffen werden.

Bevorzugt zeichnet sich das Verfahren zum Laminieren von Bogen 03 eines Materials 02 mittels einer Laminierungsmaschine 01 alternativ oder zusätzlich zu bereits beschriebenen Vorgängen dadurch aus, dass die Bogen 03 zunächst mittels einer Vereinzelungseinrichtung 200; 202 räumlich voneinander getrennt werden und/oder dass die Bogen 03 ausgerichtet werden und/oder dass die Bogen 03 insbesondere nach deren räumlichen Trennung mittels einer Schuppungseinrichtung 200; 206; 207; 208 in eine nur teilweise miteinander überlappende Lage zueinander gebracht werden. Bevorzugt zeichnet sich das Verfahren alternativ oder zusätzlich dadurch aus, dass die Bogen 03 dem Laminierungswerk 310 der Laminierungsmaschine 01 zugeführt und dort in der zueinander überlappenden Lage durch Verbindung mit zumindest einem insbesondere bahnförmigen Laminierungsstoff 321; 331 laminiert und zu einer laminierten Materialbahn 02 verbunden werden.

Bevorzugt zeichnet sich das Verfahren alternativ oder zusätzlich dadurch aus, dass mittels zumindest einer Dickenkontrolleinrichtung 354 einer Dicke der laminierten Materialbahn 02 kontrolliert wird und dass die Dickenkontrolleinrichtung 354 einer Maschinensteuerung der Laminierungsmaschine 01 bei einer gegenüber einer erwarteten Dicke der laminierten Materialbahn 02 erhöhten Dicke zumindest ein Dickensignal oder mehrere Dickensignale sendet, das oder die diese gegenüber der erwarteten Dicke der laminierten Materialbahn 02 erhöhte Dicke charakterisiert oder charakterisieren.

Bevorzugt zeichnet sich das Verfahren alternativ oder zusätzlich dadurch aus, dass die laminierte Materialbahn 02 mittels der Trennvorrichtung 400 der Laminierungsmaschine 01 in Abschnitte 04 geteilt wird und dass Trennsignale Signale sind, die eine Bewegung zumindest eines Antriebs der Trennvorrichtung 400 charakterisieren. Die Trennsignale werden bevorzugt zumindest an die Maschinensteuerung der Laminierungsmaschine 01 geleitet. Weiter bevorzugt wird insbesondere mittels der Maschinensteuerung der Laminierungsmaschine 01 eine gemeinsame Auswertung von Trennsignalen einerseits und Dickensignalen andererseits vorgenommen. Das jeweilige Trennsignal charakterisiert dabei beispielsweise eine Lage eines Dehnungselements 403; 412; 413, insbesondere unabhängig von tatsächlich stattfindenden Trennungen.

Bevorzugt zeichnet sich das Verfahren alternativ oder zusätzlich dadurch aus, dass bei einer von einer erwarteten Soll-Abfolge abweichenden relativen Abfolge von Trennsignalen einerseits und Dickensignalen andererseits eine Transportgeschwindigkeit der laminierten Materialbahn 02 zumindest zeitweise verändert wird, insbesondere aufgrund der von der erwarteten Soll-Abfolge abweichenden relativen Abfolge von Trennsignalen einerseits und Dickensignalen andererseits. Gegebenenfalls werden dann weitere Anpassungen vorgenommen, beispielsweise bezüglich der Antriebe des Bogenanlegers 100 und/oder der Schuppungseinrichtung 200; 206; 207; 208.

Alternativ oder zusätzlich zeichnet sich das Verfahren bevorzugt dadurch aus, dass bei einer von einer erwarteten Soll-Abfolge abweichenden relativen Abfolge von Trennsignalen einerseits und Dickensignalen andererseits unter Berücksichtigung dieser Abweichung eine Regelung zumindest eines Antriebs der Trennvorrichtung 400 beeinflusst wird. Dann kann der Transport der Materialbahn 02 weniger oder gar nicht beeinflusst werden und stattdessen die Bewegung der Dehnungselemente 403; 412; 413 daran angepasst werden.

Bevorzugt zeichnet sich das Verfahren alternativ oder zusätzlich dadurch aus, dass auf Grundlage zumindest eines Dickensignals oder weiter bevorzugt jedes Dickensignals eine jeweilige Überlappungslänge ermittelt wird. Weiter bevorzugt zeichnet sich das Verfahren alternativ oder zusätzlich dadurch aus, dass die jeweilige Überlappungslänge mit zumindest einem Schuppungsreferenzwert verglichen wird und unter Berücksichtigung dieses Vergleichs eine Regelung zumindest eines Antriebs der Schuppungseinrichtung 200; 206; 207; 208 beeinflusst wird und/oder dass die jeweilige Überlappungslänge mit zumindest einem Verbindungsreferenzwert verglichen wird und unter Berücksichtigung dieses Vergleichs ein Ausschleusen eines später von der Materialbahn 02 abgetrennten Abschnitts 03 erfolgt und/oder eine Transportgeschwindigkeit der laminierten Materialbahn 02 reduziert wird, insbesondere bis zum Stillstand der Materialbahn 02, bevorzugt in einem vorgewählten Lagebereich.

Wie beschrieben zeichnet sich das Verfahren alternativ oder zusätzlich bevorzugt dadurch aus, dass der zumindest eine Laminierungsstoff 321; 331 in einer als Rollenabspulvorrichtung 320; 330 und/oder als Rollenwechsler 320; 330 ausgebildeten Laminierungsquelle 320; 330 von zumindest einer Rolle abgespult wird.

Die Maschinensteuerung verfügt alternativ oder zusätzlich bevorzugt über eine elektronische Leitachse und insbesondere zu jedem Zeitpunkt über Informationen, an welcher Stelle sich gerade Bogen 03 und/oder Abschnitte 04 befinden und/oder zu welchem Zeitpunkt Bogen 03 und/oder Abschnitte 04 an einer bestimmten Stelle ankommen sollen. Die zumindest eine Überlappungskontrolleinrichtung kann dann eine Ankunft eines Bogens 03 und/oder Abschnitts 04 in ihrem Kontrollbereich erfassen. Bei Abweichungen von sich aus den berechneten Daten der Maschinensteuerung ergebenden Szenarien wird bevorzugt eine entsprechende Konsequenz gezogen, beispielsweise zumindest ein Antrieb beeinflusst und/oder zumindest eine Fehlermeldung erzeugt und/oder die Bearbeitungsmaschine 01 zumindest teilweise und bevorzugt vollständig angehalten.

Beispielsweise ist zumindest ein Inspektionssystem angeordnet, das eingehende Bogen 03 auf deren vorausgehende Bearbeitung überprüft und/oder das ausgehende Abschnitte 04 auf deren Bearbeitung hin überprüft.

Die Bogen 03 sind bevorzugt Wertpapierbogen 03 und/oder Banknotenbogen 03. Die Abschnitte 04 sind bevorzugt Wertpapierabschnitte 04 und/oder Banknotenabschnitte 04. Bevorzugt tragen die Bogen 03 jeweils mehrere Nutzen von Druckgütern, insbesondere mehrere Nutzen von Wertpapieren und/oder mehrere Nutzen von Banknoten. Bevorzugt tragen die Abschnitte 04 jeweils mehrere Nutzen von Druckgütern, insbesondere mehrere Nutzen von Wertpapieren und/oder mehrere Nutzen von Banknoten. Bevorzugt trägt die Materialbahn 02 jeweils mehrere Nutzen von Druckgütern, insbesondere mehrere Nutzen von Wertpapieren und/oder mehrere Nutzen von Banknoten.

Beispielsweise erfolgt bei unterschiedlich langen Bogen 03 eine Anpassung der Bewegungssequenzen der am Transport der Bogen 03 und der Materialbahn 02 und der Abschnitte 04 beteiligten Bauteile. Beispiele für solche Bauteile sind die Vorbereitungseinrichtung 200 und/oder die Vereinzelungseinrichtung 200 und/oder die Ausrichtungseinrichtung 200 und/oder die Schuppungseinrichtung 200 und/oder die Unterschuppungseinrichtung 200 und/oder die Bogenanlage 200 und/oder die Stopptrommel 201 oder Saugtrommel 201 und/oder die Saugtrommel 202 oder Beschleunigungstrommel 202 und/oder das Saugband 204 und/oder die Unterschubtrommel 206 und/oder die Hubvorrichtung 207; 208 oder Blasdüse 207 oder Klöppelwalze 207 oder Saugvorrichtung 208 oder Saugdüse 208 und/oder das erste Dehnungselement 403 und/oder das zweite Dehnungselement 412 und/oder das dritte Dehnungselement 413. Dazu kann die Länge der Bogen 03 von Hand eingegeben, mittels eines Sensors gemessen oder aus Auftragsdaten abgefragt werden. In der Folge werden passende Bewegungssequenzen aus einer vorgegebenen Auswahl ausgewählt und/oder neu berechnet. Für unterschiedliche breite Bogen 03 können beispielsweise Zonen von Saug- oder Blaseinrichtungen abgeschaltet werden.

### Bezugszeichenliste

- 01: Bearbeitungsmaschine, Laminierungsmaschine
- 02: Material, Flachmaterial, Materialbahn
- 03: Material, Bogen, Wertpapierbogen, Banknotenbogen
- 04: Abschnitt
- 05: -
- 06: Überlappungsbereich

- 100: Bogenanleger
- 101: Förderstrecke, Bändertisch
- 102: Bedruckstoffgebinde, Bogenstapel

- 200: Vorbereitungseinrichtung, Vereinzelungseinrichtung, Ausrichtungseinrichtung, Schuppungseinrichtung, Unterschuppungseinrichtung, Bogenanlage
- 201: Stopptrommel, Saugtrommel
- 202: Saugtrommel, Beschleunigungstrommel
- 203: -
- 204: Saugband
- 205: -
- 206: Unterschubtrommel
- 207: Hubvorrichtung, Blasdüse, Klöppelwalze
- 208: Hubvorrichtung, Saugvorrichtung, Saugdüse
- 209: Vorheizeinrichtung

- 300: Laminierungsvorrichtung

- 310: Verbindungseinrichtung, Laminierungswerk,
- 311: Laminierungswalze, erste, Transportwalze
- 312: Laminierungswalze, zweite, Transportwalze
- 313: Laminierungsbereich, erster
- 314: Laminierungsbereich, zweiter
- 315: -
- 316: Heizwalze
- 317: Presswalze
- 318: -
- 319: -
- 320: Laminierungsquelle, Rollenabspulvorrichtung, Rollenwechsler, erste, obere
- 321: Laminierungsstoff, erster
- 322: Rollenhalteplatz, erster
- 323: Schwenkachse, erste
- 324: Bahnspannungsregelung, erste
- 325: -
- 326: Tänzerwalze, erste
- 327: Bahnkantenausrichter, erster
- 328: Tänzerhebel, erster
- 329: -
- 330: Laminierungsquelle, Rollenabspulvorrichtung, Rollenwechsler, zweite, untere
- 331: Laminierungsstoff, zweiter
- 332: Rollenhalteplatz, zweiter
- 333: Schwenkachse, zweite
- 334: Bahnspannungsregelung, zweite
- 335: -
- 336: Tänzerwalze, zweite
- 337: Bahnkantenausrichter, zweiter
- 338: Tänzerhebel, zweiter
- 339: -
- 340: Kühleinrichtung

- 341: Kühlwalze, Transportwalze
- 342: Einziehmittel, Einziehkette, Einziehband, erstes
- 343: Einziehmittel, Einziehkette, Einziehband, zweites
- 344: Einziehweg, erster
- 345: -
- 346: Einziehweg, zweiter
- 347: Verbindungselement, Einziehspitze
- 348: Laminierungskontrolleinrichtung, erste
- 349: Laminierungskontrolleinrichtung, zweite
- 350: -
- 351: Kontrollelement, Detektor, Lichtreflextaster
- 352: Kontrollelement, Sendeeinrichtung
- 353: Bahnumlenkwalze, Transportwalze
- 354: Dickenkontrolleinrichtung, Überlappungssensor

- 400: Trennvorrichtung
- 401: Klemmstelle, vordere
- 402: Klemmstelle, hintere
- 403: Dehnungselement, erstes
- 404: Klemmeinrichtung, hintere
- 405: -
- 406: Klemmeinrichtung, vordere
- 407: Anpresswalze, Einlaufanpresswalze, vordere, Transportwalze
- 408: Zugwalze, Einlaufzugwalze, vordere, Transportwalze
- 409: Anpresswalze, Auslaufanpresswalze, hintere
- 410: -
- 411: Zugwalze, Auslaufzugwalze, hintere
- 412: Dehnungselement, zweites
- 413: Dehnungselement, drittes
- 414: Dehnungsachse, erste
- 415: -
- 416: Dehnungsachse, zweite
- 417: Dehnungsachse, dritte
- 418: Leiteinrichtung, Bandleitsystem
- 419: Leiteinrichtung, Leitblech, flächig
- 420: -
- 421: Rotationsachse (407)
- 422: Rotationsachse (408)
- 423: Rotationsachse (409)
- 424: Rotationsachse (411)
- 425: -
- 426: Umlenkwalze
- 427: Umlenkwalze
- 428: Spannwalze
- 429: Trenneinlaufwalze, Transportwalze
- 430: -
- 431: Transportband (418)
- 432: Ausnehmung (408)
- 433: Ausnehmung (407)

- 451: Stützzylinder
- 452: Zylinderkanal, erster (451)
- 453: Dehnungszylinder
- 454: Zylinderkanal, zweiter (453)
- 455: -
- 456: Klemmzylinder, erster
- 457: Klemmerhebung, erste
- 458: Klemmzylinder, zweiter
- 459: Klemmerhebung, zweite
- 460: -
- 461: Anlegeeinrichtung
- 462: Kontaktfläche (403)
- 463: Trennsensoreinrichtung
- 464: Sensorelement, Detektor
- 465: -
- 466: Sensorelement, Sendeeinrichtung
- 467: Sensorelement, Reflektor

- 500: Bogenauslage, Mehrfachbogenauslage
- 501: Entsorgungseinrichtung, Absaugeinrichtung, Zerkleinerungseinrichtung
- 502: Einrichtung, Transportband, Saugband
- 503: Einrichtung, Klemmstelle
- 504: Entsorgungseinrichtung, Schneideinrichtung, Laserschneideinrichtung, Heißschneideeinrichtung

- A: Richtung, axial

## Patentansprüche

1. Laminierungsmaschine (01), wobei die Laminierungsmaschine (01) zumindest eine als Bogenanleger (100) ausgebildete Materialquelle (100) für zu laminierendes Material (02) aufweist und wobei die Laminierungsmaschine (01) zumindest ein Laminierungswerk (310) aufweist und wobei die Laminierungsmaschine (01) zumindest eine erste Laminierungsquelle (320) für Laminierungsstoff (321) aufweist und wobei die Laminierungsmaschine (01) zumindest eine zweite Laminierungsquelle (330) für Laminierungsstoff (331) aufweist und wobei die Laminierungsmaschine (01) zumindest eine Trennvorrichtung (400) zum Abtrennen von Abschnitten (04) von einer laminierten Materialbahn (02) aufweist, **dadurch gekennzeichnet, dass** die Laminierungsmaschine (01) zumindest eine Vereinzelungseinrichtung (200; 202) zum räumlichen Trennen unlaminierter Bogen (03) voneinander und zumindest eine entlang eines vorgesehenen Transportwegs des Materials (02) nach der zumindest einen Vereinzelungseinrichtung (200; 202) angeordnete Schuppungseinrichtung (200; 206; 207; 208) zum geschuppten Anordnen unlaminierter Bogen (03) zueinander aufweist und dass die Trennvorrichtung (400) zumindest eine vordere Klemmeinrichtung (406) mit zumindest einer vorderen Klemmstelle (401) und zumindest eine hintere Klemmeinrichtung (404) mit zumindest einer hinteren Klemmstelle (402) und zumindest ein erstes Dehnungselement (403) aufweist und dass durch Bewegung zumindest des zumindest einen ersten Dehnungselements (403) zwischen zumindest einer ersten Passierlage und zumindest einer ersten Trennlage die Trennvorrichtung (400) zwischen zumindest einem Passierzustand und zumindest einem Trennzustand umschaltbar ist und dass eine Transportlinie eine vollständig in einer vertikalen Referenzebene liegende kürzeste jegliches Bauteil der Trennvorrichtung (400) auf einer jeweils gleichen Seite wie ein für die Materialbahn (02) und/oder die Abschnitte (04) vorgesehener Transportweg passierende oder tangierende Verbindung zwischen der zumindest einen vorderen Klemmstelle (401) einerseits und der zumindest einen hinteren Klemmstelle (402) andererseits ist und dass die Transportlinie in dem zumindest einen Trennzustand um zumindest 2 mm länger ist als in dem zumindest einen Passierzustand und dass die Transportlinie in dem zumindest einen Trennzustand einen kleinsten Krümmungsradius aufweist, der zumindest 0,05 mm beträgt und dass die zumindest eine erste Laminierungsquelle (320) als erster Rollenwechsler (320) ausgebildet ist und zumindest zwei erste Rollenhalteplätze (322) aufweist und dass die zumindest eine zweite Laminierungsquelle (330) als zweiter Rollenwechsler (330) ausgebildet ist und zumindest zwei zweite Rollenhalteplätze (332) aufweist.

2. Laminierungsmaschine (01), wobei die Laminierungsmaschine (01) zumindest eine Materialquelle (100) für zu laminierendes Material (02) aufweist und wobei die Laminierungsmaschine (01) zumindest ein Laminierungswerk (310) aufweist und wobei die Laminierungsmaschine (01) zumindest eine erste Laminierungsquelle (320) für Laminierungsstoff (321) aufweist und wobei die Laminierungsmaschine (01) zumindest eine Trennvorrichtung (400) zum Abtrennen von Abschnitten (04) von einer laminierten Materialbahn (02) aufweist und wobei die Laminierungsmaschine (01) zumindest einen ersten Bahnkantenausrichter (327) für eine Ausrichtung ausschließlich von Laminierungsstoff (321) aufweist und/oder die Laminierungsmaschine (01) zumindest eine erste Tänzerwalze (326) einer ersten Bahnspannungsregelung (324) aufweist, **dadurch gekennzeichnet, dass** die Laminierungsmaschine (01) zumindest eine Vereinzelungseinrichtung (200; 202) zum räumlichen Trennen unlaminierter Bogen (03) voneinander und zumindest eine entlang eines vorgesehenen Transportwegs des Materials (02) nach der zumindest einen Vereinzelungseinrichtung (200; 202) angeordnete Schuppungseinrichtung (200; 206; 207;208) zum geschuppten Anordnen unlamierter Bogen (03) zueinander aufweist und dass die Trennvorrichtung (400) zumindest eine vordere Klemmeinrichtung (406) mit zumindest einer vorderen Klemmstelle (401) und zumindest eine hintere Klemmeinrichtung (404) mit zumindest einer hinteren Klemmstelle (402) und zumindest ein erstes Dehnungselement (403) aufweist und dass durch Bewegung zumindest des zumindest einen ersten Dehnungselements (403) zwischen zumindest einer ersten Passierlage und zumindest einer ersten Trennlage die Trennvorrichtung (400) zwischen zumindest einem Passierzustand und zumindest einem Trennzustand umschaltbar ist und dass eine Transportlinie eine vollständig in einer vertikalen Referenzebene liegende kürzeste jegliches Bauteil der Trennvorrichtung (400) auf einer jeweils gleichen Seite wie ein für die Materialbahn (02) und/oder die Abschnitte (04) vorgesehener Transportweg passierende oder tangierende Verbindung zwischen der zumindest einen vorderen Klemmstelle (401) einerseits und der zumindest einen hinteren Klemmstelle (402) andererseits ist und dass die Transportlinie in dem zumindest einen Trennzustand um zumindest 2 mm länger ist als in dem zumindest einen Passierzustand und dass die Transportlinie in dem zumindest einen Trennzustand einen kleinsten Krümmungsradius aufweist, der zumindest 0,05 mm beträgt und dass die zumindest eine erste Laminierungsquelle (320) als erster Rollenwechsler (320) ausgebildet ist und zumindest zwei erste Rollenhalteplätze (322) aufweist und dass die zumindest zwei ersten Rollenhalteplätze (322) um eine gemeinsame erste Schwenkachse (323) schwenkbar angeordnet sind und dass die Laminierungsmaschine (01) zumindest einen ersten Bahnkantenausrichter (327) für eine Ausrichtung ausschließlich von Laminierungsstoff (321) aufweist und/oder die Laminierungsmaschine (01) zumindest eine erste Tänzerwalze (326) einer ersten Bahnspannungsregelung (324) aufweist.

3. Laminierungsmaschine nach Anspruch 2, **dadurch gekennzeichnet, dass** die zumindest eine Materialquelle (100) als Bogenanleger (100) ausgebildet ist.

4. Laminierungsmaschine nach Anspruch 1, **dadurch gekennzeichnet, dass** die zumindest zwei ersten Rollenhalteplätze (322) um eine gemeinsame erste Schwenkachse (323) schwenkbar angeordnet sind.

5. Laminierungsmaschine nach Anspruch 2 oder 3 oder 4, **dadurch gekennzeichnet, dass** die Laminierungsmaschine (01) zumindest eine zweite Laminierungsquelle (330) für Laminierungsstoff (331) aufweist und dass die zumindest eine zweite Laminierungsquelle (330) als zweiter Rollenwechsler (330) ausgebildet ist und zumindest zwei zweite Rollenhalteplätze (332) aufweist.

6. Laminierungsmaschine nach Anspruch 1 oder 3 oder 4 oder 5, **dadurch gekennzeichnet, dass** der Bogenanleger (100) mit einer Nonstop-Einrichtung ausgerüstet ist, die über einen in den Bereich des Bogenstapels (102) einfahrbaren Hilfsstapelträger verfügt.

7. Laminierungsmaschine nach Anspruch 1 oder 2 oder 3 oder 4 oder 5 oder 6, **dadurch gekennzeichnet, dass** die Laminierungsmaschine (01) zumindest eine Bogenauslage (500) oder Mehrfachbogenauslage (500) aufweist.

8. Laminierungsmaschine nach Anspruch 1 oder 2 oder 3 oder 4 oder 5 oder 6 oder 7, **dadurch gekennzeichnet, dass** die Laminierungsmaschine (01) zumindest einen ersten Bahnkantenausrichter (327) für eine Ausrichtung ausschließlich von Laminierungsstoff (321) aufweist und/oder dass die Laminierungsmaschine (01) zumindest einen zweiten Bahnkantenausrichter (337) für eine Ausrichtung ausschließlich von Laminierungsstoff (331) aufweist.

9. Laminierungsmaschine nach Anspruch 8, **dadurch gekennzeichnet, dass** der zumindest eine erste Bahnkantenausrichter (327) zumindest zwei in einem bewegbaren Rahmen angeordnete Ausrichtewalzen aufweist, durch deren Lage im Raum die axiale Lage des Laminierungsstoffs (321) eingestellt werden kann und/oder dass der zumindest eine zweite Bahnkantenausrichter (337) zumindest zwei in einem bewegbaren Rahmen angeordnete Ausrichtewalzen aufweist, durch deren Lage im Raum die axiale Lage des Laminierungsstoffs (331) eingestellt werden kann.

10. Laminierungsmaschine nach Anspruch 1 oder 2 oder 3 oder 4 oder 5 oder 6 oder 7 oder 8 oder 9, **dadurch gekennzeichnet, dass** die Laminierungsmaschine (01) zumindest eine erste Tänzerwalze (326) einer ersten Bahnspannungsregelung (324) und/oder zumindest eine zweite Tänzerwalze (336) einer zweiten Bahnspannungsregelung (334) aufweist.

11. Laminierungsmaschine nach Anspruch 1 oder 2 oder 3 oder 4 oder 5 oder 6 oder 7 oder 8 oder 9 oder 10, **dadurch gekennzeichnet, dass** die Laminierungsmaschine (01) zumindest eine Vereinzelungseinrichtung (200; 202) zum räumlichen Trennen unlaminierter Bogen (03) voneinander und/oder zumindest eine Schuppungseinrichtung (200; 206) zum geschuppten Anordnen unlaminierter Bogen (03) zueinander aufweist.

12. Laminierungsmaschine nach Anspruch 1 oder 2 oder 3 oder 4 oder 5 oder 6 oder 7 oder 8 oder 9 oder 10 oder 11, **dadurch gekennzeichnet, dass** der Laminierungsstoff (321; 331) und/oder die den Laminierungsstoff (321; 331) tragenden Rollen in einer axialen Richtung (A) eine Breite aufweisen, die der Breite des Materials (02) und/oder der Bogen (03) und/oder einer laminierten Materialbahn (02) entspricht und/oder die zumindest 500 mm beträgt.

13. Verfahren zum Laminieren von Bogen eines Materials (02), wobei die Bogen (03) bevorzugt zunächst mittels einer Vereinzelungseinrichtung (200;202) räumlich voneinander getrennt werden und wobei die Bogen (03) ausgerichtet werden und wobei die Bogen (03) nach deren räumlicher Trennung mittels einer Schuppungseinrichtung (200; 206; 207; 208) paarweise in eine nur teilweise miteinander überlappende Lage zueinander gebracht werden und wobei die Bogen (03) einem Laminierungswerk (310) einer Laminierungsmaschine (01) zugeführt und dort in der zueinander überlappenden Lage durch Verbindung mit zumindest einem Laminierungsstoff (321; 331) laminiert und zu einer Materialbahn (02) verbunden werden und wobei der zumindest eine Laminierungsstoff (321; 331) dazu in einer als Rollenwechsler (320; 330) ausgebildeten Laminierungsquelle (320; 330) von zumindest einer Rolle abgespult wird und wobei zwei Rollen des zumindest einen Laminierungsstoffs (321; 331) gemeinsam um eine gemeinsame Schwenkachse (323; 333) des zumindest einen Rollenwechslers (320; 330) geschwenkt werden und zumindest eine von einer bis dahin abgespulten der zumindest zwei Rollen stammende Bahn des zumindest einen Laminierungsstoffs (321; 331) mit einer von einer ab dann abzuspulenden anderen der zumindest zwei Rollen stammenden Bahn des zumindest einen Laminierungsstoffs (321; 331) verbunden wird und wobei durch das Laminieren des Materials (02) eine laminierte Materialbahn (02) entsteht und wobei die Materialbahn (02) in zumindest einer vorderen Klemmstelle (401) zumindest einer vorderen Klemmeinrichtung (406) einer Trennvorrichtung (400) der Laminierungsmaschine (01) festgeklemmt wird und wobei die Materialbahn (02) in zumindest einer hinteren Klemmstelle (402) zumindest einer hinteren Klemmvorrichtung (404) der Trennvorrichtung (400) festgeklemmt wird und wobei eine Transportlinie eine vollständig in einer vertikalen Referenzebene liegende kürzeste jegliches Bauteil der Trennvorrichtung (400) auf einer jeweils gleichen Seite wie die Materialbahn (02) passierende oder tangierende Verbindung zwischen der zumindest einen vorderen Klemmstelle (401) einerseits und der zumindest einen hinteren Klemmstelle (402) andererseits ist und wobei zumindest ein erstes Dehnungselement (403) aus einer ersten Passierlage in eine erste Trennlage bewegt wird und dadurch die Transportlinie so weit gedehnt wird, dass der zumindest eine Abschnitt (04) von der Materialbahn (02) abreißt.

14. Verfahren nach Anspruch 13, **dadurch gekennzeichnet, dass** zum Dehnen der Transportlinie zumindest ein zweites Dehnungselement (412) aus einer zweiten Passierlage in eine zweite Trennlage bewegt wird und/oder zumindest ein drittes Dehnungselement (413) aus einer dritten Passierlage in eine dritte Trennlage bewegt wird und die Transportlinie bezüglich ihrer Krümmung zumindest einen zusätzlichen Wendepunkt bekommt.

15. Verfahren nach Anspruch 13 oder 14, **dadurch gekennzeichnet, dass** das zumindest eine erste Dehnungselement (403) und/oder das zumindest eine zweite Dehnungselement (412) und/oder das zumindest eine dritte Dehnungselement (413) unabhängig von der vorderen Klemmeinrichtung (406) und/oder unabhängig von der hinteren Klemmeinrichtung (404) und/oder mit einer periodisch schwankenden Winkelgeschwindigkeit angetrieben wird.

## Claims

1. A lamination machine (01), wherein the lamination machine (01) has at least one material source (100) designed as a sheet feeder (100) for material (02) to be laminated and wherein the lamination machine (01) has at least one lamination unit (310) and wherein the lamination machine (01) has at least one first lamination source (320) for lamination material (321) and wherein the lamination machine (01) has at least one second lamination source (330) for lamination material (331) and wherein the lamination machine (01) has at least one separation device (400) for separating portions (04) of a laminated material web (02), **characterized in that** the lamination machine (01) has at least one separating device (200; 202) for the spatial separation of unlaminated sheets (03) from one another and at least one imbricating device (200; 206; 207; 208) arranged downstream of the separating device (200, 202) for overlapping arrangement of unlaminated sheets (03) to one another and that the separation device (400) has at least one front clamping device (406) with at least one front clamping point (401) and at least one rear clamping device (404) with at least one rear clamping point (402) and at least one first stretching element (403) and that the separation device (400) can be switched between at least one traversing mode and at least one separation mode by movement of the at least one first stretching element (403) between at least one first traversing position and at least one first separation position and that a transport line is the shortest connection between at least one front clamping point (401) on the one hand and the at least one rear clamping point (402) on the other hand, said connection lying completely on a vertical reference plane and traversing or running at a tangent to any component of the separation device (400) on the respective same side as a transport path provided for the material web (02) and/or the portions (04) and that the transport line in the at least one separation mode is 2mm longer than in the at least one traversing mode and that the transport line has the smallest radius of curvature in the at least one separation mode of at least 0.05 mm and that the at least one first lamination source (320) is designed as a first roll changer (320) and has at least two first roll holding locations (322) and that the at least one second lamination source (330) is designed as a second roll changer (330) and has at least two second roll holding locations (332).

2. A lamination machine (01), wherein the lamination machine (01) has at least one material source (100) for material (02) to be laminated and wherein the lamination machine (01) has at least one lamination unit (310) and wherein the lamination machine (01) has at least one lamination source (320) for lamination material (321) and wherein the lamination machine (01) has at least one separation device (400) for separating portions (04) of a laminated material web (02) and wherein the lamination machine (01) has at least a first web edge aligner (327) for an alignment solely of laminating material (321) and/or a lamination machine (01) has at least a first dancing roller (326) of a first web tension regulation (324), **characterized in that** the lamination machine (01) has at least one separating device (200; 202) for the spatial separation of unlaminated sheets (03) from one another and at least one imbricating device (200; 206; 207; 208) arranged downstream of the separating device (200, 202) for overlapping arrangement of unlaminated sheets (03) to one another and that the separation device (400) has at least one front clamping device (406) with at least one front clamping point (401) and at least one rear clamping device (404) with at least one rear clamping point (402) and at least one first stretching element (403) and that the separation device (400) can be switched between at least one traversing mode and at least one separation mode by movement of the at least one first stretching element (403) between at least one first traversing position and at least one first separation position and that a transport line is the shortest connection between at least one front clamping point (401) on the one hand and the at least one rear clamping point (402) on the other hand, said connection lying completely on a vertical reference plane and traversing or running at a tangent to any component of the separation device (400) on the respective same side as a transport path provided for the material web (02) and/or the portions (04) and that the transport line in the at least one separation mode is 2mm longer than in the at least one traversing mode and that the transport line has the smallest radius of curvature in the at least one separation mode of at least 0.05 mm and that the at least one first lamination source (320) is designed as a first roll changer (320) and has at least two first roll holding locations (322) and that the at least two first roll holding locations (322) are pivotably arranged around a common first pivot axis (323) and that the lamination machine (01) has at least a first web edge aligner (327) for an alignment solely of laminating material (321) and/or a lamination machine (01) has at least a first dancing roller (326) of a first web tension regulation (324).

3. The lamination machine according to Claim 2, **characterized in that** the at least one material source (100) is designed as a sheet feeder (100).

4. The lamination machine according to Claim 1, **characterized in that** the at least two roll holding locations (322) are pivotably arranged around a common first pivot axis (323).

5. The lamination machine according to Claim 2 or 3 or 4, **characterized in that** the lamination machine (01) has at least a second lamination source (330) for lamination material (331) and that the at least one second lamination source (330) is configured as a second roll changer (330) and has at least two second roll holder locations (332).

6. The lamination machine according to Claim 1 or 3 or 4 or 5, **characterized in that** the sheet feeder (100) is equipped with a non-stop device which has an auxiliary stack carrier that can be extended in the region of the sheet stack (102).

7. The lamination machine according to Claim 1 or 2 or 3 or 4 or 5 or 6, **characterized in that** the lamination machine (01) has at least one sheet delivery (500) or multiple sheet delivery (500).

8. The lamination machine according to Claim 1 or 2 or 3 or 4 or 5 or 6 or 7, **characterized in that** the lamination machine (01) has at least a first web edge aligner (327) for an alignment solely of laminating material (321) and/or that the lamination machine (01) has at least a second web edge aligner (337) for an alignment solely of laminating material (331).

9. The lamination machine according to Claim 8, **characterized in that** the at least one web edge aligner (327) has at least two alignment rollers arranged in a moveable frame, by means of whose position in space the axial position of the lamination material (321) can be set and/or that at least one second web edge aligner (337) has at least two alignment rollers arranged in a moveable frame, by means whose position in space the axial position of the lamination material (331) can be set.

10. The lamination machine according to Claim 1 or 2 or 3 or 4 or 5 or 6 or 7 or 8 or 9, **characterized in that** the lamination machine (01) has at least a first dancing roller (326) of a first web tension regulation (324) and/or at least a second dancing roller (336) of a second web tension regulation (334).

11. The lamination machine according to Claim 1 or 2 or 3 or 4 or 5 or 6 or 7 or 8 or 9 or 10, **characterized in that** the lamination machine (01) has at least one separating device (200; 202) for the spatial separation of unlaminated sheets (03) from one another and/or at least one imbricating device (200; 206) for overlapping arrangement of unlaminated sheets (03) to one another.

12. The lamination machine according to Claim 1 or 2 or 3 or 4 or 5 or 6 or 7 or 8 or 9 or 10 or 11, **characterized in that** the lamination material (321; 331) and/or the rolls carrying the lamination material (321; 331) have a width in an axial direction (A) which corresponds to the width of the material (02) and/or of the sheets (03) and/or of a laminated material web (02) and/or that is at least 500 mm.

13. A method for laminating sheets of a material (02), wherein the sheets (03) are preferably first spatially separated from one another by means of a separating device (200; 202) and wherein the sheets (03) are aligned and wherein after their spatial separation by means of an imbricating device (200; 206; 207; 208) the sheets (03) are brought in pairs into an only partially overlapping position to one another and wherein the sheets (03) are supplied to a lamination unit (310) and laminated there in the overlapping position to one another by means of connection to at least one lamination material (321; 331) and connected to a material web (02) and wherein the at least one lamination material (321; 331) in addition is unrolled by at least one roll in a lamination source (320; 330) designed as a roll changer (320; 330) and wherein two rolls of the at least one lamination material (321; 331) are jointly pivoted around a common pivot axis (323; 333) of the at least one roll changer (320; 330) and at least one web of the at least one lamination material (321; 331) originating from one of the at least two rolls unwound up to that point is connected to a web of the at least one lamination material (321; 331) originating from the other of the at least two rolls to be unwound and wherein a laminated material web (02) results from the lamination of the material (02) and wherein the material web (02) is clamped in at least one front clamping point (401) of at least one front clamping device (406) of a separation device (400) of the lamination machine (01) and wherein the material web (02) is clamped in at least one rear clamping point (402) of at least one rear clamping device (404) of the separation device (400) and wherein a transport line is the shortest connection between at least one front clamping point (401) on the one hand and the at least one rear clamping point (402) on the other hand, said connection lying completely on a vertical reference plane and traversing or running at a tangent to any component of the separation device (400) on the respective same side as the material web (02) and wherein at least one stretching element (403) is moved from a first traversing position to a first separation position and as a result the transport line is stretched such that the at least one portion (04) is pulled off from the material web (02).

14. The method according to Claim 13, **characterized in that**, to stretch the transport line, at least one second stretching element (412) is moved from a second traversing position to a second separation position and/or at least a third stretching element (413) is moved from a third traversing position to a third separation position and the transport line receives at least one additional pivot point with respect to its curvature.

15. The method according to Claim 13 or 14, **characterized in that** the at least one stretching element (403) and/or the at least one second stretching element (412) and/or the at least one third stretching element (413) are driven independently from the front clamping device (406) and/or independently from the rear clamping device (404) and/or at periodically fluctuating angular velocity.

## Revendications

1. Machine de stratification (01), dans laquelle la machine de stratification (01) présente au moins une source de matériau (100) pour un matériau (02) à stratifier réalisée sous la forme d'un margeur (100) et dans laquelle la machine de stratification (01) présente au moins un dispositif de stratification (310) et dans laquelle la machine de stratification (01) présente au moins une première source de stratification (320) pour une matière de stratification (321) et dans laquelle la machine de stratification (01) présente au moins une deuxième source de stratification (330) pour une matière de stratification (331) et dans laquelle la machine de stratification (01) présente au moins un dispositif de séparation (400) destiné à séparer les unes des autres des parties (04) d'une bande de matériau (02) stratifiée, **caractérisée en ce que** la machine de stratification (01) présente au moins un dispositif d'individualisation (200 ; 202) pour la séparation dans l'espace de feuilles (03) non stratifiées et au moins un dispositif de chevauchement (200 ; 206 ; 207 ; 208), disposé le long d'un trajet de transport prévu du matériau (02) après l'au moins un dispositif d'individualisation (200 ; 202), destiné à disposer des feuilles (03) non stratifiées de manière à ce qu'elles se chevauchent les unes par rapport aux autres et que le dispositif de séparation (400) présente au moins un dispositif de serrage avant (406) avec au moins un point de serrage avant (401) et au moins un dispositif de serrage arrière (404) avec au moins un point de serrage arrière (402) et au moins un premier élément d'extension (403) et que le dispositif de séparation (400) peut être commuté entre au moins un état de passage et au moins un état de séparation par déplacement au moins de l'au moins un premier élément d'extension (403) entre au moins une première position de passage et au moins une première position de séparation, et qu'une ligne de transport est une liaison la plus courte, passante ou tangente à tout élément du dispositif de séparation (400), située entièrement dans un plan de référence vertical, entre l'au moins un point de serrage avant (401) d'une part et l'au moins un point de serrage arrière (402) d'autre part, sur un respectivement même côté qu'un trajet de transport prévu pour la bande de matériau (02) et/ou les parties (04), et que la ligne de transport dans l'au moins un état de séparation est plus longue d'au moins 2 mm que dans l'au moins un état de passage et que la ligne de transport présente dans l'au moins un état de séparation un rayon de courbure le plus petit, qui atteint au moins 0,05 mm et que l'au moins une première source de stratification (320) est réalisée sous la forme d'un premier changeur de rouleau (320) et présente au moins deux premiers emplacements de retenue de rouleau (322) et que l'au moins une deuxième source de stratification (330) est réalisée sous la forme d'un deuxième changeur de rouleau (330) et présente au moins deux deuxièmes emplacements de retenue de rouleau (332).

2. Machine de stratification, dans laquelle la machine de stratification (01) présente au moins une source de matériau (100) pour un matériau (02) à stratifier et dans laquelle la machine de stratification (01) présente au moins un dispositif de stratification (310) et dans laquelle la machine de stratification (01) présente au moins une première source de stratification (320) pour une matière de stratification (321) et dans laquelle la machine de stratification (01) présente au moins un dispositif de séparation (400) destiné à séparer des parties (04) d'une bande de matériau (02) stratifiée et dans laquelle la machine de stratification (01) présente au moins un premier orienteur de bord de bande (327) pour une orientation exclusivement d'une matière de stratification (321) et/ou la machine de stratification (01) présente au moins un premier rouleau tendeur (326) d'une première régulation de tension de bande (324), **caractérisée en ce que** la machine de stratification (01) présente au moins un dispositif d'individualisation (200 ; 202) pour la séparation dans l'espace de feuilles (03) non stratifiées les unes des autres et au moins un dispositif de chevauchement (200 ; 206 ; 207 ; 208), disposé le long d'un trajet de transport prévu du matériau (02) après l'au moins un dispositif d'individualisation (200 ; 202), destiné à disposer des feuilles (03) non stratifiées de manière à ce qu'elles se chevauchent les unes par rapport aux autres et que le dispositif de séparation (400) présente au moins un dispositif de serrage avant (406) avec au moins un point de serrage avant (401) et au moins un dispositif de serrage arrière (404) avec au moins un point de serrage arrière (402) et au moins un premier élément d'extension (403) et que le dispositif de séparation (400) peut être commuté entre au moins un état de passage et au moins un état de séparation par déplacement au moins de l'au moins un premier élément d'extension (403) entre au moins une première position de passage et au moins une première position de séparation, et qu'une ligne de transport est une liaison la plus courte, passante ou tangente à tout élément du dispositif de séparation (400), entièrement située dans un plan de référence vertical, entre l'au moins un point de serrage avant (401) d'une part et l'au moins un point de serrage arrière (402) d'autre part, sur un respectivement même côté qu'un trajet de transport prévu pour la bande de matériau (02) et/ou les parties (04), et que la ligne de transport dans l'au moins un état de séparation est plus longue d'au moins 2 mm que dans l'au moins un état de passage et que la ligne de transport présente dans l'au moins un état de séparation un rayon de courbure le plus petit, qui atteint au moins 0,05 mm et que l'au moins une première source de stratification (320) est réalisée sous la forme d'un premier changeur de rouleau (320) et présente au moins deux premiers emplacements de retenue de rouleau (322) et que les au moins deux premiers emplacements de retenue de rouleau (322) sont disposés de manière à pouvoir pivoter autour d'un premier axe de pivotement (323) commun et que la machine de stratification (01) présente au moins un premier orienteur de bord de bande (327) pour une orientation exclusivement d'une matière de stratification (321) et/ou la machine de stratification (01) présente au moins un premier rouleau tendeur (326) d'une première régulation de tension de bande (324).

3. Machine de stratification selon la revendication 2, **caractérisée en ce que** l'au moins une source de matériau (100) est réalisée sous la forme d'un margeur (100).

4. Machine de stratification selon la revendication 1, **caractérisée en ce que** les au moins deux premiers emplacements de retenue de rouleau (322) sont disposés de manière à pouvoir pivoter autour d'un premier axe de pivotement (323) commun.

5. Machine de stratification selon la revendication 2 ou 3 ou 4, **caractérisée en ce que** la machine de stratification (01) présente au moins une deuxième source de stratification (330) pour une matière de stratification (331) et que l'au moins une deuxième source de stratification (330) est réalisée sous la forme d'un deuxième changeur de rouleau (330) et présente au moins deux deuxièmes emplacements de retenue de rouleau (332).

6. Machine de stratification selon la revendication 1 ou 3 ou 4 ou 5, **caractérisée en ce que** le margeur (100) est équipé d'un dispositif continu qui dispose d'un support de piles auxiliaires pouvant rentrer dans la zone de la pile de feuilles (102).

7. Machine de stratification selon la revendication 1 ou 2 ou 3 ou 4 ou 5 ou 6, **caractérisée en ce que** la machine de stratification (01) présente au moins un dispositif de sortie de feuilles (500) ou dispositif de sortie de feuilles multiples (500).

8. Machine de stratification selon la revendication 1 ou 2 ou 3 ou 4 ou 5 ou 6 ou 7, **caractérisée en ce que** la machine de stratification (01) présente au moins un premier orienteur de bord de bande (327) pour une orientation exclusivement d'une matière de stratification (321) et/ou que la machine de stratification (01) présente au moins un deuxième orienteur de bord de bande (337) pour une orientation exclusivement d'une matière de stratification (331).

9. Machine de stratification selon la revendication 8, **caractérisée en ce que** l'au moins un premier orienteur de bord de bande (327) présente au moins deux cylindres d'orientation disposés dans un cadre mobile, par la position dans l'espace desquels la position axiale de la matière de stratification (321) peut être réglée et/ou que l'au moins un deuxième orienteur de bord de bande (337) présente au moins deux cylindres d'orientation disposés dans un cadre mobile, par la position dans l'espace desquels la position axiale de la matière de stratification (331) peut être réglée.

10. Machine de stratification selon la revendication 1 ou 2 ou 3 ou 4 ou 5 ou 6 ou 7 ou 8 ou 9, **caractérisée en ce que** la machine de stratification (01) présente au moins un premier cylindre tendeur (326) d'une première régulation de tension de bande (324) et/ou au moins un deuxième cylindre tendeur (336) d'une deuxième régulation de tension de bande (334).

11. Machine de stratification selon la revendication 1 ou 2 ou 3 ou 4 ou 5 ou 6 ou 7 ou 8 ou 9 ou 10, **caractérisée en ce que** la machine de stratification (01) présente au moins un dispositif d'individualisation (200 ; 202) pour la séparation dans l'espace de feuilles (03) non stratifiées les unes des autres et/ou au moins un dispositif de chevauchement (200 ; 206) destiné à disposer des feuilles (03) non stratifiées de manière à ce qu'elles se chevauchent les unes par rapport aux autres.

12. Machine de stratification selon la revendication 1 ou 2 ou 3 ou 4 ou 5 ou 6 ou 7 ou 8 ou 9 ou 10 ou 11, **caractérisée en ce que** la matière de stratification (321 ; 331) et/ou les rouleaux portant la matière de stratification (321 ; 331) présentent dans une direction axiale (A) une largeur qui correspond à la largeur du matériau (02) et/ou des feuilles (03) et/ou d'une bande de matériau (02) stratifiée et/ou qui atteint au moins 500 mm.

13. Procédé de stratification de feuilles d'un matériau (02), dans lequel les feuilles (03) sont séparées les unes des autres dans l'espace de préférence tout d'abord au moyen d'un dispositif d'individualisation (200 ; 202) et dans lequel les feuilles (03) sont orientées et dans lequel les feuilles (03), après leur séparation dans l'espace, sont amenées les unes par rapport aux autres par paires dans une position dans laquelle elles ne se chevauchent les unes avec les autres que partiellement au moyen d'un dispositif de chevauchement (200 ; 206 ; 207 ; 208) et dans lequel les feuilles (03) sont amenées à un dispositif de stratification (310) d'une machine de stratification (01) et y sont stratifiées dans la position dans laquelle elles se chevauchent les unes par rapport aux autres par liaison à au moins une matière de stratification (321 ; 331) et reliées en une bande de matériau (02) et dans lequel l'au moins une matière de stratification (321 ; 331) est dévidée à cet effet d'au moins un rouleau dans une source de stratification (320 ; 330) réalisée sous la forme d'un changeur de rouleau (320 ; 330) et dans lequel deux rouleaux de l'au moins une matière de stratification (321 ; 331) sont amenés à pivoter conjointement autour d'un axe de pivotement (323 ; 333) commun de l'au moins un changeur de rouleau (320 ; 330) et au moins une bande de l'au moins une matière de stratification (321 ; 331) provenant d'un des au moins deux rouleaux dévidés jusque-là est reliée à une bande de l'au moins une matière de stratification (321 ; 331) provenant d'un autre des au moins deux rouleaux à dévider à partir de là et dans lequel une bande de matériau (02) stratifiée est produite par la stratification du matériau (02) et dans lequel la bande de matériau (02) est serrée à bloc dans au moins un point de serrage avant (401) d'au moins un dispositif de serrage avant (406) d'un dispositif de séparation (400) de la machine de stratification (01) et dans lequel la bande de matériau (02) est serrée à bloc dans au moins un point de serrage arrière (402) d'au moins un dispositif de serrage arrière (404) du dispositif de séparation (400) et dans lequel une ligne de transport est une liaison la plus courte, passante ou tangente à tout élément du dispositif de séparation (400), entièrement située dans un plan de référence vertical, entre l'au moins un point de serrage avant (401) d'une part et l'au moins un point de serrage arrière (402) d'autre part, sur un respectivement même côté que la bande de matériau (02) et dans lequel au moins un premier élément d'extension (403) est déplacé d'une première position de passage dans une première position de séparation et ainsi la ligne de transport est étendue à un point tel que l'au moins une partie (04) se détache de la bande de matériau (02).

14. Procédé selon la revendication 13, **caractérisé en ce que**, pour étendre la ligne de transport, au moins un deuxième élément d'extension (412) est déplacé d'une deuxième position de passage dans une deuxième position de séparation et/ou au moins un troisième élément d'extension (413) est déplacé d'une troisième position de passage dans une troisième position de séparation et la ligne de transport reçoit en ce qui concerne sa courbure au moins un point d'inflexion supplémentaire.

15. Procédé selon la revendication 13 ou 14, **caractérisé en ce que** l'au moins un premier élément d'extension (403) et/ou l'au moins un deuxième élément d'extension (412) et/ou l'au moins un troisième élément d'extension (413) sont entraînés indépendamment du dispositif de serrage avant (406) et/ou indépendamment du dispositif de serrage arrière (404) et/ou avec une vitesse angulaire fluctuant périodiquement.
